# EUROPEAN PATENT APPLICATION

(11) **EP 4 427 992 A1**
(43) Date of publication of application: **11.09.2024**
(21) Application number: 21965085.0
(22) Date of filing: 24.11.2021
(51) Int. Cl.: B60T 1/00

(54) **BRAKE SYSTEM AND APPARATUS**

(71) Applicant: Huawei Technologies Co., Ltd., Shenzhen, Guangdong 518129 (CN)
(72) Inventor: ZHANG, Yongsheng, Shenzhen, Guangdong 518129 (CN); YANG, Weimiao, Shenzhen, Guangdong 518129 (CN); WU, Suoping, Shenzhen, Guangdong 518129 (CN); JIN, Biao, Shenzhen, Guangdong 518129 (CN); QUE, Fasong, Shenzhen, Guangdong 518129 (CN)
(74) Representative: Körber, Martin Hans
(86) International application number: PCT/CN2021/132875
(87) International publication number: WO 2023/092347

(57) **Abstract**

A brake system and an apparatus are applicable to the field of braking technologies, and are used to reduce complexity of adding redundancy backup to the brake system. The brake system includes a reservoir, a master cylinder module, a brake pedal, a push rod, a first pressure control unit, a second pressure control unit, a first ECU, a second ECU, and a redundant ECU. The first ECU is configured to control a brake actuator in the first pressure control unit, the second ECU is configured to control a brake actuator in the second pressure control unit, and the redundant ECU is configured to control at least one brake actuator in the first pressure control unit and/or at least one brake actuator in the second pressure control unit. In this manner, redundant braking can be implemented by disposing an additional ECU, without additionally disposing a new pressure control unit and a corresponding ECU. This helps reduce the complexity of adding redundancy backup to the brake system and further reduce difficulty of installation and arrangement of a vehicle.

## Description

### TECHNICAL FIELD

This application relates to the field of braking technologies, and provides a brake system and an apparatus.

### BACKGROUND

A brake system is one of the most important systems in an intelligent transportation device, and is related to the safety of lives and properties of a driver and passengers. For example, when there is an obstacle in front of the intelligent transportation device and braking is required, if the brake system fails, the intelligent transportation device may hit the obstacle due to inability to brake in time, and this seriously affects the safety of the driver and the passengers. It can be learned that a safe and reliable brake system is important for an intelligent transportation device.

To improve the safety and reliability of the brake system, redundancy backup is usually required in the brake system. Redundancy backup means that braking can still be implemented in another manner when an original braking function is faulty. However, in the conventional technology, a redundant pressure control unit and a corresponding electronic control unit are usually directly added to the brake system. When an original pressure control unit and electronic control unit are faulty, the brake system completes redundancy backup by switching to the redundant pressure control unit and the electronic control unit. However, this redundancy backup manner greatly increases a quantity of components included in the brake system. This increases difficulty of installation and arrangement of a vehicle, and is not conducive to reducing integration complexity of the brake system.

In view of this, this application provides a brake system, to reduce complexity of adding redundant braking to the brake system.

### SUMMARY

This application provides a brake system and an apparatus, to reduce complexity of adding redundancy backup to the brake system.

According to a first aspect, this application provides a brake system, including a reservoir, a master cylinder module, a brake pedal, a push rod, a first pressure control unit, a second pressure control unit, a first electronic control unit (electronic control unit, ECU), a second ECU, and a redundant ECU. The brake pedal is connected to the master cylinder module through the push rod; the reservoir, the master cylinder module, the first pressure control unit, and the second pressure control unit are sequentially connected through a brake pipe; and the second pressure control unit is further connected to a controlled wheel through a brake pipe. The first ECU is configured to control a brake actuator in the first pressure control unit; the second ECU is configured to control a brake actuator in the second pressure control unit; the redundant ECU is configured to control at least one brake actuator in the first pressure control unit and/or control at least one brake actuator in the second pressure control unit; and the first pressure control unit and the second pressure control unit are configured to independently or jointly complete a braking operation on the controlled wheel under control of at least one of the first ECU, the second ECU, and the redundant ECU.

In the foregoing design, at least two ECUs for control are disposed for a same brake actuator, so that when one part of ECUs fail, the other part of ECUs can be used to complete redundant control of the brake actuator. In this manner, redundant braking can be implemented by disposing an additional ECU, without additionally disposing a new pressure control unit and a corresponding ECU. This helps reduce complexity of adding redundancy backup to the brake system and further reduce difficulty of installation and arrangement of a vehicle. In addition, at least two pressure control units in the foregoing design can implement at least dual redundant braking, and a same brake actuator in a same pressure control unit is controlled by using at least two ECUs, which is equivalent to further implementing at least triple redundant braking on the basis of the at least dual redundant braking. The at least triple redundant braking can be adapted to autonomous driving systems of L2 to L4 and even a higher level. It can be learned that, in the foregoing design, redundant multiplicities of a vehicle with at least dual redundant braking can be increased by disposing as few components as possible. This helps further improve a redundant braking capability of the brake system on the basis of saving costs and reducing complexity of a vehicle layout.

In a possible design, if the redundant ECU controls the at least one brake actuator in the first pressure control unit, when the first ECU does not fail, the first ECU is used to control the brake actuator in the first pressure control unit, or when the first ECU fails, the redundant ECU is used to control the brake actuator in the first pressure control unit. In this design, brake actuators that can be controlled by the first ECU are more than or equal to brake actuators that can be controlled by the redundant ECU. Therefore, the first ECU is set as an ECU that takes effect by default, so that the brake system can have more comprehensive braking functions in a default state, and the brake system can be flexibly switched to the redundant ECU to continue braking when the ECU that takes effect by default fails. This helps improve flexibility and reliability of redundant control.

In a possible design, if the redundant ECU controls the at least one brake actuator in the first pressure control unit, the first pressure control unit can complete a basic braking operation or an autonomous emergency braking operation on the controlled wheel under control of the first ECU or the redundant ECU, the second pressure control unit can complete an anti-lock braking operation, a traction control operation, or an electronic stability control operation on the controlled wheel under control of the second ECU, and the first pressure control unit and the second pressure control unit can complete the basic braking operation, the autonomous emergency braking operation, the anti-lock braking operation, the traction control operation, the electronic stability control operation, an adaptive cruise control operation, or an additional braking operation on the controlled wheel under control of the first ECU and the second ECU or the redundant ECU and the second ECU. In this design, the redundant ECU is added to the first pressure control unit, so that even if the first ECU fails, the redundant ECU can independently complete an original braking function of the first pressure control unit, and the redundant ECU cooperates with the second ECU to complete a full braking function of the brake system, to effectively maintain availability of the brake system.

In a possible design, if the redundant ECU controls the at least one brake actuator in the second pressure control unit, when the second ECU does not fail, the second ECU is used to control the brake actuator in the second pressure control unit, or when the second ECU fails, the redundant ECU is used to control the brake actuator in the second pressure control unit. In this design, brake actuators that can be controlled by the second ECU are more than or equal to brake actuators that can be controlled by the redundant ECU. Therefore, the second ECU is set as an ECU that takes effect by default, so that the brake system can have more comprehensive braking functions in a default state, and the brake system can be flexibly switched to the redundant ECU to continue braking when the ECU that takes effect by default fails. This helps improve flexibility and reliability of redundant control.

In a possible design, if the redundant ECU controls the at least one brake actuator in the second pressure control unit, the first pressure control unit can complete a basic braking operation or an autonomous emergency braking operation on the controlled wheel under control of the first ECU, the second pressure control unit can complete an anti-lock braking operation, a traction control operation, or an electronic stability control operation on the controlled wheel under control of the second ECU or the redundant ECU, and the first pressure control unit and the second pressure control unit can complete the basic braking operation, the autonomous emergency braking operation, the anti-lock braking operation, the traction control operation, the electronic stability control operation, an adaptive cruise control operation, or an additional braking operation on the wheel under control of the first ECU and the second ECU or the first ECU and the redundant ECU. In this design, the redundant ECU is added to the second pressure control unit, so that even if the second ECU fails, the redundant ECU can independently complete an original braking function of the second pressure control unit, and the redundant ECU cooperates with the first ECU to complete a full braking function of the brake system, to effectively maintain availability of the brake system.

In a possible design, the master cylinder module may be integrated into the first pressure control unit, to further improve integration of the brake system, or may be independent of the first pressure control unit, to flexibly control fluid inflow and outflow operations in the master cylinder module.

In a possible design, the brake actuator may include a motor and/or a solenoid valve. In this way, the redundant ECU is disposed for common components in the brake system, so that it can be ensured that when other ECUs cannot control these common components, the redundant ECU is switched to in time to continue controlling. This effectively ensures reliability of the brake system.

The following uses an example in which the redundant ECU controls the at least one brake actuator in the first pressure control unit for description. For a solution in which the redundant ECU controls the at least one brake actuator in the second pressure control unit, refer to this example. Details are not described herein again.

In an embodiment of this application, the first ECU and the redundant ECU may be integrated in any one of the following manners:

### Integration manner 1:

In a possible design, the brake system may further include a first printed circuit board (printed circuit board, PCB), a second PCB, and an inter-board connector. A first-type component whose power is greater than a power threshold in the first ECU and the redundant ECU is disposed on the first PCB, and a second-type component whose power is not greater than the power threshold in the first ECU and the redundant ECU is disposed on the second PCB, and a first-type component in either ECU on the first PCB is connected to a second-type component in the ECU on the second PCB through the inter-board connector. In this way, a high-power component is integrated on one PCB and a low-power component is integrated on another PCB, so that classified management of the high-power component and the low-power component can be implemented, and a quantity of components carried on each PCB can be reduced through distributed deployment of all components in the two ECUs. In this way, a width area of each PCB is reduced, and a load bearing capacity of each PCB is reduced.

In a possible design, the brake system may further include a support frame, and the first PCB and the second PCB are fixedly connected through the support frame. In this way, it is ensured that relative positions of the first PCB and the second PCB remain unchanged, and stability during braking is maintained.

In a possible design, the support frame may be located at a top layer, the second PCB may be located at a bottom layer, the first PCB is located between the support frame and the second PCB, an opening is disposed on the first PCB, and the support frame passes through the opening and is fixedly connected to the first PCB and the second PCB. In this way, a side that is of the second PCB carrying the low-power component and that faces away from the first PCB is not shielded, and this facilitates heat dissipation of the second PCB.

In a possible design, the brake system may further include a housing. The support frame, the first PCB, and the second PCB are placed in the housing, and at least one end of the support frame is fastened to the housing. In this way, because the low-power component generates little heat, the second PCB integrated with the low-power component is close to the housing. This further helps increase a heat dissipation area of the second PCB by using the housing, and further improves a heat dissipation effect of the second PCB.

In a possible design, the first-type component may be disposed on a surface that is of the first PCB and that faces the support frame, and the second-type component may be disposed on a surface that is of the second PCB and that faces the first PCB. In this way, the high-power component and the low-power component are deployed on surfaces of the first PCB and the second PCB in the same direction. This can further help dispose a cable between the high-power component and the low-power component, and reduce complexity of implementing integration.

In a possible design, the brake system may further include a valve body, and the valve body is configured to accommodate a controlled component. In this case, the first-type component in either ECU may include a driver of the controlled component, and the second-type component in either ECU may include a microcontroller. In addition, a microcontroller in the first ECU and a microcontroller in the redundant ECU are further connected through a cable on the second PCB. In this way, not only communication between the two ECUs can be implemented, but also a same controlled component can be driven by the two ECUs, to implement joint redundant control of the same controlled component by the two ECUs.

In a possible design, when the controlled component includes a motor, a solenoid valve, and a sensor, the first-type component in either ECU may include a driver of the motor and a driver of the solenoid valve, and the second-type component in either ECU may include the microcontroller and an interface of the sensor. In this way, a low-power microcontroller and the interface of the sensor are disposed on one PCB, and a high-power driver is disposed on another PCB. This not only helps the microcontroller obtain sensor information in a more timely manner, but also reduces, through distributed deployment, heat generated by the PCB on which the microcontroller is located.

In a possible design, a width area of the second PCB is less than a width area of the first PCB. In this way, surface utilization of the second PCB can be improved on the basis that the second PCB is sufficient to carry the low-power component, and integration of an integrated apparatus can be further improved.

### Integration manner 2:

In a possible design, the brake system may further include a first PCB, a second PCB, and a support frame. The first PCB and the second PCB are fixedly connected through the support frame. A component in the first ECU is disposed on the first PCB, and a component in the redundant ECU is disposed on the second PCB. In this way, components in the two ECUs are separately integrated on different PCBs. This not only reduces a quantity of components carried on each PCB, further helping reduce a width area of each PCB, and reducing a load bearing capacity of each PCB, but also implements physical structure decoupling of the two ECUs, facilitating development and design of an integrated apparatus.

In a possible design, the brake system may further include an inter-board connector, a component in either ECU includes a microcontroller, and a microcontroller in the first ECU is connected to a microcontroller in the redundant ECU through the inter-board connector, to implement communication between the two ECUs on the two PCBs through the inter-board connector.

In a possible design, the brake system may further include a valve body, and the valve body is configured to accommodate a controlled component. In this case, the component in either ECU may further include a driver of the controlled component, the microcontroller in the first ECU is connected to a driver of a controlled component in the first ECU through a cable on the first PCB; and the microcontroller in the redundant ECU is connected to a driver of a controlled component in the redundant ECU through a cable on the second PCB. In this way, joint redundant control of a same controlled component by the two ECUs can be implemented.

In a possible design, when the controlled component includes a motor, a solenoid valve, and a sensor, the component in either ECU may further include a driver of the motor, a driver of the solenoid valve, and an interface of the sensor, so that the either ECU can successfully receive sensor information, and then accurately drive the motor or the solenoid valve based on the sensor information.

In a possible design, the brake system may further include a housing. The support frame, the first PCB, and the second PCB are placed in the housing, and at least one end of the support frame is fastened to the housing. In this way, the housing can hold the support frame, to improve stability of a fixed connection between the two PCBs based on a stable characteristic of the housing.

In a possible design, the support frame may be located at a top layer, the second PCB may be located at a bottom layer, the first PCB is located between the support frame and the second PCB, an opening is disposed on the first PCB, and the support frame passes through the opening and is fixedly connected to the first PCB and the second PCB. In this way, a side that is of the second PCB and that faces away from the first PCB is close to the housing. This further increases a heat dissipation area of the second PCB by using the housing, and helps improve a heat dissipation effect of the second PCB.

In a possible design, the component in the first ECU is disposed on a surface that is of the first PCB and that faces the support frame, and the component in the redundant ECU is disposed on a surface that is of the second PCB and that faces the first PCB. In this way, the component in the first ECU and the component in the redundant ECU are deployed on surfaces of the first PCB and the second PCB in the same direction. This can further help dispose a cable between the component in the first ECU and the component in the redundant ECU in the inter-board connector, and reduce integration complexity.

### Integration manner 3:

In a possible design, the brake system may further include a PCB. A component in the first ECU and a component in the redundant ECU are integrated on the PCB. In this way, components in the two ECUs are integrated on the same PCB, so that a height of an integrated apparatus can be effectively reduced compared with that in a solution in which components are integrated on two PCBs. In addition, in this design, interfaces of all related components can be disposed on one PCB board. Therefore, the components and the interfaces of components on the PCB can be all connected in a one-time crimping manner, to further help simplify an integration process.

In a possible design, a component in either ECU may include a microcontroller, and a microcontroller in the first ECU is connected to a microcontroller in the redundant ECU through a cable on the PCB, to implement communication between the two ECUs.

In a possible design, the brake system may further include a valve body, and the valve body is configured to accommodate a controlled component. In this case, the component in either ECU may further include a driver of the controlled component, the microcontroller in the ECU is connected to the driver of the controlled component in the ECU through a cable on the PCB. In this way, joint redundant control of a same controlled component by the two ECUs can be implemented.

In a possible design, when the controlled component includes a motor, a solenoid valve, and a sensor, the component in either ECU may further include a driver of the motor, a driver of the solenoid valve, and an interface of the sensor, so that the either ECU can successfully receive sensor information, and then accurately drive the motor or the solenoid valve based on the sensor information.

In a possible design, the brake system may further include a housing. A support frame and the PCB are placed in the housing, and at least one end of the support frame is fastened to the housing. In this way, the housing can hold the support frame, to improve stability of the fixed PCB based on a stable characteristic of the housing.

In a possible design, the support frame may be located at a top layer, and the PCB may be located at a bottom layer and close to the bottom of the housing, to increase a heat dissipation area of the PCB by using the housing, and further improve a heat dissipation effect of the PCB.

In a possible design, the component in the first ECU and the component in the redundant ECU are disposed on a surface that is of the PCB and that faces the support frame. In this way, components in the two ECUs can be further connected through cables disposed on a same surface of the PCB, to simplify a cable deployment manner on the PCB, and reduce integration complexity.

In an embodiment of this application, the first ECU and the redundant ECU may be connected to the motor or the solenoid valve in any one of the following manners:

### Motor connection manner 1:

In a possible design, a brake actuator includes a motor, and the motor includes a three-phase winding. The first ECU and the redundant ECU are separately connected to the three-phase winding through lines. When the first ECU is an ECU that takes effect by default, when the first ECU is not faulty, the first ECU is used to provide a three-phase alternating current to the three-phase winding, or when the first ECU is faulty, the redundant ECU is used to provide a three-phase alternating current to the three-phase winding. In this design, the brake system can directly reuse the three-phase winding in the motor to implement redundant control of the same motor by the two ECUs, without adding an additional winding. This can not only be directly compatible with the existing motor, but also help save costs.

In a possible design, in a process of providing the three-phase alternating current to the three-phase winding, the first ECU may further detect a current on a connection line between the first ECU and each phase winding in the three-phase winding, and when a current on a connection line between the first ECU and any phase winding in the three-phase winding is less than a threshold, send a supplementation indication to the redundant ECU. The redundant ECU provides a supplementary electrical signal to the phase winding based on the supplementation indication through a connection line between the redundant ECU and the phase winding. In this way, when a fault occurs when one ECU provides an electrical signal to a winding, the brake system can provide a supplementary electrical signal to the winding through another ECU, and electrical signals on the other two windings can still be provided by the original ECU. That is, it is not necessary to switch an electrical signal providing process of all windings to another ECU, so that by using a small quantity of switching operations, accurate supply of a three-phase current can be ensured on the basis of improving switching stability.

In a possible design, the brake system may further include a switching circuit. The switching circuit is disposed on connection lines between the first ECU and the three-phase winding and connection lines between the redundant ECU and the three-phase winding. The switching circuit is configured to: when the first ECU does not fail, connect the connection lines between the first ECU and the three-phase winding, and disconnect the connection lines between the redundant ECU and the three-phase winding; or when the first ECU fails, connect the connection lines between the redundant ECU and the three-phase winding, and disconnect the connection lines between the first ECU and the three-phase winding. In this way, even if an ECU that does not need to provide a three-phase alternating current outputs the three-phase alternating current to the motor, a driving link of the ECU to the motor can be cut off by using the switching circuit, to ensure that the motor works only under the drive of another ECU. This effectively improves accuracy of redundant control.

In a possible design, when a current on a connection line between the first ECU and a first phase winding is less than the threshold, the first ECU may send a supplementation indication to the redundant ECU, and further send a first switching indication to the switching circuit. After receiving the first switching indication, the switching circuit connects a connection line between the redundant ECU and the first phase winding, so that the supplementary electrical signal provided by the redundant ECU can be successfully transmitted to the phase winding of the motor.

In a possible design, in a process of providing the three-phase alternating current to the three-phase winding, the first ECU may further detect a current on a connection line between the first ECU and each phase winding in the three-phase winding, and when a current on a connection line between the first ECU and any phase winding in the three-phase winding is less than a threshold, send an effective indication to the redundant ECU and stop providing the three-phase alternating current to the three-phase winding. After receiving the effective indication, the redundant ECU provides the three-phase alternating current to the three-phase winding through connection lines between the redundant ECU and the three-phase winding. In this way, when a fault occurs in a driving process of one ECU, another ECU is switched to in time for driving. This can avoid continuous driving with a faulty ECU, and maintain accuracy of motor driving.

In a possible design, the brake system may further include a switching circuit. The switching circuit is disposed on connection lines between the first ECU and the three-phase winding and connection lines between the redundant ECU and the three-phase winding. When a current on a connection line between the first ECU and any phase winding is less than a threshold, the first ECU may send an effective indication to the redundant ECU, and may further send a second switching indication to the switching circuit. After receiving the second switching indication, the switching circuit disconnects the connection lines between the first ECU and the three-phase winding, and connects the connection lines between the redundant ECU and the three-phase winding. In this way, the three-phase alternating current provided by the redundant ECU can be successfully transmitted to a three-phase stator winding of the motor, and the three-phase alternating current provided to the three-phase stator winding due to the fault of the first ECU can be cut off, to effectively ensure accuracy of motor driving.

### Motor connection manner 2:

In a possible design, a brake actuator includes a motor, and the motor includes a first three-phase winding and a second three-phase winding. The first ECU is connected to the first three-phase winding through lines, and the redundant ECU is connected to the second three-phase winding through lines. When the first ECU is an ECU that takes effect by default, when the first ECU is not faulty, the first ECU is used to provide a three-phase alternating current to the first three-phase winding, or when the first ECU is faulty, the redundant ECU is used to provide a three-phase alternating current to the second three-phase winding. In this design, an additional three-phase winding is added to the motor, so that the motor can be accurately driven by using an electrical signal of each ECU for a corresponding three-phase winding, to avoid interference caused by an electrical signal of one ECU to an electrical signal of another ECU.

In a possible design, both the first three-phase winding and the second three-phase winding may be wound around an entire region of an iron core of the motor, but are wound around the iron core in different directions. Alternatively, the first three-phase winding and the second three-phase winding may be wound around different regions of the iron core of the motor. Alternatively, some of the windings of the first three-phase winding and the second three-phase winding are wound around the same region of the iron core of the motor, and the other part of the windings are wound around different regions of the iron core of the motor.

In a possible design, in a process of providing the three-phase alternating current to the first three-phase winding, the first ECU may further detect a current on a connection line between the first ECU and each phase winding in the first three-phase winding, and when a current on a connection line between the first ECU and any phase winding is less than a threshold, send an effective indication to the redundant ECU and stop providing the three-phase alternating current to the first three-phase winding. After receiving the effective indication, the redundant ECU provides the three-phase alternating current to the second three-phase winding through connection lines between the redundant ECU and the second three-phase winding. In this way, even if the motor cannot be driven due to a fault that occurs in a process in which one ECU provides an electrical signal to a three-phase winding, the motor can still be driven by using a three-phase alternating current provided by another ECU to another three-phase winding, to improve timeliness of switching while implementing redundant control of the motor.

In a possible design, the brake system may further include a switching circuit. The switching circuit is disposed on connection lines between the first ECU and the first three-phase winding and the connection lines between the redundant ECU and the second three-phase winding. When the current on the connection line between the first ECU and the any phase winding is less than the threshold, the first ECU may send an effective indication to the redundant ECU, and may further send a switching indication to the switching circuit. After receiving the switching indication, the switching circuit may disconnect the connection lines between the first ECU and the first three-phase winding, and connect the connection lines between the redundant ECU and the second three-phase winding. In this way, the three-phase alternating current provided by the redundant ECU can be successfully transmitted to the second three-phase winding of the motor, and the three-phase alternating current provided to the first three-phase winding due to the fault of the first ECU can be cut off, to effectively ensure accuracy of motor driving.

### Solenoid valve connection manner 1:

In a possible design, a brake actuator includes a solenoid valve, and the solenoid valve includes a dual coil. The first ECU and the redundant ECU are separately connected to the dual coil through lines. When the first ECU is an ECU that takes effect by default, when the first ECU is not faulty, the first ECU is used to provide a direct current to the dual coil, or when the first ECU is faulty, the redundant ECU is used to provide a direct current to the dual coil. In this way, in this design, the dual coil in the solenoid valve can be reused to implement redundant driving of the same solenoid valve by the two ECUs, without adding an additional coil. This can not only be directly compatible with the existing solenoid valve, but also help save costs.

In a possible design, in a process of providing the direct current to the dual coil, the first ECU may further detect a current on a connection line between the first ECU and each coil in the dual coil, and when a current on a connection line between the first ECU and either coil in the dual coil is less than a threshold, send a supplementation indication to the redundant ECU. After receiving the supplementation indication, the redundant ECU provides a supplementary electrical signal to the coil through a connection line between the redundant ECU and the coil. In this design, when a fault occurs when one ECU provides an electrical signal to a coil, another ECU can provide a supplementary electrical signal to the coil, and an electrical signal on the other coil can still be provided by the original ECU. That is, it is not necessary to switch an electrical signal providing process of all coils to another ECU, so that by using a small quantity of switching operations, an accurate direct current can be jointly supplied to the solenoid valve by the two ECUs on the basis of improving switching stability.

In a possible design, the brake system may further include a switching circuit. The switching circuit is disposed on connection lines between the first ECU and the dual coil and connection lines between the redundant ECU and the dual coil. The switching circuit is configured to: when the first ECU does not fail, connect the connection lines between the first ECU and the dual coil, and disconnect the connection lines between the redundant ECU and the dual coil; or when the first ECU fails, connect the connection lines between the redundant ECU and the dual coil, and disconnect the connection lines between the first ECU and the dual coil. In this way, even if an ECU that does not need to provide a direct current outputs the direct current to the solenoid valve, a driving link of the ECU to the solenoid valve can be cut off by using the switching circuit, to ensure that the solenoid valve works only under the drive of another ECU. This effectively improves accuracy of redundant control.

In a possible design, when a current on a connection line between the first ECU and a first coil is less than the threshold, the first ECU may send a switching indication to the redundant ECU, and may further send a first switching indication to the switching circuit. After receiving the first switching indication, the switching circuit connects a connection line between the redundant ECU and the coil, so that the supplementary electrical signal provided by the redundant ECU can be successfully transmitted to the coil of the solenoid valve.

In a possible design, in a process of providing the direct current to the dual coil, the first ECU may further detect a current on a connection line between the first ECU and each coil in the dual coil, and when a current on a connection line between the first ECU and either coil is less than a threshold, send an effective indication to the redundant ECU and stop providing the direct current to the dual coil. After receiving the effective indication, the redundant ECU provides the direct current to the dual coil through connection lines between the redundant ECU and the dual coil. In this way, when a fault occurs in a driving process of one ECU, another ECU is switched to in time for driving. This can avoid continuous driving with a faulty ECU, and maintain accuracy of solenoid valve driving.

In a possible design, the brake system may further include a switching circuit. The switching circuit is disposed on connection lines between the first ECU and the dual coil and the connection lines between the redundant ECU and the dual coil. When the current on the connection line between the first ECU and the either coil is less than the threshold, the first ECU may send an effective indication to the redundant ECU, and may further send a second switching indication to the switching circuit. After receiving the second switching indication, the switching circuit may connect the connection lines between the redundant ECU and the dual coil, and disconnect the connection lines between the first ECU and the dual coil. In this design, the direct current provided by the redundant ECU can be successfully transmitted to the dual coil of the solenoid valve, and the direct current provided to the dual coil due to the fault of the first ECU can be cut off, to ensure the accuracy of solenoid valve driving.

### Solenoid valve connection manner 2:

In a possible design, a brake actuator includes a solenoid valve, the solenoid valve includes a first positive coil, a second positive coil, and a negative coil, the first ECU is connected to the first positive coil and the negative coil through lines, and the redundant ECU is connected to the second positive coil and the negative coil through lines. When the first ECU is an ECU that takes effect by default, when the first ECU is not faulty, the first ECU is used to provide a direct current to the first positive coil and the negative coil; or when the first ECU is faulty, the redundant ECU is used to provide a direct current to the second positive coil and the negative coil. In this design, the negative coil in the solenoid valve is reused, and positive coils corresponding to the two ECUs are separately disposed, so that complexity of solenoid valve setup can be reduced, costs can be saved, and interference of an electrical signal of one ECU to the driving of another ECU can be reduced as much as possible.

In a possible design, in a process of providing the direct current to the first positive coil and the negative coil, the first ECU may further detect a current on a connection line between the first ECU and the negative coil, and when the current on the connection line between the first ECU and the negative coil is less than a threshold, send a supplementation indication to the redundant ECU. After receiving the supplementation indication, the redundant ECU may provide an electrical signal to the negative coil through a connection line between the redundant ECU and the negative coil. In this design, when a fault occurs when one ECU provides an electrical signal to the negative coil, another ECU provides a supplementary electrical signal to the negative coil, and an electrical signal on the first positive coil can still be provided by the original ECU. That is, it is not necessary to switch an electrical signal providing process of the first positive coil and the negative coil to another ECU, so that by using a small quantity of switching operations, sufficient electrical signals can be provided to the negative coil by the two ECUs on the basis of improving switching stability.

In a possible design, the brake system may further include a switching circuit. The switching circuit is disposed on a connection line between the first ECU and the first positive coil, the connection line between the first ECU and the negative coil, a connection line between the redundant ECU and the second positive coil, and the connection line between the redundant ECU and the negative coil. The switching circuit is configured to: when the first ECU does not fail, connect the connection line between the first ECU and the first positive coil and the connection line between the first ECU and the negative coil, and disconnect the connection line between the redundant ECU and the second positive coil and the connection line between the redundant ECU and the negative coil; or when the first ECU fails, connect the connection line between the redundant ECU and the second positive coil and the connection line between the redundant ECU and the negative coil, and disconnect the connection line between the first ECU and the first positive coil and the connection line between the first ECU and the negative coil. In this way, even if an ECU that does not need to provide a direct current outputs the direct current to the solenoid valve, a driving link of the ECU to the solenoid valve can be cut off by using the switching circuit, to ensure that the solenoid valve works only under the drive of another ECU. This effectively improves accuracy of redundant control.

In a possible design, when the current on the connection line between the first ECU and the negative coil is less than the threshold, the first ECU may send a switching indication to the redundant ECU, and may further send a first switching indication to the switching circuit. After receiving the first switching indication, the switching circuit may connect the connection line between the redundant ECU and the negative coil, so that the supplementary electrical signal provided by the redundant ECU can be successfully transmitted to the negative coil of the solenoid valve.

In a possible design, in a process of providing the direct current to the first positive coil and the negative coil, the first ECU may further detect a current on a connection line between the first ECU and each of the first positive coil and the negative coil, and when a current on a connection line between the first ECU and either coil is less than a threshold, send an effective indication to the redundant ECU and stop providing the direct current to the first positive coil and the negative coil. After receiving the effective indication, the redundant ECU provides the direct current to the second positive coil and the negative coil through connection lines between the redundant ECU and the second positive coil and the negative coil. In this way, when a fault occurs in a driving process of one ECU, another ECU is switched to in time for driving. This can avoid continuous driving with a faulty ECU, and maintain accuracy of solenoid valve driving.

In a possible design, the brake system may further include a switching circuit. The switching circuit is disposed on the connection line between the first ECU and the first positive coil, the connection line between the first ECU and the negative coil, the connection line between the redundant ECU and the second positive coil, and the connection line between the redundant ECU and the negative coil. When the current on the connection line between the first ECU and the either coil is less than the threshold, the first ECU may send an effective indication to the redundant ECU, and may further send a second switching indication to the switching circuit. After receiving the second switching indication, the switching circuit may connect the connection line between the redundant ECU and the second positive coil and the connection line between the redundant ECU and the negative coil, and disconnect the connection line between the first ECU and the first positive coil and the connection line between the first ECU and the negative coil. In this way, the direct current provided by the redundant ECU can be successfully transmitted to a second dual coil of the solenoid valve, and the direct current provided to a first dual coil due to the fault of the first ECU can be cut off, to ensure the accuracy of solenoid valve driving.

### Solenoid valve connection manner 3:

In a possible design, a brake actuator includes a solenoid valve, and the solenoid valve includes a first dual coil and a second dual coil, the first ECU is connected to the first dual coil through lines, and the redundant ECU is connected to the second dual coil through lines. When the first ECU is an ECU that takes effect by default, when the first ECU is not faulty, the first ECU is used to provide a direct current to the first dual coil, or when the first ECU is faulty, the redundant ECU is used to provide a direct current to the second dual coil. In this design, an additional dual coil is added to the solenoid valve, so that the solenoid valve can be accurately driven by using an electrical signal of each ECU for a corresponding dual coil, to avoid interference caused by an electrical signal of one ECU to an electrical signal of another ECU.

In a possible design, both the first dual coil and the second dual coil may be wound around an entire region of an iron core of the solenoid valve, but are wound around the iron core in different directions. Alternatively, the first dual coil and the second dual coil may be wound around different regions of the iron core of the solenoid valve. Alternatively, some of the coils of the first dual coil and the second dual coil are wound around the same region of the iron core of the solenoid valve, and the other part of the coils are wound around different regions of the iron core of the solenoid valve.

In a possible design, in a process of providing the direct current to the first dual coil, the first ECU may further detect a current on a connection line between the first ECU and each coil in the first dual coil, and when a current on a connection line between the first ECU and either coil is less than a threshold, send an effective indication to the redundant ECU and stop providing the direct current to the first dual coil. After receiving the effective indication, the redundant ECU may provide the direct current to the second dual coil through connection lines between the redundant ECU and the second dual coil. In this design, when the solenoid valve cannot be driven due to a fault that occurs in a process in which one ECU provides an electrical signal to a dual coil, the solenoid valve can be driven by using a direct current provided by another ECU to another dual coil, to improve timeliness of switching while implementing redundant control of the solenoid valve.

In a possible design, the brake system may further include a switching circuit. The switching circuit is disposed on connection lines between the first ECU and the first dual coil and the connection lines between the redundant ECU and the second dual coil. When the current on the connection line between the first ECU and the either coil is less than the threshold, the first ECU may send an effective indication to the redundant ECU, and may further send a switching indication to the switching circuit. After receiving the switching indication, the switching circuit may connect the connection lines between the redundant ECU and the second dual coil, and disconnect the connection lines between the first ECU and the first dual coil. In this way, the direct current provided by the redundant ECU can be successfully transmitted to the second dual coil of the solenoid valve, and the direct current provided to the first dual coil due to the fault of the first ECU can be cut off, to ensure the accuracy of solenoid valve driving.

According to a second aspect, this application provides an integrated apparatus, including a first ECU, a second ECU, a first PCB, a second PCB, and an inter-board connector. A first-type component whose power is greater than a power threshold in the first ECU and the second ECU is disposed on the first PCB, a second-type component whose power is not greater than the power threshold in the first ECU and the second ECU is disposed on the second PCB, and a first-type component in either ECU on the first PCB is connected to a second-type component in the ECU on the second PCB through the inter-board connector. In this way, a high-power component is integrated on one PCB and a low-power component is integrated on another PCB, so that classified management of the high-power component and the low-power component can be implemented, and a quantity of components carried on each PCB can be reduced through distributed deployment of all components in the two ECUs. In this way, a width area of each PCB is reduced, and a load bearing capacity of each PCB is reduced.

In a possible design, the integrated apparatus may further include a support frame, and the first PCB and the second PCB are fixedly connected through the support frame. In this way, it is ensured that relative positions of the first PCB and the second PCB remain unchanged, and connection stability is maintained.

In a possible design, the support frame may be located at a top layer, the second PCB may be located at a bottom layer, the first PCB is located between the support frame and the second PCB, an opening is disposed on the first PCB, and the support frame passes through the opening and is fixedly connected to the first PCB and the second PCB. In this way, a side that is of the second PCB carrying the low-power component and that faces away from the first PCB is not shielded, and this helps improve a heat dissipation effect of the second PCB.

In a possible design, the first-type component may be disposed on a surface that is of the first PCB and that faces the support frame, and the second-type component may be disposed on a surface that is of the second PCB and that faces the first PCB. In this way, the high-power component and the low-power component are deployed on surfaces of the first PCB and the second PCB in the same direction. This can further help dispose a cable between the high-power component and the low-power component, and reduce complexity of implementing integration.

In a possible design, the integrated apparatus may further include a valve body, and the valve body is configured to accommodate a controlled component. In this case, the first-type component in either ECU may include a driver of the controlled component, and the second-type component in either ECU may include a microcontroller. In addition, a microcontroller in the first ECU and a microcontroller in the second ECU may be further connected through a cable on the second PCB. In this way, not only communication between the two ECUs can be implemented, but also a same controlled component can be driven by the two ECUs, to implement joint redundant control of the same controlled component by the two ECUs.

In a possible design, when the controlled component includes a motor, a solenoid valve, and a sensor, the first-type component in either ECU may include a driver of the motor and a driver of the solenoid valve, and the second-type component in either ECU may include the microcontroller and an interface of the sensor. In this way, a low-power microcontroller and the interface of the sensor are disposed on one PCB, and a high-power driver is disposed on another PCB. This not only helps the microcontroller obtain sensor information in a more timely manner, but also reduces, through distributed deployment, heat generated by the PCB on which the microcontroller is located.

In a possible design, the integrated apparatus may further include a housing. The support frame, the first PCB, and the second PCB are placed in the housing, and at least one end of the support frame is fastened to the housing. In this way, because the low-power component generates little heat, the second PCB integrated with the low-power component is close to the housing. This further helps increase a heat dissipation area of the second PCB by using the housing, and further improves a heat dissipation effect of the second PCB.

In a possible design, a width area of the second PCB may be smaller than a width area of the first PCB, so that surface utilization of the second PCB is improved on the basis that the second PCB is sufficient to carry the low-power component, and integration of the integrated apparatus is further improved.

According to a third aspect, this application provides an integrated apparatus, including a first ECU, a second ECU, a first PCB, a second PCB, and a support frame. The first PCB and the second PCB are fixedly connected through the support frame. A component in the first ECU is disposed on the first PCB, and a component in the second ECU is disposed on the second PCB. In this way, components in the two ECUs are separately integrated on different PCBs. This not only reduces a quantity of components carried on each PCB, further helping reduce a width area of each PCB, and reducing a load bearing capacity of each PCB, but also implements physical structure decoupling of the two ECUs, facilitating development and design of the integrated apparatus.

In a possible design, the integrated apparatus may further include an inter-board connector, a component in either ECU may include a microcontroller, and a microcontroller in the first ECU is connected to a microcontroller in the second ECU through the inter-board connector, to implement communication between the two ECUs on the two PCBs through the inter-board connector.

In a possible design, the integrated apparatus may further include a valve body, and the valve body is configured to accommodate a controlled component. In this case, the component in either ECU may further include a driver of the controlled component, the microcontroller in the first ECU is connected to a driver of a controlled component in the first ECU through a cable on the first PCB; and the microcontroller in the second ECU is connected to a driver of a controlled component in the second ECU through a cable on the second PCB. In this way, joint redundant control of a same controlled component by the two ECUs can be implemented.

In a possible design, when the controlled component includes a motor, a solenoid valve, and a sensor, the component in either ECU may further include a driver of the motor, a driver of the solenoid valve, and an interface of the sensor, so that the either ECU can successfully receive sensor information, and then accurately drive the motor or the solenoid valve based on the sensor information.

In a possible design, the integrated apparatus may further include a housing. The support frame, the first PCB, and the second PCB are placed in the housing, and at least one end of the support frame is fastened to the housing. In this way, the housing can hold the support frame, to improve stability of a fixed connection between the two PCBs based on a stable characteristic of the housing.

In a possible design, the support frame may be located at a top layer, the second PCB may be located at a bottom layer, the first PCB is located between the support frame and the second PCB, an opening is disposed on the first PCB, and the support frame passes through the opening and is fixedly connected to the first PCB and the second PCB. In this way, a side that is of the second PCB and that faces away from the first PCB is close to the housing. This further increases a heat dissipation area of the second PCB by using the housing, and helps improve a heat dissipation effect of the second PCB.

In a possible design, the component in the first ECU may be disposed on a surface that is of the first PCB and that faces the support frame, and the component in the second ECU may be disposed on a surface that is of the second PCB and that faces the first PCB. In this way, the component in the first ECU and the component in the second ECU are deployed on surfaces of the first PCB and the second PCB in the same direction. This can further help dispose a cable between the component in the first ECU and the component in the second ECU in the inter-board connector, and reduce integration complexity.

According to a fourth aspect, this application provides an integrated apparatus, including a first ECU, a second ECU, and a PCB. A component in the first ECU and a component in the second ECU are integrated on the PCB. In this way, components in the two ECUs are integrated on the same PCB, so that a height of the integrated apparatus can be effectively reduced compared with that in a solution in which components are integrated on two PCBs. In addition, in this design, interfaces of all related components can be disposed on one PCB board. Therefore, the components and the interfaces of components on the PCB can be all connected in a one-time crimping manner, to further help simplify an integration process.

In a possible design, a component in either ECU may include a microcontroller, and a microcontroller in the first ECU may be further connected to a microcontroller in the second ECU through a cable on the PCB, to implement communication between the two ECUs.

In a possible design, the integrated apparatus may further include a valve body, and the valve body is configured to accommodate a controlled component. In this case, the component in either ECU may further include a driver of the controlled component, the microcontroller in the ECU may be further connected to the driver of the controlled component in the ECU through a cable on the PCB. In this way, joint redundant control of a same controlled component by the two ECUs can be implemented.

In a possible design, when the controlled component includes a motor, a solenoid valve, and a sensor, the component in either ECU may further include a driver of the motor, a driver of the solenoid valve, and an interface of the sensor, so that the either ECU can successfully receive sensor information, and then accurately drive the motor or the solenoid valve based on the sensor information.

In a possible design, the integrated apparatus may further include a housing. A support frame and the PCB are placed in the housing, and at least one end of the support frame is fastened to the housing. In this way, the housing can hold the support frame, to improve stability of the fixed PCB based on a stable characteristic of the housing.

In a possible design, the support frame may be located at a top layer, and the PCB may be located at a bottom layer and close to the bottom of the housing, to increase a heat dissipation area of the PCB by using the housing, and further improve a heat dissipation effect of the PCB.

In a possible design, the component in the first ECU and the component in the second ECU may be disposed on a surface that is of the PCB and that faces the support frame. In this way, components in the two ECUs can be further connected through cables disposed on a same surface of the PCB, to simplify a cable deployment manner on the PCB, and reduce integration complexity.

According to a fifth aspect, this application further provides a braking apparatus, including a first ECU, a second ECU, and a brake actuator. The first ECU and the second ECU are separately connected to the brake actuator, and are configured to independently or jointly drive the brake actuator, to implement redundant control of the same brake actuator by the two ECUs.

In a possible design, the brake actuator may include a motor, the motor includes a three-phase winding, and the first ECU and the second ECU are separately connected to the three-phase winding through lines. When the first ECU is an ECU that takes effect by default, when the first ECU is not faulty, the first ECU is used to provide a three-phase alternating current to the three-phase winding; or when the first ECU is faulty, the second ECU is used to provide a three-phase alternating current to the three-phase winding. In this design, the connection control apparatus can directly reuse the three-phase winding in the motor to implement redundant control of the same motor by the two ECUs, without adding an additional winding. This can not only be directly compatible with the existing motor, but also help save costs.

In a possible design, in a process of providing the three-phase alternating current to the three-phase winding, the first ECU may further detect a current on a connection line between the first ECU and each phase winding in the three-phase winding, and when a current on a connection line between the first ECU and a first phase winding in the three-phase winding is less than a threshold, send a supplementation indication to the second ECU. After receiving the supplementation indication, the second ECU provides a supplementary electrical signal to the first phase winding through a connection line between the second ECU and the first phase winding. The first phase winding is any phase winding in the three-phase winding. In this way, when a fault occurs when one ECU provides an electrical signal to a winding, another ECU can be used to provide a supplementary electrical signal to the winding, and electrical signals on the other two windings can still be provided by the original ECU. That is, it is not necessary to switch an electrical signal providing process of all windings to another ECU, so that by using a small quantity of switching operations, a sufficient three-phase current can be jointly provided to the motor by the two ECUs on the basis of improving switching stability.

In a possible design, the connection control apparatus may further include a switching circuit. The switching circuit is disposed on connection lines between the first ECU and the three-phase winding and connection lines between the second ECU and the three-phase winding. The switching circuit is configured to: when the first ECU does not fail, connect the connection lines between the first ECU and the three-phase winding, and disconnect the connection lines between the second ECU and the three-phase winding; or when the first ECU fails, connect the connection lines between the second ECU and the three-phase winding, and disconnect the connection lines between the first ECU and the three-phase winding. In this way, even if an ECU that does not need to provide a three-phase alternating current outputs the three-phase alternating current to the motor, a driving link of the ECU to the motor can be cut off by using the switching circuit, to ensure that the motor works only under the drive of another ECU. This effectively improves accuracy of redundant control.

In a possible design, when the current on the connection line between the first ECU and the first phase winding is less than the threshold, the first ECU may send a supplementation indication to the second ECU, and may further send a first switching indication to the switching circuit. After receiving the first switching indication, the switching circuit may connect the connection line between the second ECU and the first phase winding, so that the supplementary electrical signal provided by the second ECU can be successfully transmitted to the phase winding of the motor.

In a possible design, in a process of providing the three-phase alternating current to the three-phase winding, the first ECU detects a current on a connection line between the first ECU and each phase winding in the three-phase winding, and when a current on a connection line between the first ECU and any phase winding in the three-phase winding is less than a threshold, send an effective indication to the second ECU and stop providing the three-phase alternating current to the three-phase winding. After receiving the effective indication, the second ECU provides the three-phase alternating current to the three-phase winding through connection lines between the second ECU and the three-phase winding. In this way, when a fault occurs in a driving process of one ECU, another ECU is switched to in time for driving. This can avoid continuous driving with a faulty ECU, and maintain accuracy of motor driving.

In a possible design, the connection control apparatus may further include a switching circuit. The switching circuit is disposed on connection lines between the first ECU and the three-phase winding and the connection lines between the second ECU and the three-phase winding. When the current on the connection line between the first ECU and the any phase winding is less than the threshold, the first ECU sends a second switching indication to the switching circuit. After receiving the second switching indication, the switching circuit may disconnect the connection lines between the first ECU and the three-phase winding, and connect the connection lines between the second ECU and the three-phase winding. In this way, the three-phase alternating current provided by the second ECU can be successfully transmitted to a three-phase stator winding of the motor, and the three-phase alternating current provided to the three-phase stator winding due to the fault of the first ECU can be cut off, to effectively ensure accuracy of motor driving.

In a possible design, the brake actuator may include a motor, the motor includes a first three-phase winding and a second three-phase winding, the first ECU is connected to the first three-phase winding through lines, and the second ECU is connected to the second three-phase winding through lines. When the first ECU is an ECU that takes effect by default, when the first ECU is not faulty, the first ECU is used to provide a three-phase alternating current to the first three-phase winding; or when the first ECU is faulty, the second ECU is used to provide a three-phase alternating current to the second three-phase winding. In this way, an additional three-phase winding is added to the motor, so that the motor can be accurately driven by using an electrical signal of each ECU for a corresponding three-phase winding, to avoid interference caused by an electrical signal of one ECU to an electrical signal of another ECU.

In a possible design, both the first three-phase winding and the second three-phase winding may be wound around an entire region of an iron core of the motor, but are wound around the iron core in different directions. Alternatively, the first three-phase winding and the second three-phase winding may be wound around different regions of the iron core of the motor. Alternatively, some of the windings of the first three-phase winding and the second three-phase winding are wound around the same region of the iron core of the motor, and the other part of the windings are wound around different regions of the iron core of the motor.

In a possible design, in a process of providing the three-phase alternating current to the first three-phase winding, the first ECU detects a current on a connection line between the first ECU and each phase winding in the first three-phase winding, and when a current on a connection line between the first ECU and any phase winding is less than a threshold, sends an effective indication to the second ECU and stop providing the three-phase alternating current to the first three-phase winding. After receiving the effective indication, the second ECU provides the three-phase alternating current to the second three-phase winding through connection lines between the second ECU and the second three-phase winding. In this way, even if the motor cannot be driven due to a fault that occurs in a process in which one ECU provides an electrical signal to a three-phase winding, the motor can still be driven by using a three-phase alternating current provided by another ECU to another three-phase winding, to improve timeliness of switching while implementing redundant control of the motor.

In a possible design, the connection control apparatus may further include a switching circuit. The switching circuit is disposed on connection lines between the first ECU and the first three-phase winding and the connection lines between the second ECU and the second three-phase winding. When the current on the connection line between the first ECU and the any phase winding is less than the threshold, the first ECU may send an effective indication to the second ECU, and may further send a switching indication to the switching circuit. After receiving the switching indication, the switching circuit may disconnect the connection lines between the first ECU and the first three-phase winding, and connect the connection lines between the second ECU and the second three-phase winding. In this way, the three-phase alternating current provided by the second ECU can be successfully transmitted to the second three-phase winding of the motor, and the three-phase alternating current provided to the first three-phase winding due to the fault of the first ECU can be cut off, to effectively ensure accuracy of motor driving.

In a possible design, the brake actuator may include a solenoid valve, and the solenoid valve includes a dual coil. The first ECU and the second ECU are separately connected to the dual coil through lines. When the first ECU is an ECU that takes effect by default, when the first ECU is not faulty, the first ECU is used to provide a direct current to the dual coil, or when the first ECU is faulty, the second ECU is used to provide a direct current to the dual coil. In this design, the dual coil in the solenoid valve can be reused to implement redundant driving of the same solenoid valve by the two ECUs, without adding an additional coil. This can not only be directly compatible with the existing solenoid valve, but also help save costs.

In a possible design, in a process of providing the direct current to the dual coil, the first ECU may further detect a current on a connection line between the first ECU and each coil in the dual coil, and when a current on a connection line between the first ECU and a first coil in the dual coil is less than a threshold, send a supplementation indication to the second ECU. After receiving the supplementation indication, the second ECU provides a supplementary electrical signal to the first coil through a connection line between the second ECU and the first coil. The first coil is either coil in the dual coil. In this design, when a fault occurs when one ECU provides an electrical signal to a coil, another ECU can provide a supplementary electrical signal to the coil, and an electrical signal on the other coil can still be provided by the original ECU. That is, it is not necessary to switch an electrical signal providing process of all coils to another ECU, so that by using a small quantity of switching operations, an accurate direct current can be jointly supplied to the solenoid valve by the two ECUs on the basis of improving switching stability.

In a possible design, the connection control apparatus may further include a switching circuit. The switching circuit is disposed on connection lines between the first ECU and the dual coil and connection lines between the second ECU and the dual coil. The switching circuit is configured to: when the first ECU does not fail, connect the connection lines between the first ECU and the dual coil, and disconnect the connection lines between the second ECU and the dual coil; or when the first ECU fails, connect the connection lines between the second ECU and the dual coil, and disconnect the connection lines between the first ECU and the dual coil. In this way, even if an ECU that does not need to provide a direct current outputs the direct current to the solenoid valve, a driving link of the ECU to the solenoid valve can be cut off by using the switching circuit, to ensure that the solenoid valve works only under the drive of another ECU. This effectively improves accuracy of redundant control.

In a possible design, when the current on the connection line between the first ECU and the first coil is less than the threshold, the first ECU may send a supplementation indication to the second ECU, and may further send a first switching indication to the switching circuit. After receiving the first switching indication, the switching circuit may connect the connection line between the second ECU and the first coil, so that the supplementary electrical signal provided by the second ECU can be successfully replenished to the first coil of the solenoid valve.

In a possible design, in a process of providing the direct current to the dual coil, the first ECU may further detect a current on a connection line between the first ECU and each coil in the dual coil, and when a current on a connection line between the first ECU and either coil is less than a threshold, send an effective indication to the second ECU and stop providing the direct current to the dual coil. After receiving the effective indication, the second ECU can provide the direct current to the dual coil through connection lines between the second ECU and the dual coil. In this way, when a fault occurs in a driving process of one ECU, another ECU is switched to in time for driving. This can avoid continuous driving with a faulty ECU, and maintain accuracy of solenoid valve driving.

In a possible design, the connection control apparatus may further include a switching circuit. The switching circuit is disposed on connection lines between the first ECU and the dual coil and the connection lines between the second ECU and the dual coil. When the current on the connection line between the first ECU and the either coil is less than the threshold, the first ECU may send an effective indication to the second ECU, and may further send a second switching indication to the switching circuit. After receiving the second switching indication, the switching circuit may connect the connection lines between the second ECU and the dual coil, and disconnect the connection lines between the first ECU and the dual coil. In this design, the direct current provided by the second ECU can be successfully transmitted to the dual coil of the solenoid valve, and the direct current provided to the dual coil due to the fault of the first ECU can be cut off, to ensure the accuracy of solenoid valve driving.

In a possible design, the brake actuator may include a solenoid valve, the solenoid valve includes a first positive coil, a second positive coil, and a negative coil, the first ECU is connected to the first positive coil and the negative coil through lines, and the second ECU is connected to the second positive coil and the negative coil through lines. When the first ECU is an ECU that takes effect by default, when the first ECU is not faulty, the first ECU is used to provide a direct current to the first positive coil and the negative coil; or when the first ECU is faulty, the second ECU is used to provide a direct current to the second positive coil and the negative coil.

In a possible design, in a process of providing the direct current to the first positive coil and the negative coil, the first ECU may further detect a current on a connection line between the first ECU and the negative coil, and when the current on the connection line between the first ECU and the negative coil is less than a threshold, send a supplementation indication to the second ECU. After receiving the supplementation indication, the second ECU may provide an electrical signal to the second positive coil through a connection line between the second ECU and the second positive coil. In this design, when a fault occurs when one ECU provides an electrical signal to the negative coil, another ECU provides a supplementary electrical signal to the negative coil, and an electrical signal on the first positive coil can still be provided by the original ECU. That is, it is not necessary to switch an electrical signal providing process of the first positive coil and the negative coil to another ECU, so that by using a small quantity of switching operations, sufficient electrical signals can be provided to the negative coil by the two ECUs on the basis of improving switching stability.

In a possible design, the connection control apparatus may further include a switching circuit. The switching circuit is disposed on a connection line between the first ECU and the first positive coil, the connection line between the first ECU and the negative coil, a connection line between the second ECU and the second positive coil, and the connection line between the second ECU and the negative coil. The switching circuit is configured to: when the first ECU does not fail, connect the connection line between the first ECU and the first positive coil and the connection line between the first ECU and the negative coil, and disconnect the connection line between the second ECU and the second positive coil and the connection line between the second ECU and the negative coil; or when the first ECU fails, connect the connection line between the second ECU and the second positive coil and the connection line between the second ECU and the negative coil, and disconnect the connection line between the first ECU and the first positive coil and the connection line between the first ECU and the negative coil. In this way, even if an ECU that does not need to provide a direct current outputs the direct current to the solenoid valve, a driving link of the ECU to the solenoid valve can be cut off by using the switching circuit, to ensure that the solenoid valve works only under the drive of another ECU. This effectively improves accuracy of redundant control.

In a possible design, when a current on the connection line between the first ECU and the first positive coil is less than the threshold, the first ECU may send a supplementation indication to the second ECU, and may further send a first switching indication to the switching circuit. After receiving the first switching indication, the switching circuit may connect the connection line between the second ECU and the negative coil, so that the supplementary electrical signal provided by the second ECU can be successfully transmitted to the negative coil of the solenoid valve.

In a possible design, in a process of providing the direct current to the first positive coil and the negative coil, the first ECU may further detect a current on a connection line between the first ECU and each of the first positive coil and the negative coil, and when a current on a connection line between the first ECU and either coil is less than a threshold, send an effective indication to the second ECU and stop providing the direct current to the first positive coil and the negative coil. After receiving the effective indication, the second ECU may provide the direct current to the second positive coil and the negative coil through connection lines between the second ECU and the second positive coil and the negative coil. In this way, when a fault occurs in a driving process of one ECU, another ECU is switched to in time for driving. This can avoid continuous driving with a faulty ECU, and maintain accuracy of solenoid valve driving.

In a possible design, the connection control apparatus may further include a switching circuit. The switching circuit is disposed on the connection line between the first ECU and the first positive coil, the connection line between the first ECU and the negative coil, the connection line between the second ECU and the second positive coil, and the connection line between the second ECU and the negative coil. When the current on the connection line between the first ECU and the either coil is less than the threshold, the first ECU may send an effective indication to the second ECU, and may further send a second switching indication to the switching circuit. After receiving the second switching indication, the switching circuit may connect the connection line between the second ECU and the second positive coil and the connection line between the second ECU and the negative coil, and disconnect the connection line between the first ECU and the first positive coil and the connection line between the first ECU and the negative coil. In this way, the direct current provided by the second ECU can be successfully transmitted to a second dual coil of the solenoid valve, and the direct current provided to a first dual coil due to the fault of the first ECU can be cut off, to ensure the accuracy of solenoid valve driving.

In a possible design, the brake actuator may include a solenoid valve, the solenoid valve includes a first dual coil and a second dual coil, the first ECU is connected to the first dual coil through lines, and the second ECU is connected to the second dual coil through lines. When the first ECU is an ECU that takes effect by default, when the first ECU is not faulty, the first ECU is used to provide a direct current to the first dual coil; or when the first ECU is faulty, the second ECU is used to provide a direct current to the second dual coil. In this way, an additional dual coil is added to the solenoid valve, so that the solenoid valve can be accurately driven by using an electrical signal of each ECU for a corresponding dual coil, to avoid interference caused by an electrical signal of one ECU to an electrical signal of another ECU.

In a possible design, both the first dual coil and the second dual coil may be wound around an entire region of an iron core of the solenoid valve, but are wound around the iron core in different directions. Alternatively, the first dual coil and the second dual coil may be wound around different regions of the iron core of the solenoid valve. Alternatively, some of the coils of the first dual coil and the second dual coil are wound around the same region of the iron core of the solenoid valve, and the other part of the coils are wound around different regions of the iron core of the solenoid valve.

In a possible design, in a process of providing the direct current to the first dual coil, the first ECU may further detect a current on a connection line between the first ECU and each coil in the first dual coil, and when a current on a connection line between the first ECU and either coil is less than a threshold, send an effective indication to the second ECU and stop providing the direct current to the first dual coil. After receiving the effective indication, the second ECU can provide the direct current to the second dual coil through connection lines between the second ECU and the second dual coil. In this design, when the solenoid valve cannot be driven due to a fault that occurs in a process in which one ECU provides an electrical signal to a dual coil, the solenoid valve can be driven by using a direct current provided by another ECU to another dual coil, to improve timeliness of switching while implementing redundant control of the solenoid valve.

In a possible design, the connection control apparatus may further include a switching circuit. The switching circuit is disposed on connection lines between the first ECU and the first dual coil and the connection lines between the second ECU and the second dual coil. When the current on the connection line between the first ECU and the either coil is less than the threshold, the first ECU may send an effective indication to the second ECU, and may further send a switching indication to the switching circuit. After receiving the switching indication, the switching circuit may connect the connection lines between the second ECU and the second dual coil, and disconnect the connection lines between the first ECU and the first dual coil. In this way, the direct current provided by the second ECU can be successfully transmitted to the second dual coil of the solenoid valve, and the direct current provided to the first dual coil due to the fault of the first ECU can be cut off, to ensure the accuracy of solenoid valve driving.

According to a sixth aspect, this application provides a terminal device, including the brake system according to any design of the first aspect, or including the integrated apparatus according to any design of the second aspect to the fourth aspect, or including the connection control apparatus according to any design of the fifth aspect.

For details of beneficial effects of the second aspect to the sixth aspect, refer to technical effects that can be achieved by corresponding designs in the first aspect. Details are not described herein again.

### BRIEF DESCRIPTION OF DRAWINGS

FIG. 1(A) to FIG. 1(D) are examples of schematic diagrams of a structure of a brake system according to an embodiment of this application;
FIG. 2(A) and FIG. 2(B) are examples of diagrams of a possible product form according to an embodiment of this application;
FIG. 3 is an example of a schematic diagram of a structure of a brake system according to an embodiment of this application;
FIG. 4 is an example of a schematic diagram of a structure of another brake system according to an embodiment of this application;
FIG. 5 is an example of a schematic diagram of a structure of still another brake system according to an embodiment of this application;
FIG. 6 is an example of a schematic diagram of a structure of yet another brake system according to an embodiment of this application;
FIG. 7 is an example of a schematic diagram of a structure of still yet another brake system according to an embodiment of this application;
FIG. 8 is an example of a schematic diagram of a structure of an integrated apparatus according to an embodiment of this application;
FIG. 9 is an example of a schematic diagram of a structure of another integrated apparatus according to an embodiment of this application;
FIG. 10 is an example of a schematic diagram of a structure of still another integrated apparatus according to an embodiment of this application;
FIG. 11 is an example of a schematic diagram of a structure of a connection control apparatus according to an embodiment of this application;
FIG. 12 is an example of a schematic diagram of a structure in which two ECUs are connected to a same motor according to an embodiment of this application; and
FIG. 13 is an example of a schematic diagram of a structure in which two ECUs are connected to a same solenoid valve according to an embodiment of this application.

### DESCRIPTION OF EMBODIMENTS

It should be noted that the terms "system" and "network" may be used interchangeably in embodiments of this application. "A plurality of" means two or more than two. "And/or" describes an association relationship between associated objects, and represents that three relationships may exist. For example, A and/or B may represent the following cases: Only A exists, both A and B exist, and only B exists, where A and B may be singular or plural. "One or more of the following items (pieces)" or a similar expression thereof means any combination of these items, including any combination of singular items (pieces) or plural items (pieces). For example, one or more of a, b, or c may indicate: a, b, c, a and b, a and c, b and c, or a, b, and c, where a, b, and c may be singular or plural.

In addition, unless otherwise specified, ordinal numbers such as "first" and "second" mentioned in embodiments of this application are used to distinguish between a plurality of objects, but are not used to limit priorities or importance of the plurality of objects. For example, a first electronic control unit and a second electronic control unit are only intended to distinguish between different electronic control units, and do not indicate differences in priority, importance, or the like of these electronic control units.

The following describes specific implementations of a brake system and an apparatus in this application with reference to specific embodiments. It is clear that the described embodiments are merely some rather than all of the embodiments of this application.

An embodiment of this application provides a brake system. The brake system may be applied to a terminal device having a braking capability. The terminal device may be an intelligent transportation device, including but not limited to an automobile, a ship, an airplane, an uncrewed aerial vehicle, a train, a van, a truck, or the like. In a specific application scenario, the brake system may be applied to an internet of vehicles, for example, vehicle to everything (vehicle to everything, V2X), long term evolution-vehicle (long term evolution-vehicle, LTE-V), or vehicle-to-vehicle (vehicle-to-vehicle, V2V), and is especially suitable for autonomous vehicles, driving assistance vehicles, and the like.

The following describes, by using Embodiment 1, a specific implementation of the brake system provided in this embodiment of this application.

### Embodiment 1

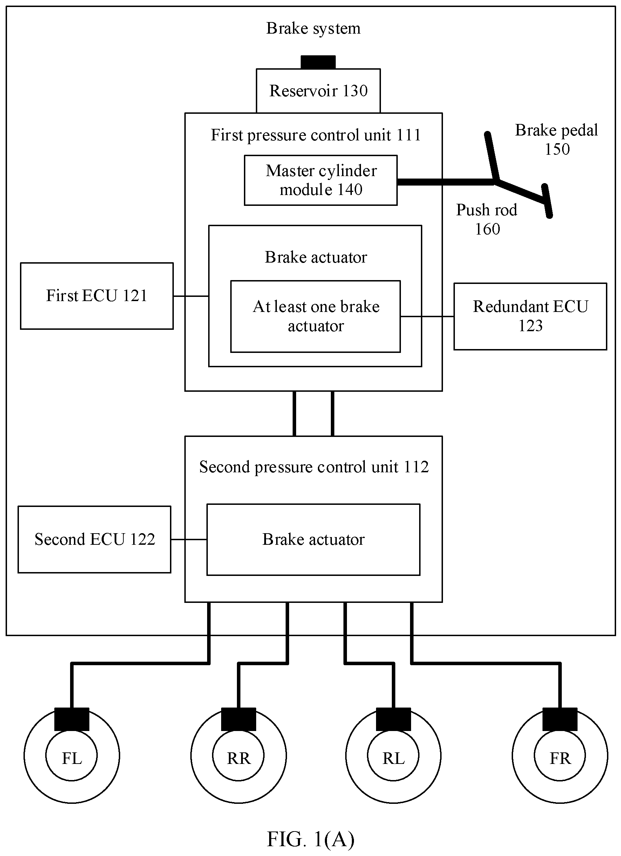

FIG. 1(A) to FIG. 1(D) are examples of schematic diagrams of a structure of a brake system according to an embodiment of this application. As shown in FIG. 1(A) to FIG. 1(D), in these examples, the brake system includes a reservoir 130, a master cylinder module 140, a brake pedal 150, a push rod 160, a first pressure control unit 111, a second pressure control unit 112, a first electronic control unit (electronic control unit, ECU) 121, a second ECU 122, and a redundant ECU 123. The brake pedal 150 is connected to the master cylinder module 140 through the push rod 160; the reservoir 130, the master cylinder module 140, the first pressure control unit 111, and the second pressure control unit 112 are sequentially connected through a brake pipe; and the second pressure control unit 112 is further connected to a controlled wheel through a brake pipe. The first ECU 121, the second ECU 122, and the redundant ECU 123 are elements that can support simple sensor data processing and complex logic computation. During implementation, the first ECU 121 is configured to control a brake actuator in the first pressure control unit 111, the second ECU 122 is configured to control a brake actuator in the second pressure control unit 112, the redundant ECU 123 is configured to control at least one brake actuator in the first pressure control unit 111 and/or control at least one brake actuator in the second pressure control unit 112, and the first pressure control unit 111 and the second pressure control unit 112 can independently or jointly complete a braking operation on the controlled wheel under control of at least one of the first ECU 121, the second ECU 122, and the redundant ECU 123.

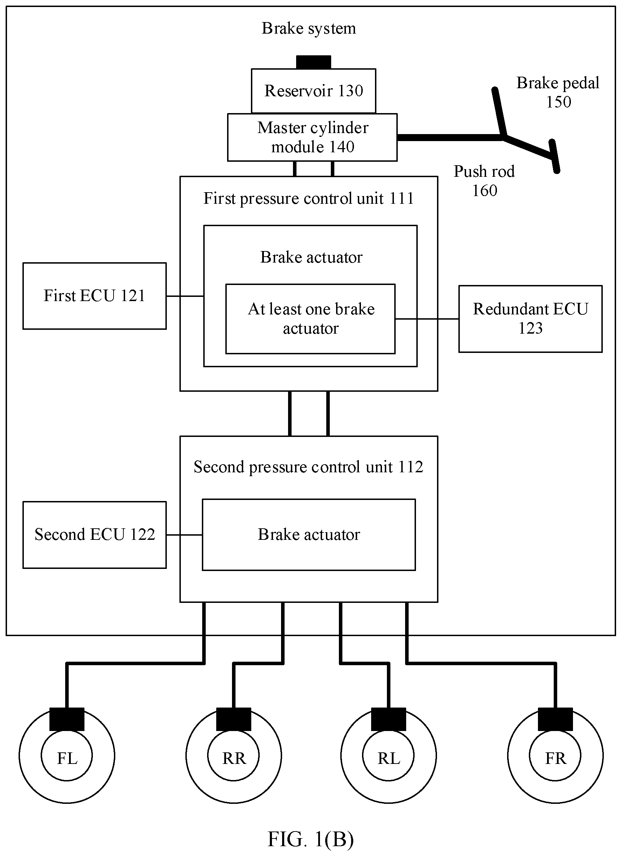

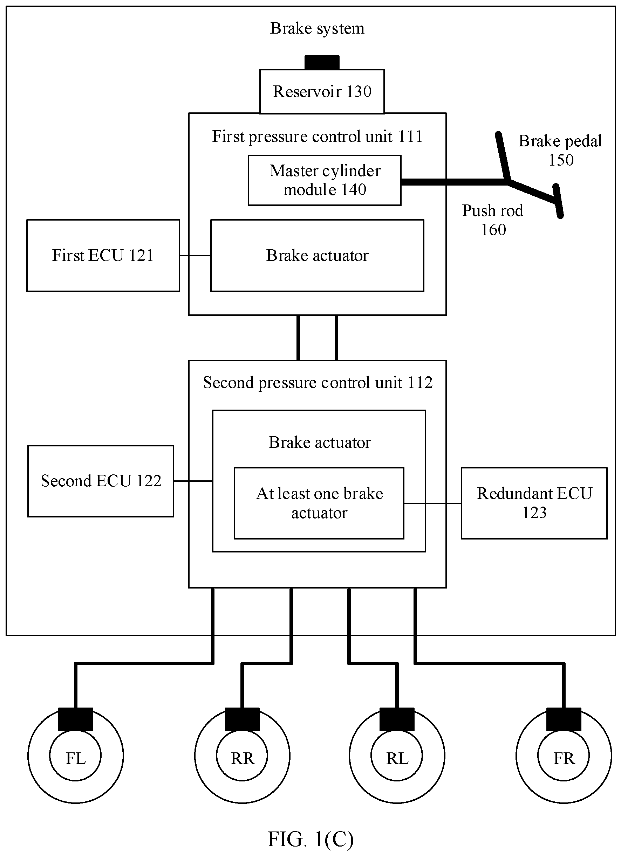

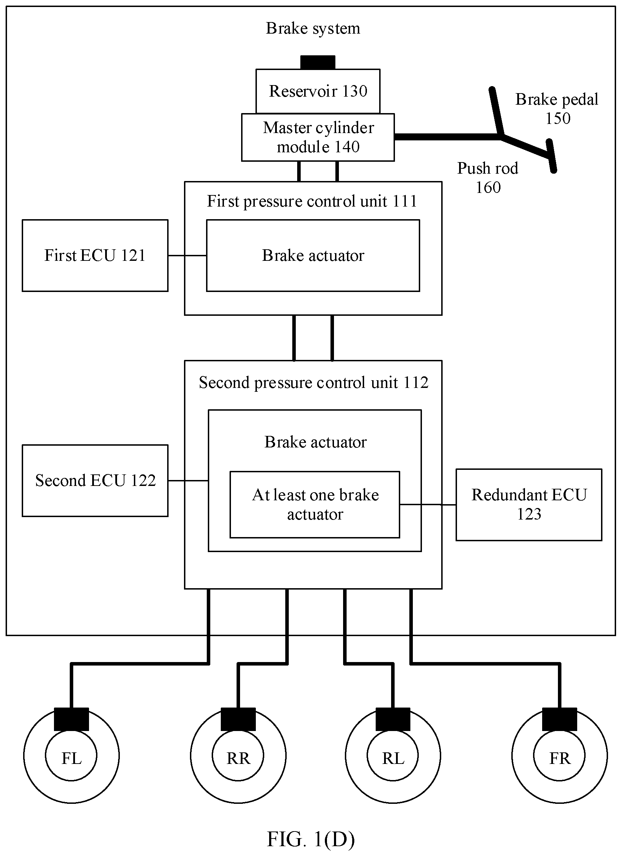

For example, the redundant ECU 123 may be connected to the at least one brake actuator in the first pressure control unit 111 but not to the brake actuator in the second pressure control unit 112 as shown in FIG. 1(A) or FIG. 1(B), to implement separate braking control on the first pressure control unit 111, or may be connected to the at least one brake actuator in the second pressure control unit 112 but not to the brake actuator in the first pressure control unit 111 as shown in FIG. 1(C) or FIG. 1(D), to implement separate braking control on the second pressure control unit 112, or may be connected to both the at least one brake actuator in the first pressure control unit 111 and the at least one brake actuator in the second pressure control unit 112, to implement joint braking control on the first pressure control unit 111 and the second pressure control unit 112. This is not specifically limited.

For example, the brake actuator may be any component that can implement an execution function in the brake system, for example, may include but is not limited to a motor or a solenoid valve.

For example, the first ECU 121 may control all or part of the brake actuators in the first pressure control unit 111, and the second ECU 122 may control all or part of the brake actuators in the second pressure control unit 112. However, regardless of whether the first ECU 121 and the second ECU 122 control all or part of the brake actuators, the at least one brake actuator controlled by the redundant ECU 123 needs to be fewer than or equal to brake actuators controlled by the first ECU 121, and/or fewer than or equal to brake actuators controlled by the first ECU 122. For example, the redundant ECU 123 controls the at least one brake actuator in the first pressure control unit 111. When the first ECU 121 can control all of the motors and all of the solenoid valves in the first pressure control unit 111, motors and solenoid valves that can be controlled by the redundant ECU 123 may be any one of the following: all of the motors and all of the solenoid valves in the first pressure control unit 111, all of the solenoid valves in the first pressure control unit 111 but excluding the motors in the first pressure control unit 111, all of the motors in the first pressure control unit 111 but excluding the solenoid valves in the first pressure control unit 111, part of the solenoid valves in the first pressure control unit 111 instead of all of the solenoid valves in the first pressure control unit 111, and part of the motors in the first pressure control unit 111 instead of all of the motors in the first pressure control unit 111. When the first ECU 121 can control part of the motors and/or part of the solenoid valves in the first pressure control unit 111, motors and solenoid valves that can be controlled by the redundant ECU 123 may be any one of the following: the same part of the motors and/or the same part of the solenoid valves in the first pressure control unit 111, the same part of the solenoid valves in the first pressure control unit 111 but excluding the motors in the first pressure control unit 111, the same part of the motors in the first pressure control unit 111 but excluding the solenoid valves in the first pressure control unit 111, part of the motors in the same part of the motors in the first pressure control unit 111 and/or part of the solenoid valves in the same part of the solenoid valves in the first pressure control unit 111, and the like. There are many possible designs for the ECU and the brake actuators that can be controlled, which are not listed herein.

For example, the redundant ECU 123 is connected to at least one brake actuator in one pressure control unit 111. It is considered that brake actuators that can be controlled by the first ECU 121 are more than or equal to brake actuators that can be controlled by the redundant ECU 123. Therefore, to enable the brake system to have more comprehensive braking functions in a default state, the brake system may select the first ECU 121 as an ECU that takes effect by default and that corresponds to the first pressure control unit 111. To be specific, when the first ECU 121 does not fail, the brake system may use the first ECU 121 to control the first pressure control unit 111, and when the first ECU 121 fails, the brake system may switch to use the redundant ECU 123 to control the first pressure control unit 111. In this way, even if the first ECU that takes effect by default fails due to some reasons, the brake system can flexibly switch to the redundant ECU to continue controlling the first pressure control unit. This helps improve flexibility and reliability of redundant control.

In this embodiment of this application, there are many solutions that can implement switching from the first ECU 121 to the redundant ECU 123. Examples are as follows.

In a possible solution, the first ECU 121 and the redundant ECU 123 may communicate with each other by using a local internet (local internet, LIN) technology, a Flexray network technology, a controller area network (controller area network, CAN) technology, or the like. The first ECU 121 may send a heartbeat message to the redundant ECU 123 according to a preset periodicity, a timer may be set in the redundant ECU 123, and duration of the timer is duration of one preset periodicity. In an implementation, each time the redundant ECU 123 receives a heartbeat message sent by the first ECU 121, the timer may be started or restarted until the timer expires. If the redundant ECU 123 does not receive another heartbeat message sent by the redundant ECU 121, it means that the first ECU 121 is abnormal. In this case, the redundant ECU 123 may determine that braking of the first ECU 121 fails. Then, the redundant ECU 123 may switch to an effective state, and may control the first pressure control unit 111 to perform braking based on a stepping indication of a driver or an indication of an autonomous driving system or a driving assistance system. Conversely, before the timer expires, if the redundant ECU 123 receives another heartbeat message sent by the redundant ECU 121, it means that the first ECU 121 is normal, and the first ECU 121 can still implement a braking function. Therefore, the redundant ECU 123 may not switch a state, and is still in an ineffective state.

In another possible solution, the first ECU 121 and the redundant ECU 123 may communicate with each other by using a LIN technology, a Flexray network technology, a CAN technology, or the like. A detection circuit may be disposed in the first ECU 121, the detection circuit includes a detection resistor, and the detection resistor is disposed on a line connecting the first ECU 121 to the connected brake actuator. When the first ECU 121 drives the brake actuator to work, the first ECU 121 may further obtain a value of a current flowing through the detection resistor (for example, may obtain the current value through a current detector). If the current value does not match a current value of a component in a working state, it means that braking of the first ECU 121 is abnormal. In this case, the first ECU 121 may send an effective instruction to the redundant ECU 123, so that the redundant ECU 123 switches to an effective state according to the effective instruction. Conversely, if the current value matches a current value of a component in a working state, it means that braking of the first ECU 121 is normal, the braking of the first ECU 121 may continue, and the redundant ECU 123 may continue to be ineffective.

For example, in this solution, that the current value of the detection resistor matches the current value of the component in the working state may mean that a difference between the current value of the detection resistor and the current value of the component in the working state is not greater than a preset difference threshold. That the current value of the detection resistor does not match the current value of the component in the working state may mean that the difference between the current value of the detection resistor and the current value of the component in the working state is greater than the preset difference threshold. The current value of the component in the working state and the preset difference threshold may be obtained based on experiment verification, or may be obtained by a person skilled in the art based on experience. This is not specifically limited. In a possible experience obtaining manner, if a component is a normally open solenoid valve, the component is disconnected when being powered on, and is connected when not being powered on. In other words, a current value of the component in a working state needs to be a current value corresponding to a high level. Based on this, if the first ECU 121 supplies power to the component, a current value on a line between the first ECU 121 and the component needs to be the current value corresponding to the high level. However, if a value of a current flowing through a detection resistor disposed on the line is a current value corresponding to a low level, it means that an error occurs in a control process of the component. Therefore, the first ECU 121 may send an effective instruction to the redundant ECU 123. Similarly, if a component is a normally closed solenoid valve, a current value on a line between the first ECU 121 and the component when the component is powered on needs to be a current value corresponding to a low level. However, if a value of a current flowing through a detection resistor disposed on the line is a current value corresponding to a high level, it means that an error occurs in a control process of the component. Therefore, the first ECU 121 may also send an effective instruction to the redundant ECU 123.

In still another possible solution, a central controller may be disposed outside the brake system, and the central controller may communicate with each ECU and sensor in the brake system by using a LIN technology, a Flexray network technology, a CAN technology, or the like. In an implementation, when determining, based on a stepping indication of a driver or an indication of an autonomous driving system or a driving assistance system, that the vehicle needs to be braked, the central controller may send a braking indication to the first ECU 121, to perform vehicle braking by using the first ECU 121. In addition, during braking of the first ECU 121, the central controller may further collect sensor data reported by each sensor in the vehicle, and detect a running status of the vehicle based on the sensor data. Once it is found that the running status of the vehicle does not match the braking indication sent by the central controller to the first ECU 121, it indicates that the first ECU 121 fails. In this case, the central controller may resend the braking indication to the redundant ECU 123, to perform braking by using the redundant ECU 121. Then, the central controller may keep using the redundant ECU 123 to perform braking, and switch to the default first ECU 121 to perform braking until receiving a notification message of self-check and repair of the first ECU 121, or after detecting that the brake system is restarted.

The central controller may be an integrated circuit chip and has a signal processing capability. For example, the central controller may be a general-purpose processor, may be a field programmable gate array (field programmable gate array, FPGA), may be an application-specific integrated circuit (application-specific integrated circuit, ASIC), may be a system on chip (system on chip, SoC), may be a network processor (network processor, NP), may be a digital signal processing circuit (digital signal processor, DSP), may be a microcontroller (micro controller unit, MCU), may be a programmable logic device (programmable logic device, PLD), or may be another programmable logic device, discrete gate or transistor logic device, discrete hardware component, or another integrated chip. The central controller may include an element or a circuit that has a processing capability, for example, include a central processing unit (central processing unit, CPU), a neural-network processing unit (neural-network processing unit, NPU), or a graphics processing unit (graphics processing unit, GPU). For another example, the central controller may include an application processor (application processor, AP), a modem processor, an image signal processor (image signal processor, ISP), a video codec, a digital signal processor (digital signal processor, DSP), a baseband processor, and/or the like. This is not specifically limited.

In the foregoing three possible solutions, in the first two solutions, braking switching may be directly completed through interaction between the first ECU and the redundant ECU, and there is no need to perform transition through the central controller. This helps improve efficiency of redundant braking. In the third solution, unified management of effective or ineffective states of the ECUs by the central controller can be implemented. This helps improve standardization of ECU state management.

It should be understood that the foregoing content is merely examples of several possible switching solutions. In another example, the first ECU 121 and the redundant ECU 123 may further have other switching manners. For example, in still another switching manner, during braking, the first ECU 121 may further send a notification message to the redundant ECU 123. After receiving the notification message, the redundant ECU 123 may monitor status information of a sensor that is related to braking. If it is determined that the status information does not match a braking function indicated in the notification message, the redundant ECU 123 may determine that the braking of the first ECU 121 fails, and then the redundant ECU 123 may directly switch to an effective state.

In addition, the first ECU 121, the redundant ECU 123, and another control unit outside the brake system may be connected through a CAN bus, and when braking needs to be controlled, the another control unit sends a control instruction to the CAN bus. In this case, both the first ECU 121 and the redundant ECU 123 can obtain the control instruction from the CAN bus, and only an ECU that takes effect executes the control instruction. In this way, it can be ensured that only one of the first ECU 121 and the redundant ECU 123 performs braking in a same time period, to avoid a problem of repeated braking.

In this embodiment of this application, the reservoir 130 is a tool for storing fluid. During braking, fluid in the reservoir 130 is extracted and then applied to the controlled wheel through a brake pipe between the reservoir 130 and the first pressure control unit 111, a brake pipe between the first pressure control unit 111 and the second pressure control unit 112, and a brake pipe between the second pressure control unit 112 and the controlled wheel, to implement a braking operation on the controlled wheel by applying pressure to the controlled wheel. When braking is canceled, the fluid previously applied to the controlled wheel returns to the reservoir 130 through the brake pipe between the controlled wheel and the second pressure control unit 112, the brake pipe between the second pressure control unit 112 and the first pressure control unit 111, and the brake pipe between the first pressure control unit 111 and the reservoir 130, to implement recycling of the fluid.

In this embodiment of this application, the master cylinder module 140 is also referred to as a hydraulic brake master valve. The master cylinder module 140 may be integrated into the first pressure control unit 111 as shown in FIG. 1(A) or FIG. 1(C), to further improve system integration, or may be independent of the first pressure control unit 111 as shown in FIG. 1(B) or FIG. 1(D), to implement flexible control of master cylinder fluid. In addition, the master cylinder module 140 may be further connected to another brake actuator in the first pressure control unit 111 through a brake pipe. In an implementation, the master cylinder module 140, the brake pedal 150, and the push rod 160 may be used to implement a pedal feeling of the driver. The structure shown in FIG. 1(B) is used as an example. The master cylinder module 140 is generally a piston cylinder, and the fluid flowing from the reservoir 130 is stored in the piston cylinder. When the driver steps the brake pedal 150, a stepping force drives the push rod 160 to push a piston rod in the master cylinder module 140 to move, so that the fluid in the piston cylinder is pressed into a brake pipe between the master cylinder module 140 and the first pressure control unit 111, and then flows into the first pressure control unit 111. In this way, the stepping force of the driver on the brake pedal 150 is converted into the power of the fluid, so that a feeling that the driver steps the pedal to implement braking can be maintained. Conversely, when the driver retracts the stepping force on the brake pedal 150, the brake pedal 150 drives the push rod 160 to move to place the piston rod in the master cylinder module 140 in position. Then, the fluid previously pressed into the brake pipe between the master cylinder module 140 and the first pressure control unit 111 and the fluid flowing into the first pressure control unit 111 return to the piston cylinder. In this way, a feeling that the driver cancels braking by canceling stepping the pedal is maintained.

For example, one or more solenoid valves may be further disposed in the brake pipe inside the first pressure control unit 111 that implements the pedal feeling of the driver, and statuses of the one or more solenoid valves may be controlled by either of the first ECU 121 and the redundant ECU 123. In this way, when the first ECU 121 fails, the redundant ECU 123 may be switched to in time to continue controlling the one or more solenoid valves in the brake pipe, so that the pedal feeling of the driver can remain unchanged as far as possible in an abnormal situation, to avoid the driver's panic caused by experience of braking abnormality, and improve the driver's comfort in driving the vehicle.

Further, for example, a motor may be generally disposed in the first pressure control unit 111 and the second pressure control unit 112, and rotation of the motor in the first pressure control unit 111 may be controlled by either of the first ECU 121 and the redundant ECU 123, or rotation of the motor in the second pressure control unit 112 may be controlled by either of the redundant ECU 123 and the redundant ECU 123. In this way, the structure shown in FIG. 1(B) is still used as an example. When braking (including but not limited to driver pedal braking, autonomous driving braking, driver assistance braking, or the like), if the first ECU 121 fails, the redundant ECU 123 may be switched to in time to continue controlling the motor in the first pressure control unit 111 to rotate in a specific direction, to enable the fluid flowing into the first pressure control unit 111 (which may be fluid pressed into the first pressure control unit 111 when the brake pedal is stepped, or fluid obtained from the reservoir 130 by the first pressure control unit 111 through another brake pipe, and is not specifically limited) to flow into the second pressure control unit 112 through the brake pipe between the first pressure control unit 111 and the second pressure control unit 112 under the action of the motor. Then, under the action of the second ECU 122 controlling the motor in the second pressure control unit 112 to rotate in a specific direction, fluid flowing into the second pressure control unit 112 is further applied to one or more controlled wheels connected to the second pressure control unit 112, to implement braking of the controlled wheels. Conversely, when the braking is canceled, the fluid previously applied to the controlled wheels may flow back to the second pressure control unit 112 under the action of the second ECU 122 controlling the motor in the second pressure control unit 112 to rotate in another direction. Further, in a process in which the redundant ECU 123 controls the motor in the first pressure control unit 111 to rotate in another direction, the fluid flowing into the second pressure control unit 112 returns to the first pressure control unit 111 through the brake pipe between the first pressure control unit 111 and the second pressure control unit 112, and then returns to the master cylinder module 140 or the reservoir 130.

Further, for example, one or more solenoid valves may be disposed in the brake pipe inside the first pressure control unit 111 that implements braking of the controlled wheel, and statuses of the one or more solenoid valves may be controlled by either of the first ECU 121 and the redundant ECU 123. In this way, when the first ECU 121 fails, the redundant ECU 123 may be switched to in time to continue controlling the one or more solenoid valves in the brake pipe, to maintain fluid flowing in the brake pipe during braking in an abnormal situation, or continue to maintain reverse fluid flowing in the brake pipe during braking cancellation, to implement redundant braking.

Further, for example, the second pressure control unit 112 may be connected to all of the controlled wheels, or may be connected to part of the controlled wheels. A vehicle is used as an example. Still refer to FIG. 1(A) to FIG. 1(D). In a possible example, it is assumed that the vehicle has four controlled wheels, namely, a left front wheel (left front wheel, LFW) (namely, a wheel corresponding to FL illustrated in FIG. 1(A) to FIG. 1(D)), a left rear wheel (left rear wheel, LRW) (namely, a wheel corresponding to RL illustrated in FIG. 1(A) to FIG. 1(D)), a right front wheel (right front wheel, RFW) (namely, a wheel corresponding to FR illustrated in FIG. 1(A) to FIG. 1(D)), and a right rear wheel (right rear wheel, RRW) (namely, a wheel corresponding to RR illustrated in FIG. 1(A) to FIG. 1(D)). In this case, the second pressure control unit 112 may be connected to the four controlled wheels of the vehicle through four brake pipes. In this way, during braking, the brake system can select one or more of the connected controlled wheels for braking based on a current braking function. For example, when a basic braking function is implemented, all the connected controlled wheels can be braked to decelerate the vehicle as soon as possible. When a traction brake system function is implemented, it is possible that only a currently slipping controlled wheel is braked, to reduce the slip and continue driving.

It should be noted that, in addition to the motor and/or the solenoid valve, the pressure control unit may further include a hydraulic valve and various sensors such as a pressure sensor, a flow sensor, and a motor position sensor. Correspondingly, the ECU may include a solenoid valve driver, a motor driver, various signal processors, control output interfaces, and the like. In this way, during braking, the ECU may further receive measurement or detection signals of the various sensors, determine information such as a current environment condition, a driver input, and a brake system status based on these measurement or detection signals, and then calculate and determine a subsequent braking manner, to change or continue controlling the braking characteristics of the pressure control unit.

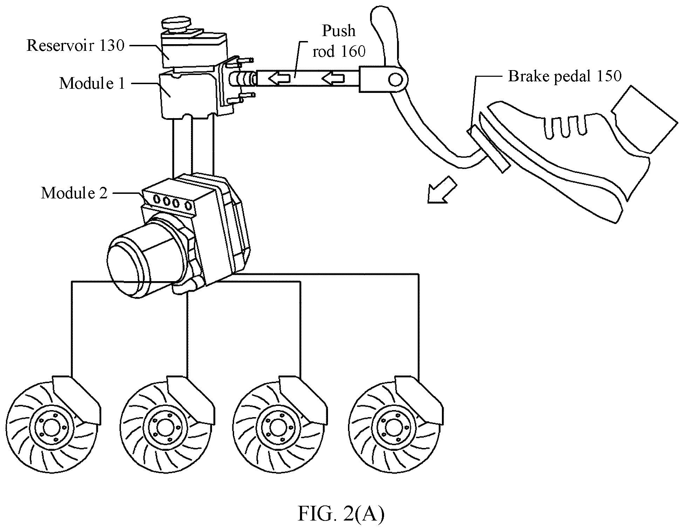

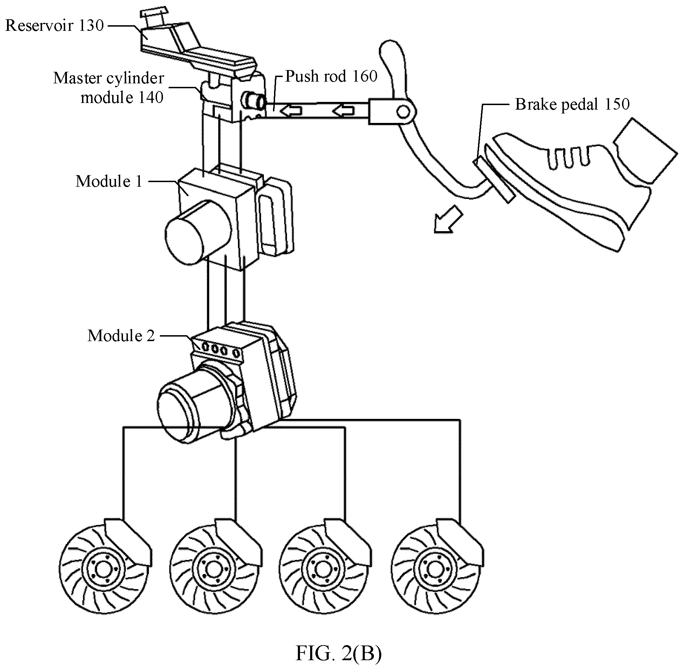

For example, FIG. 2(A) and FIG. 2(B) are diagrams of a possible product form according to an embodiment of this application.

FIG. 2(A) shows a diagram of a structure in which the master cylinder module 140 is integrated into the first pressure control unit 121. When the structure is the structure shown in FIG. 1(A), a module 1 may be an assembly module that integrates the first pressure control unit 111, the first ECU 121, and the redundant ECU 123, and the first pressure control unit 111 is integrated with the master cylinder module 140. A module 2 is an assembly module that integrates the second pressure control unit 112 and the second ECU 122. The module 1, the module 2, the reservoir 130, the push rod 160, and the brake pedal 150 constitute a brake system. When the structure is the structure shown in FIG. 1(C), the module 1 is an assembly module that integrates the first pressure control unit 112 and the first ECU 121, and the first pressure control unit 112 is integrated with the master cylinder module 140. The module 2 is an assembly module that integrates the second pressure control unit 111, the second ECU 122, and the redundant ECU 123. The module 1, the module 2, the reservoir 130, the push rod 160, and the brake pedal 150 constitute a brake system.

FIG. 2(B) shows a diagram of a structure in which the master cylinder module 140 is independent of the first pressure control unit 121. When the structure is the structure shown in FIG. 1(B), a module 1 is an assembly module that integrates the first pressure control unit 111, the first ECU 121, and the redundant ECU 123, and a module 2 is an assembly module that integrates the second pressure control unit 112 and the second ECU 122. The module 1, the module 2, the reservoir 130, the master cylinder module 140, the push rod, and the brake pedal 150 constitute a brake system. When the structure is the structure shown in FIG. 1(D), the module 1 is an assembly module that integrates the second pressure control unit 112 and the first ECU 121, and the module 2 is an assembly module that integrates the first pressure control unit 111, the second ECU 122, and the redundant ECU 123. The module 1, the module 2, the reservoir 130, the master cylinder module 140, the push rod, and the brake pedal 150 constitute a brake system.

It should be noted that the foregoing content is merely described by using an example in which a same brake actuator corresponds to two ECUs for control. In an actual operation, a same brake actuator may alternatively correspond to three or more ECUs. In this way, even if two ECUs corresponding to the brake actuator are faulty, the brake system can switch to the third ECU in time to continue driving the brake actuator, to further improve a redundant braking capability. In addition, the foregoing content is merely described by using an example in which the first pressure control unit 111 corresponds to two ECUs. In an actual operation, the second pressure control unit 112 may also correspond to at least two ECUs. In this way, when the second ECU 122 fails, another ECU in the second pressure control unit 112 is switched to, so that a braking capability of the second pressure control unit 112 can still be maintained. For a related implementation, directly refer to the foregoing content. This is not specifically limited in this application.

In Embodiment 1, at least two ECUs for control are disposed for a same brake actuator, so that when one part of ECUs fail, the other part of ECUs can be used to complete redundant control of the brake actuator. In this manner, redundant braking can be implemented by disposing an additional ECU, without additionally disposing a new pressure control unit and a corresponding ECU. This helps reduce complexity of adding redundancy backup to the brake system and further helps reduce difficulty and costs of installation and arrangement of the vehicle. In addition, at least two pressure control units in Embodiment 1 can implement at least dual redundant braking, and a same brake actuator in a same pressure control unit is controlled by using at least two ECUs, which is equivalent to further implementing at least triple redundant braking on the basis of the at least dual redundant braking. The at least triple redundant braking can be adapted to autonomous driving systems of L2 to L4 and even a higher level. It can be learned that, in Embodiment 1, redundant multiplicities of a vehicle with at least dual redundant braking can be increased by disposing as few components as possible. This helps further improve a redundant braking capability of the brake system on the basis of saving costs and reducing complexity of a vehicle layout.

In this embodiment of this application, the first pressure control unit 111 and the second pressure control unit 112 may separately complete a braking function of the brake system, or may cooperate to complete a braking function of the brake system, and a braking function that can be completed by the first pressure control unit 111 may be the same as or different from a braking function that can be completed by the second pressure control unit 112. This is not specifically limited. The braking function of the brake system may include but is not limited to one or more of the following functions:

Basic braking function (basic braking function, BBF): The BBF is applicable to a OneBox brake system. The OneBox brake system is a brake system that integrates all braking functions into a single mechanical assembly. In the brake system, a vacuum booster is canceled. Instead, a moving piston cylinder is used for pressurization in response to a braking intention of a driver.

Anti-lock brake system (anti-lock brake system, ABS): Generally, when a vehicle is braking in an emergency or on an icy and snowy road, wheels of the vehicle tend to lock, which increases a braking distance of the vehicle and even makes the vehicle lose a steering target. The ABS can appropriately reduce, based on a wheel lock situation, a braking force at the wheels that tend to lock, to implement an anti-lock function.

Traction control system (traction control system, TCS): Generally, when the vehicle is running on an icy and snowy road or a wheel of the vehicle falls into a muddy road, the wheel slips, and the vehicle cannot run normally. Based on a wheel slip situation, the TCS can appropriately reduce a driving force or apply a braking force to the slipping wheel, to reduce the wheel slip and ensure normal running of the vehicle.

Electronic stability control (electronic stability control, ESC) system: The ESC is also referred to as an electronic stability program (electronic stability program, ESP), and may receive vehicle information collected by a sensor, determine whether the vehicle is unstable based on the vehicle information, and when determining that the vehicle tends to be unstable, apply a braking force to one wheel or some wheels to obtain a yaw moment that stabilizes the vehicle, to stabilize the vehicle.

Autonomous emergency braking (autonomous emergency braking, AEB): The AEB can detect a distance between the vehicle and a vehicle or an obstacle in front of the vehicle when the vehicle is running, compare the detected distance with an alarm distance and a safety distance (where the alarm distance is greater than the safety distance), provide an alarm prompt when the detected distance is less than the alarm distance, and automatically brake the vehicle when the detected distance is less than the safety distance. In this way, even if the driver has not had time to step the brake pedal, driving safety can be ensured through AEB autonomous braking.

Adaptive cruise control (adaptive cruise control, ACC): The ACC is a system that is for keeping a reasonable distance from a front vehicle and that is added to a vehicle with cruise control at a specified speed, usually has a cruise control function, a follow cruise function, a corner cruise function, a driving mode selection function, a smart cornering function, an intelligent speed limit function, and the like, and can control a vehicle speed through a brake system and a propulsion system to implement the foregoing functions.

Value added function (value added function, VAF): The VAF is a general name for other braking functions except the foregoing braking functions. Main functions include the following: responding to control requests of an ADS/ADAS, providing control interfaces of ABP, AEB, APA, AWB, CDD Stop&Go, VLC, and the like, to meet control requirements of the ADS/ADAS for vehicle driving and braking, and ensuring driving comfort and safety of the driver, which mainly includes AVH, BDW, HAZ, HBA, HDC, HFC, HRB, HSA, and the like, and is suitable for uphill, downhill, long-term braking, and brake disc overheating.

For ease of understanding, an example in which the redundant ECU 123 is connected to at least one brake actuator in only one pressure control unit is used below to describe applications of the brake system and the foregoing braking function in this embodiment of this application by using a specific example.

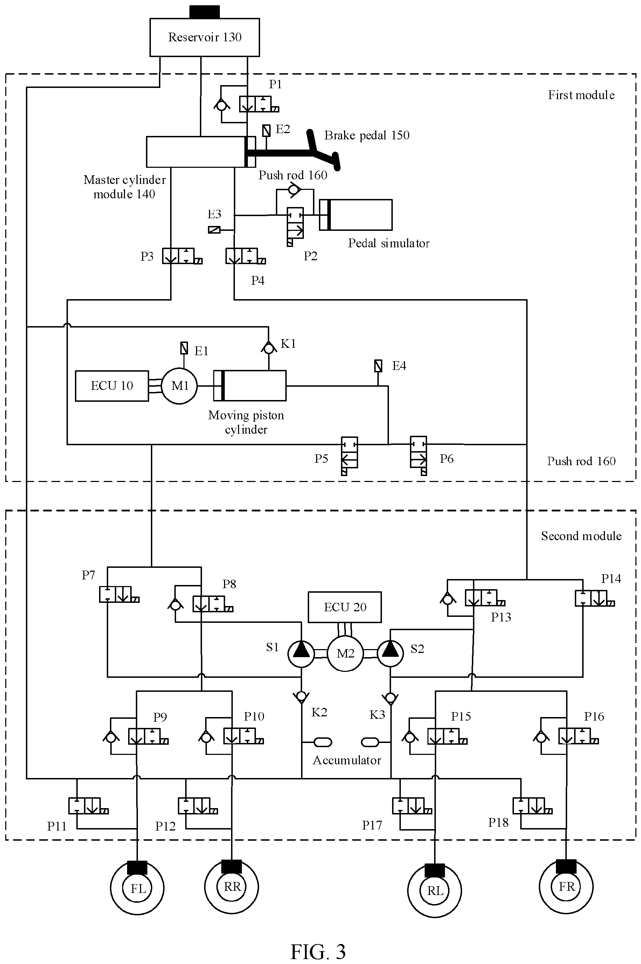

FIG. 3 is an example of a schematic diagram of a specific structure of a brake system before the foregoing redundant braking solution is applied according to an embodiment of this application. As shown in FIG. 3, the brake system includes the reservoir 130, a first module, and a second module. The reservoir 130 and the first module, and the first module and the second module are connected through three brake pipes. The first module integrates the following components: an ECU 10, a motor M1, a motor position sensor E1, a solenoid valve P1, the master cylinder module 140, a push rod, the brake pedal 150, a pedal travel sensor E2, a solenoid valve P2, a pedal simulator, a solenoid valve P3, a master cylinder pressure sensor E3, a solenoid valve P4, a moving piston cylinder, a one-way valve K1, a brake circuit pressure sensor E4, a solenoid valve P5, and a solenoid valve P6. Components in the first module are connected through a brake pipe shown in FIG. 3. The ECU 10 in the first module is connected to all other components in the first module, is configured to obtain status information collected by each sensor in the first module, and can control the motor M1 and all the solenoid valves P1 to P6 in the first module. A main function of the first module is a pressurization function, and the first module can implement VAF functions such as a BBF and AEB of a vehicle. Accordingly, the second module integrates the following components: an ECU 20, a motor M2, a one-way pump S1, a one-way valve K2, an accumulator, a solenoid valve P7, a solenoid valve P8, a solenoid valve P9, a solenoid valve P10, a solenoid valve P11, a solenoid valve P12, a one-way pump S2, a one-way valve K3, a solenoid valve P13, a solenoid valve P14, a solenoid valve P15, a solenoid valve P16, a solenoid valve P17, and a solenoid valve P18. Components in the second module are connected through a brake pipe shown in FIG. 3. The ECU 20 in the second module is connected to all other components in the second module, and is configured to control the motor M2 and all the solenoid valves P7 to P18 in the second module. A main function of the second module is wheel cylinder pressure control, and the second module can implement functions such as ESC, an ABS, and a TCS of the vehicle. In addition, although not shown in FIG. 3, a fluid level sensor may be further integrated into the reservoir 130, and various pressure sensors may be further integrated into the second module. The ECU 10 and the ECU 20 perform communication in a CAN or another communication manner. This is not specifically limited in this embodiment of this application.

Further, when the redundant braking solution in this embodiment of this application is applied to the brake system shown in FIG. 3, a redundant ECU 30 may be designed. The redundant ECU 30 may be applied in any one of the following manners, and may communicate with the ECU 10 and the ECU 20 in a CAN or another communication manner to obtain a redundant braking solution.

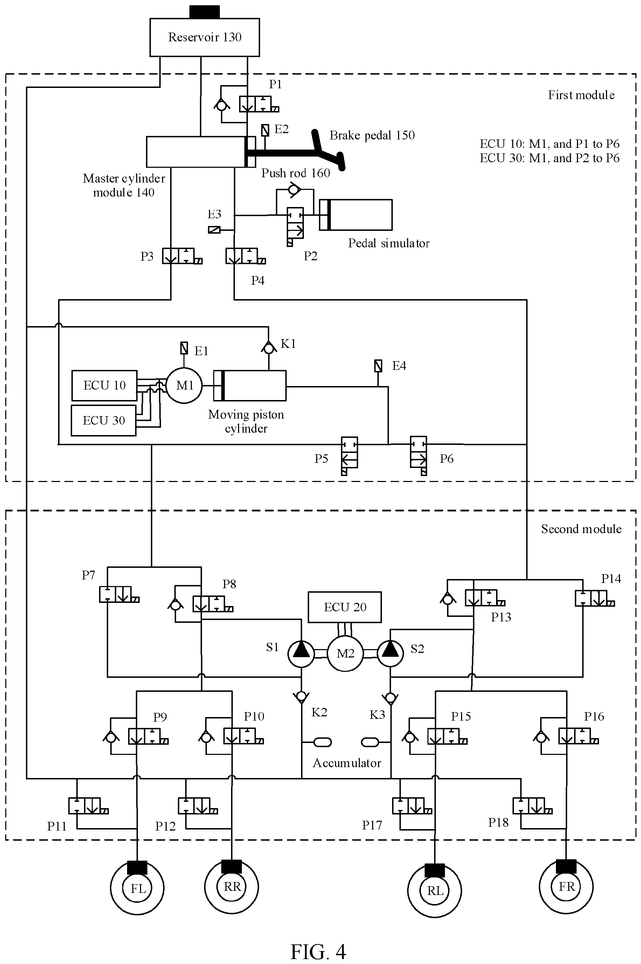

In a possible application manner, FIG. 4 is a schematic diagram of a specific structure of a brake system after a redundant braking solution is applied according to an embodiment of this application. As shown in FIG. 4, in this example, the redundant ECU 30 may be applied to the first module, and in the first module after the application, the redundant ECU 30 and the original ECU 10 are jointly connected to the motor M1 and the solenoid valves P2 to P6. For a connection manner, refer to Embodiment 3. Details are not described herein. In addition, the solenoid valve P1 in the first module is used for quality inspection, and is not closely related to a control process of the braking function. Therefore, the redundant ECU 30 may not be connected to the solenoid valve P1, to reduce complexity of joint connection.

In the brake system shown in FIG. 4, both the redundant ECU 30 and the original ECU 10 are connected to the solenoid valves P2, P3 and P4. Therefore, when the ECU 10 fails, if the driver steps the pedal, although the ECU 10 can no longer implement the pedal feeling of the driver, the redundant ECU 30 can still obtain pedal stepping information detected by the pedal travel sensor E2, and control, based on the pedal stepping information, the solenoid valve P2 to be connected and the solenoid valve P3 and the solenoid valve P4 to be disconnected, so that fluid in the master cylinder module 140 can flow smoothly into the pedal simulator as the driver steps, to maintain a pedal braking feeling of the driver, and ensure consistency of the comfort and pedal feeling of the driver.

In the brake system shown in FIG. 4, both the redundant ECU 30 and the original ECU 10 are connected to the solenoid valves P5 and P6. Therefore, when the ECU 10 fails, if the controlled wheel needs to be actively pressurized, although the ECU 10 can no longer transmit fluid to the second module by controlling the motor M1 and the solenoid valves P5 and P6, the redundant ECU 30 can still control the motor M1 to rotate in a first direction, calibrate a rotation direction and a rotation speed of the motor M1 based on motor position information collected by the motor position sensor E1, and control the solenoid valve P5 and the solenoid valve P6 to be connected. In this way, the rotation of the motor M1 in the first direction can push the piston rod in the moving piston cylinder to move toward the right side as shown in the figure, so that fluid in the moving piston cylinder (where the fluid flows into the moving piston cylinder through a brake pipe formed by the reservoir 130 and the one-way valve K1) is pushed into the solenoid valve P5 and the solenoid valve P6, and then flows into two brake pipes between the first module and the second module through the connected solenoid valve P5 and solenoid valve P6. Then, the ECU 20 controls the motor M2 and the solenoid valves P7 to P18 in the second module, so that the fluid in the two brake pipes is applied to the controlled wheel to implement active pressurization of the controlled wheel.

In addition, the moving piston cylinder in the brake system shown in FIG. 4 is a one-way moving piston cylinder. Therefore, after determining, based on the motor position information collected by the motor position sensor E1, that the piston rod in the moving piston cylinder is pushed to the rightmost side of the figure, the redundant ECU 30 needs to control the motor M1 to rotate in a second direction, and control both the solenoid valve P5 and the solenoid valve P6 to be disconnected. In this way, the rotation of the motor M1 in the second direction can drive the piston rod to move toward the left side shown in the figure, so that the fluid in the reservoir 130 flows into the moving piston cylinder through the brake pipe in which the one-way valve K1 is located. In addition, during moving, no new fluid is added into the controlled wheel. Therefore, a pressurization process of the controlled wheel is interrupted until the moving piston cylinder is filled with fluid again when the piston rod moves to the leftmost side. Then, the redundant ECU 30 controls the motor M1 and the solenoid valves P5 and P6 through the above process to continue to pressurize the controlled wheel.

It is assumed that the ECU 10 is an ECU that takes effect by default in the first module. In this case, the brake system shown in FIG. 4 may implement any one of the following working modes:

Working mode 1: When neither the ECU 10 nor the ECU 20 fails, the ECU 10 and the ECU 20 cooperate to implement a braking function of the vehicle. Specifically, the ECU 10 may control the motor M1 and the solenoid valves P2 to P6 in the first module, to maintain the pedal feeling of the driver or implement active pressurization of the controlled wheel, and the ECU 20 may control the motor M2 and the solenoid valves P7 to P18 in the second module, to implement independent control of wheel cylinder pressure. In this mode, the brake system can have full functions such as a BBF, an ABS, a TCS, ESC, and a VAF. In addition, the ECU 10 may further implement quality inspection on the brake system by controlling the solenoid valve P1.

Working mode 2: When the ECU 10 fails but the ECU 30 and the ECU 20 do not fail, the ECU 30 and the ECU 20 cooperate to implement a braking function of the vehicle. Specifically, the ECU 30 may control the motor M1 and the solenoid valves P2 to P6 in the first module, to maintain the pedal feeling of the driver or implement active pressurization of the controlled wheel, and the ECU 20 may control the motor M2 and the solenoid valves P7 to P18 in the second module, to implement independent control of wheel cylinder pressure. In this working mode, the brake system can still have full functions such as a BBF, an ABS, a TCS, ESC, and a VAF. However, because the ECU 30 is not connected to the solenoid valve P1, the brake system cannot implement quality inspection.

Working mode 3: When both the ECU 10 and the ECU 20 fail but the ECU 30 does not fail, the ECU 30 independently implements a braking function of the vehicle. The ECU 30 can control the motor M1 and the solenoid valves P2 to P6 in the first module to implement the active pressurization function. In this case, the brake system can still have VAF functions such as a BBF and partial AEB, and the VAF functions such as the BBF and the partial AEB can provide a deceleration of at least 0.6 g. The deceleration can be applied in most emergency braking scenarios. It can be learned that, although both the original ECU 10 and the ECU 20 in the brake system fail, and consequently, the brake system cannot provide a maximum deceleration, the redundant ECU 30 can also ensure emergency braking requirements of the vehicle in various scenarios.

It should be understood that, when both the ECU 30 and the ECU 20 fail but the ECU 10 does not fail, the ECU 10 may independently implement the braking function of the vehicle. A specific implementation of this solution is the same as that of Working mode 3. Details are not described herein again.

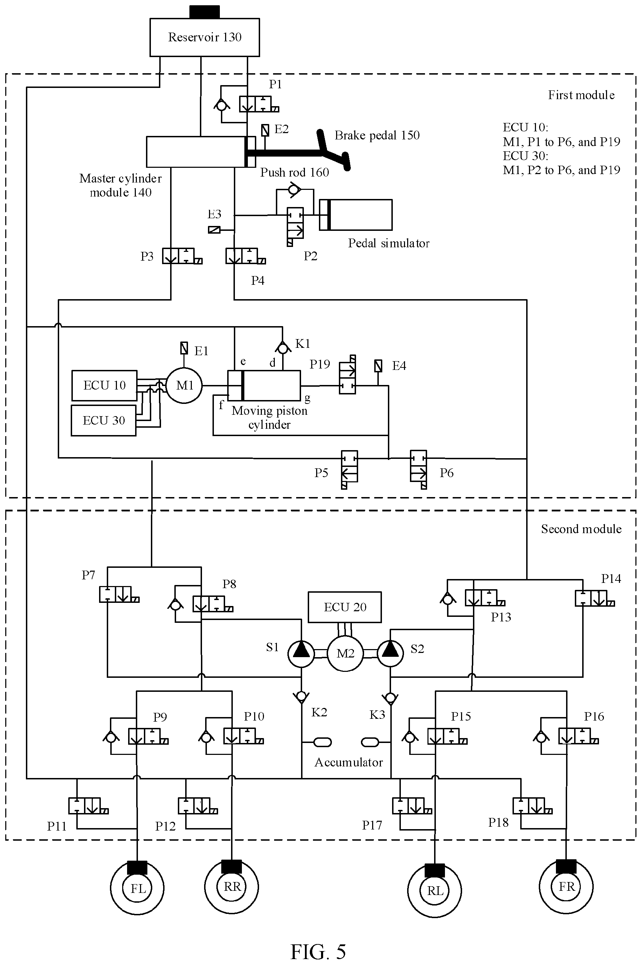

In another possible application manner, FIG. 5 is a schematic diagram of a specific structure of another brake system after a redundant braking solution is applied according to an embodiment of this application. In this example, the redundant ECU 30 is deployed with reference to the manner shown in FIG. 4, and therefore can implement the same redundant braking function as in FIG. 4. A difference between the two brake systems is as follows.

The moving piston cylinder in FIG. 4 is a one-way moving piston cylinder, and the moving piston cylinder in FIG. 5 is a two-way moving piston cylinder. Refer to FIG. 5. The first module further includes a solenoid valve P19. The two-way moving piston cylinder is connected to the solenoid valve P19 through a brake pipe at a position g in the figure, and then to the solenoid valve P5 and the solenoid valve P6 through a brake pipe. In addition, the two-way moving piston cylinder is connected to the one-way valve K1 and the reservoir 130 through a brake pipe at a position d shown in the figure, is also connected to the reservoir 130 through a brake pipe at a position e shown in the figure, and is connected to the solenoid valve P5 and the solenoid valve P6 through a brake pipe at a position f shown in the figure. In the brake system shown in FIG. 5, both the original ECU 10 and the redundant ECU 30 in the first module are connected to the solenoid valve P19. In this way, when it is determined that the controlled wheel is to be actively pressurized, the redundant ECU 30 controls the motor M1 to rotate in the first direction, and controls the solenoid valve P19, the solenoid valve P5, and the solenoid valve P6 to be connected. The rotation of the motor M1 in the first direction drives the piston rod to move toward the right side shown in the figure. The movement pushes the fluid in the right side of the two-way moving piston cylinder into the solenoid valve P19 through the position g. Then, the fluid enters the solenoid valve P5 and the solenoid valve P6 through the connected solenoid valve 19, and then flows into the two brake pipes between the first module and the second module through the connected solenoid valve P5 and solenoid valve P6. In addition, the fluid in the reservoir 130 flows into the left side of the two-way moving piston cylinder through the brake pipe at the position e. In addition, after determining, based on the motor position information collected by the motor position sensor E1, that the piston rod in the two-way moving piston cylinder is pushed to the rightmost side of the figure, the redundant ECU 30 controls the motor M1 to rotate in the second direction, and controls the solenoid valve P19, the solenoid valve P5, and the solenoid valve P6 to be disconnected. In this way, the rotation of the motor M1 in the second direction drives the piston rod to move toward the left side shown in the figure. The movement causes the fluid in the reservoir 130 to flow into the right side of the two-way moving piston cylinder at the position through the brake pipe in which the one-way valve K1 is located. In addition, the fluid in the left side of the two-way moving piston cylinder flows out at the position f shown in the figure, then flows into the solenoid valve P5 and solenoid valve P6 through the brake pipe, and then flows into the two brake pipes between the first module and the second module through the connected solenoid valve 5 and solenoid valve P6. It can be learned that, although the solenoid valve P19 is additionally disposed in the solution of using the two-way moving piston cylinder compared with that in the solution of using the one-way moving piston cylinder, in the solution of using the two-way moving piston cylinder, regardless of whether the piston rod moves to the left side or to the right side, fluid can be continuously added to the controlled wheel. This helps implement two-way continuous pressure building of the controlled wheel, and effectively improves a pressure building speed of the controlled wheel.

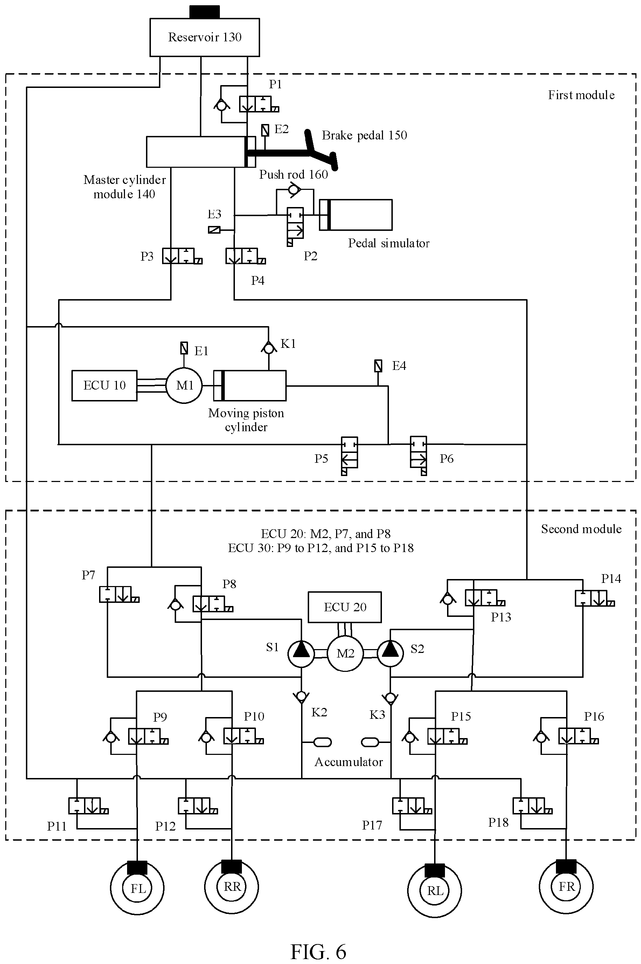

In still another possible application manner, FIG. 6 is a schematic diagram of a specific structure of still another brake system after a redundant braking solution is applied according to an embodiment of this application. As shown in FIG. 6, in this example, the redundant ECU 30 may be applied to the second module, and in the second module after the application, the redundant ECU 30 and the original ECU 20 are jointly connected to the solenoid valves P9 to P12 and the solenoid valves P15 to P18. For a connection manner, refer to Embodiment 3. Details are not described herein. In addition, the solenoid valve P7 and the solenoid valve P14 in the second module are normally open solenoid valves, and the solenoid valve P8 and the solenoid valve P13 are normally closed solenoid valves. That is, when the solenoid valves P7, P8, P13, and P14 are not energized, the fluid transferred from the first module can also be successfully transferred to the solenoid valves P9, P10, P15, and P16. Therefore, the control of the solenoid valves P7, P8, P13, and P14 is less dependent on the braking function. Therefore, the redundant ECU 30 may not be connected to the solenoid valves P7, P8, P13, and P14, to reduce complexity of joint connection.

In the brake system shown in FIG. 6, it is assumed that the ECU 10 in the first module does not fail, so that the fluid can flow into the solenoid valve P8 and the solenoid valve P13 in the second module through the first module. Because both the redundant ECU 30 and the original ECU 20 are connected to the solenoid valves P9, P10, P15, and P16, when the ECU 20 fails, if the wheel cylinder pressure is to be independently controlled, although the ECU 20 can no longer perform control, the redundant ECU 30 can still control opening degrees of the solenoid valve P9, the solenoid valve P10, the solenoid valve P15, and the solenoid valve P16. In this way, a solenoid valve connected to a to-be-brake wheel to which high pressure needs to be applied has a large opening degree, so that fluid flowing into the solenoid valve enters the controlled wheel as much as possible through the solenoid valve, to implement high-pressure braking of the controlled wheel, and a solenoid valve connected to a controlled wheel to which low pressure needs to be applied has a small opening degree, so that fluid flowing into the solenoid valve enters the controlled wheel as little as possible through the solenoid valve, to implement low-pressure braking of the controlled wheel.

In the brake system shown in FIG. 6, it is assumed that the ECU 10 in the first module fails, and consequently, the fluid cannot flow into the solenoid valve P8 and the solenoid valve P13 in the second module through the first module. Because both the redundant ECU 30 and the original ECU 20 are connected to the solenoid valves P11, P12, P17, and P18, when the ECU 20 fails, if the wheel cylinder pressure is to be independently controlled, although the ECU 20 can no longer perform control, the redundant ECU 30 can still control the connection and disconnection of the solenoid valves P11, P12, P17, and P18. In this way, a solenoid valve connected to a to-be-brake wheel requiring pressure braking is connected, so that the fluid in the reservoir 130 can enter the controlled wheel through the connected solenoid valve, to implement pressure-building braking of the controlled wheel, and a solenoid valve connected to a controlled wheel that does not need to be pressed is disconnected, so that the fluid in the reservoir 130 cannot enter the controlled wheel through the disconnected solenoid valve. It should be understood that the redundant ECU 30 can further control opening degrees of the solenoid valves P11, P12, P17, and P18, to control pressure on the controlled wheels FL, RR, RL, and FR. For a specific implementation, refer to the foregoing content. Details are not described herein again.

For example, both the redundant ECU 30 and the original ECU 20 may be connected to the motor M2 in the second module. In this way, when the ECU 20 fails, if both the reservoir 130 and the ECU 10 in the first module are faulty, and the fluid cannot enter the second module through the reservoir 130 and cannot enter the second module through the first module, the redundant ECU 30 can still control the rotation of the motor M2 to drive the one-way pump S1 and the one-way pump S2 to work. Then, the one-way pump S1 and the one-way pump S2 suck fluid stored in the accumulator in the second module into the solenoid valves P9, P10, P15, and P16 through the brake pipe and the one-way valve K2. The redundant ECU 30 controls opening degrees of the solenoid valves P9, P10, P15, and P16, to implement independent pressurization control of each controlled wheel.

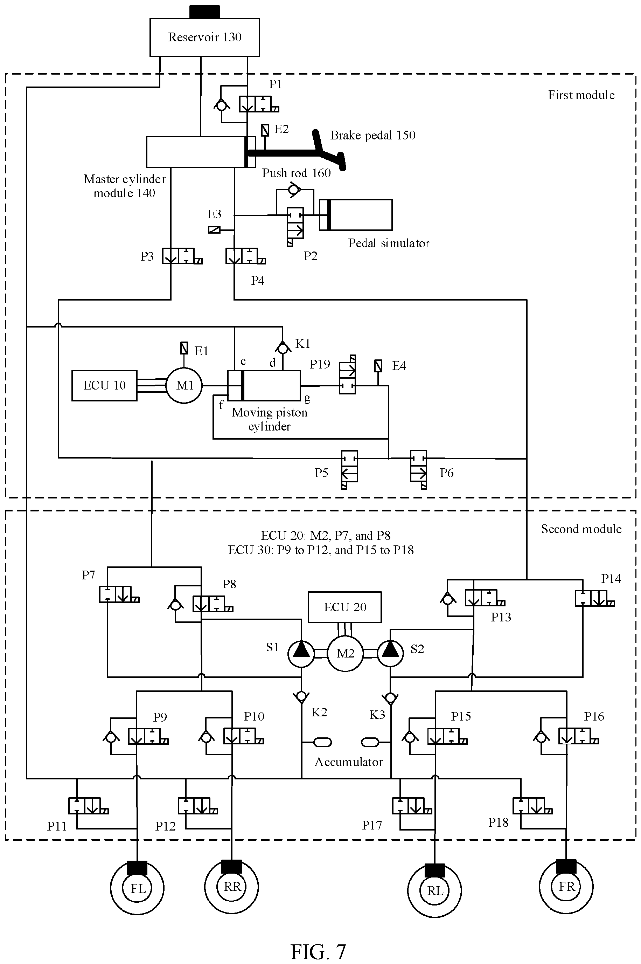

In yet another possible application manner, FIG. 7 is a schematic diagram of a specific structure of yet another brake system after a redundant braking solution is applied according to an embodiment of this application. In this example, the redundant ECU 30 is deployed with reference to the manner shown in FIG. 6, and therefore can implement the same redundant braking function as in FIG. 6. A difference between the two brake systems lies in that the moving piston cylinder in FIG. 6 is a one-way moving piston cylinder, and the moving piston cylinder in FIG. 7 is a two-way moving piston cylinder. Therefore, the application solution in FIG. 6 can save one solenoid valve and can simplify structural complexity of the moving piston cylinder. This helps save costs of the redundant design. The application solution in FIG. 7 can implement two-way continuous pressure building on the controlled wheel. This helps improve the pressure building speed. For a difference between the two-way moving piston cylinder and the one-way moving piston cylinder, directly refer to FIG. 4 and FIG. 5. Details are not described herein again.

It should be noted that the foregoing content is merely examples of several possible application manners of the redundant ECU. In this embodiment of this application, the redundant ECU may be further applied in another manner. For example, when the redundant ECU 30 is applied to the second module, both the redundant ECU 30 and the original ECU 20 may also be connected to the motor M2 and all the solenoid valves P7 to P18 in the second module, to further implement redundancy of all braking functions that can be implemented by the second module. There are many possible application manners, which are not listed herein.

In addition, the redundant braking solution in this embodiment of this application may be further compatible with any existing brake system, including but not limited to a brake system that does not have a redundant braking function, a brake system that has dual redundant braking functions, and a brake system that has three or more redundant braking functions. For example, the redundant braking solution may be applied to an IPB+RBU configuration, an iBooster+ESC configuration, or the like. For related implementation content, refer to Embodiment 1. This is not specifically described in this application.

An embodiment of this application further provides an integrated apparatus. The integrated apparatus may integrate at least two ECUs on one or more printed circuit boards (printed circuit boards, PCBs), and can implement a high integration degree. The integrated apparatus may be applied to a terminal device. The terminal device may be an intelligent device, including but not limited to: a smart home device, for example, a television, a floor-sweeping robot, a smart desk lamp, a speaker system, an intelligent light system, an electric appliance control system, home background music, a home theater system, an intercom system, or video surveillance; an intelligent transportation device, for example, an automobile, a ship, an uncrewed aerial vehicle, a train, a van, or a truck; and an intelligent manufacturing device, for example, a robot, an industrial device, intelligent logistics, or an intelligent factory. Alternatively, the terminal device may be a computer device, for example, a desktop computer, a personal computer, or a server. It should be further understood that the terminal device may alternatively be a portable electronic device, for example, a mobile phone, a tablet computer, a palmtop computer, a headset, a stereo, a wearable device (for example, a smartwatch), a vehicle-mounted device, a virtual reality device, or an augmented reality device. An example of the portable electronic device includes but is not limited to a portable electronic device using iOS^{®}, Android^{®}, Microsoft^{®}, Harmony^{®}, or another operating system. The portable electronic device may alternatively be, for example, a laptop computer (Laptop) with a touch-sensitive surface (for example, a touch panel).

The following describes in detail a possible structure of the integrated apparatus by using Embodiment 2.

### Embodiment 2

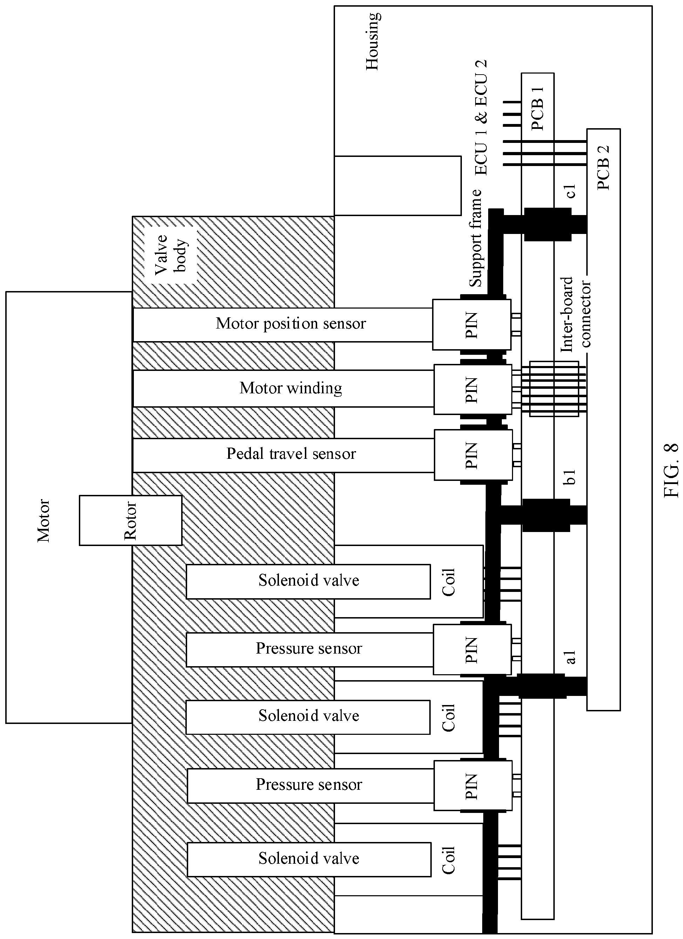

FIG. 8 is an example of a schematic diagram of a structure of an integrated apparatus according to an embodiment of this application. As shown in FIG. 8, in this example, the integrated apparatus includes an ECU 1 (namely, a first ECU), an ECU 2 (namely, a second ECU), a PCB 1 (namely, a first PCB), a PCB (namely, a second PCB), and an inter-board connector. A first-type component whose power is greater than a power threshold in the ECU 1 and the ECU 2 is disposed on the PCB 1, and a second-type component whose power is not greater than the power threshold in the ECU 1 and the ECU 2 is disposed on the PCB 2. In addition, the first-type component in either ECU on the PCB 1 is further connected to the second-type component in the ECU on the PCB 2 through the inter-board connector, to be specific, the first-type component in the ECU 1 on the PCB 1 is connected to the second-type component in the ECU 1 on the PCB 2 through the inter-board connector. The first-type component in the ECU 2 on the PCB 1 is connected to the second-type component in the ECU 2 on the PCB 2 through the inter-board connector. In this way, a high-power component is integrated on one PCB and a low-power component is integrated on another PCB, so that classified management of the high-power component and the low-power component can be implemented, and a quantity of components carried on each PCB can be reduced through distributed deployment of all components in the two ECUs. In this way, a width area of each PCB is reduced, and a load bearing capacity of each PCB is reduced.

For ease of understanding, in the following, the first-type component is referred to as the high-power component, and the second-type component is referred to as the low-power component. In other words, the "high-power component" in the following may be directly replaced with the "first-type component", and the "low-power component" in the following may be directly replaced with the "second-type component".

For example, the low-power component usually has a smaller size and a smaller weight than the high-power component. Therefore, a width area of the PCB 2 on which the low-power component is deployed may be set to be smaller than a width area of the PCB 1 on which the high-power component is deployed. In addition, a load bearing capacity of the PCB 2 on which the low-power component is deployed is also lower than that of the PCB 1 on which the high-power component is deployed. In this way, the width area of the PCB 2 is further reduced, so that surface utilization of the PCB 2 can be improved on the basis that the PCB 2 is used to carry the low-power component, and integration of the integrated apparatus can be further improved.

For example, as shown in FIG. 8, the integrated apparatus may further include a support frame, and the PCB 1 and the PCB 2 are fixedly connected through the support frame, to ensure that relative positions of the PCB 1 and the PCB 2 remain unchanged. There are many manners in which the PCB 1 and the PCB 2 are fixedly connected through the support frame. For example, as shown in FIG. 8, the support frame is located at a top layer, the PCB 2 is located at a bottom layer, the PCB 1 is located between the support frame and the PCB 2, an opening is disposed on the PCB 1, and the support frame passes through the opening and is fixedly connected to the PCB 1 and the PCB 2. According to the deployment solution in this example, no other board may be placed on a lower side of the PCB 2 carrying the low-power component, and this facilitates heat dissipation of the PCB 2. Certainly, in another example, if heat dissipation is not considered, the support frame may alternatively be located at the last layer, or may be located at a layer between the PCB 1 and the PCB 2, or the support frame may be fixedly connected to the PCB 1 and the PCB 2 through glue pasting or the like, and the opening does not need to be disposed on the PCB 1, to further increase an effective usable area of the PCB 1.

For example, when the support frame is fixedly connected to the PCB 1 and the PCB 2 through the opening, the opening may be located at a position a1, a position b1, and a position c1 shown in FIG. 8, so that stability of the fixed connection to the PCB 1 and the PCB 2 is improved by equalizing opening positions.

For example, as shown in FIG. 8, the integrated apparatus may further include a housing. The support frame, the PCB 1, and the PCB 2 are placed in the housing, and at least one end of the support frame is fastened to the housing. In this example, because the low-power component generates little heat, the PCB 2 integrated with the low-power component is close to the housing. This further helps increase a heat dissipation area of the PCB 2 by using the housing, and further improves a heat dissipation effect of the PCB 2.

For example, as shown in FIG. 8, the high-power component may be disposed on a surface that is of the PCB 1 and that faces the support frame, and the low-power component may be disposed on a surface that is of the PCB 2 and that faces the PCB 1. In this way, the high-power component and the low-power component are deployed on surfaces of the PCB 1 and the PCB 2 in the same direction. This can further help dispose a cable between the high-power component and the low-power component, and reduce complexity of implementing integration.

For example, as shown in FIG. 8, the integrated apparatus may further include a valve body. The valve body is also referred to as a hybrid combining unit (hybrid combining unit, HCU), and is configured to accommodate a controlled component. The controlled component may include one or more of a motor, a solenoid valve, and a sensor as shown in FIG. 8, and certainly may further include another peripheral component. This is not specifically limited. In this case, a high-power component in each ECU may include a driver of a controlled component, a low-power component in each ECU may include a microcontroller, and a microcontroller in the ECU 1 and a microcontroller in the ECU 2 may be connected through a cable on the PCB 2, to implement communication between the ECU 1 and the ECU 2, and further implement joint redundant control of the same controlled component by the ECU 1 and the ECU 2.

For example, as shown in FIG. 8, when the controlled component includes the motor, the solenoid valve, and the sensor, the first-type component in each ECU may include a driver of the motor and a driver of the solenoid valve, and the second-type component in each ECU may include the microcontroller and an interface of the sensor. In this case, the microcontroller in each ECU on the PCB 2 may be connected to the interface of the sensor in the ECU on the PCB 2 through the cable on the PCB 2, and connected to the driver of the motor and the driver of the solenoid valve in the ECU on the PCB 1 through the inter-board connector. In addition, the microcontroller in the ECU 1 on the PCB 2 may be further connected to the microcontroller in the ECU 2 on the PCB 2 through the cable on the PCB 2. The sensor may include a motor position sensor, a pressure sensor, and a pedal travel sensor shown in FIG. 8, and certainly may further include another sensor. This is not specifically limited. In this example, the motor and the solenoid valve in the valve body may be connected to the driver of the motor and the driver of the solenoid valve of each ECU on the PCB 1 through pin plugging or through an interface. The sensor in the valve body may be connected to the interface of the sensor in each ECU on the PCB 2 through a cable in the inter-board connector after being connected to the inter-board connector through pin plugging. In addition, the support frame may be disposed on a lower side of a point connection interface or a plug connection interface of the motor, the solenoid valve, and the sensor, to simultaneously support the controlled component while supporting the PCB 1 and the PCB 2, and maintain stability of point connection or plug connection between the controlled component and the component on the PCB.

Further, for example, when the joint redundant control of the ECU 1 and the ECU 2 is implemented, collected information of the sensor is synchronously transmitted to the interface of the sensor in the ECU 1 and the interface of the sensor in the ECU 2 on the PCB 2 through the inter-board connector. It is assumed that the ECU currently used for control is the ECU 1. In this case, collected information received by the interface of the sensor in the ECU 1 on the PCB 2 is further transmitted to the microcontroller in the ECU 1 through the cable on the PCB 2, so that the microcontroller in the ECU 1 determines a next control manner based on the collected information. It is assumed that the next control manner is driving the motor to rotate. In this case, the microcontroller in the ECU 1 on the PCB 2 may further send a corresponding control message to the driver of the motor in the ECU 1 on the PCB 1 through the inter-board connector. Then, the driver of the motor transmits the corresponding control message to a pin corresponding to the motor through a plug-in or point-connected cable, to drive the motor to rotate. Similarly, if the next control manner is driving the solenoid valve to work, the microcontroller in the ECU 1 on the PCB 2 may further send a corresponding control message to the driver of the solenoid valve in the ECU 1 on the PCB 1 through the inter-board connector. Then, the driver of the solenoid valve transmits the corresponding control message to a pin corresponding to the solenoid valve through a plug-in or point-connected cable, to drive the solenoid valve to be connected or disconnected. In addition, because the ECU 2 is not currently used for control, even if the collected information of the sensor can reach the interface of the sensor in the ECU 2, the ECU 2 does not receive the collected information, and further does not perform a control operation by using the sensor information.

For example, it is considered that the microcontroller in the ECU 1 and the microcontroller in the ECU 2 further need to communicate with components other than the integrated apparatus. Therefore, a first connector and a second connector may be disposed on the PCB 2. The microcontroller in the ECU 1 is connected to another communication unit other than the integrated apparatus through the first connector, and the microcontroller in the ECU 2 is connected to another communication unit other than the integrated apparatus through the second connector. External presentation of the first connector and the second connector may be an interface, and the interface is not limited to a USB interface, a Type-C interface, or the like.

In the integrated apparatus shown in FIG. 8, a high-power component is integrated on one PCB and a low-power component is integrated on another PCB, so that classified management of the high-power component and the low-power component can be implemented, and a quantity of components carried on each PCB can be reduced through distributed deployment of all components in the two ECUs. In this way, a width area of each PCB is reduced, and a load bearing capacity of each PCB is reduced. In addition, the PCB 2 on which the low-power component is deployed is close to the housing. This further helps increase a heat dissipation area of the PCB 2 by using the housing, and further improves a heat dissipation effect of the PCB 2.

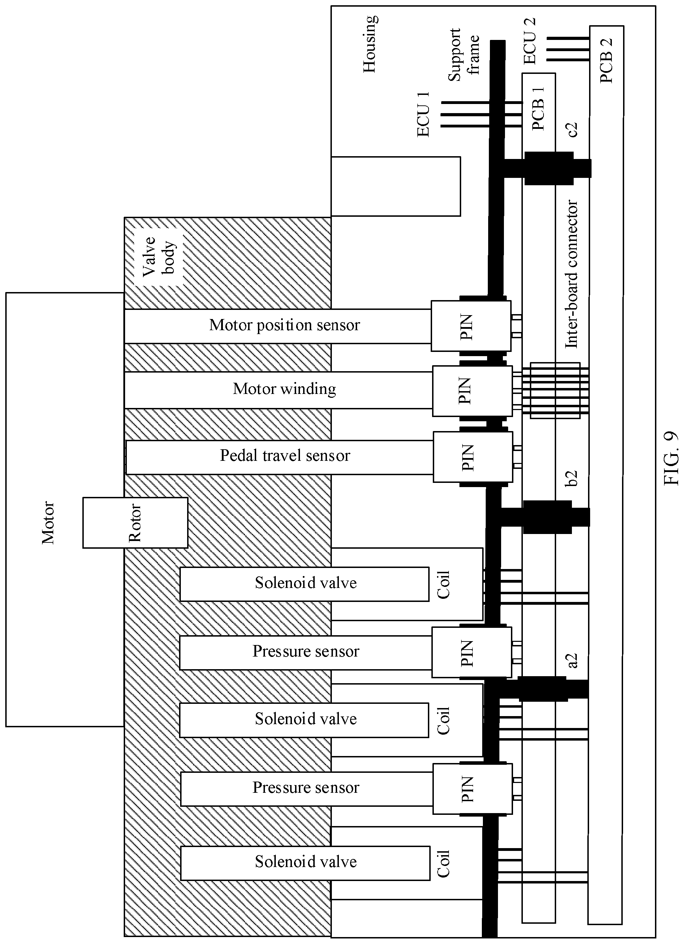

FIG. 9 is an example of a schematic diagram of a structure of another integrated apparatus according to an embodiment of this application. As shown in FIG. 9, in this example, the integrated apparatus includes an ECU 1 (namely, a first ECU), an ECU 2 (namely, a second ECU), a PCB 1 (namely, a first PCB), a PCB 2 (namely, a second PCB), and a support frame. The PCB 1 and the PCB 2 are fixedly connected through the support frame. A component in the ECU 1 is disposed on the PCB 1, and a component in the ECU 2 is disposed on the PCB 2. In this way, components in the two ECUs are separately integrated on different PCBs. This not only reduces a quantity of components carried on each PCB, further helping reduce a width area of each PCB, and reducing a load bearing capacity of each PCB, but also implements physical structure decoupling of the two ECUs, facilitating development and design of the integrated apparatus.

For example, as shown in FIG. 9, the integrated apparatus may further include a housing. The support frame, the PCB 1, and the PCB 2 are placed in the housing, and at least one end of the support frame is fastened to the housing. In this way, the housing can hold the support frame, to improve stability of a fixed connection between the PCB 1 and the PCB 2 based on a stable characteristic of the housing.

For example, as shown in FIG. 9, the support frame is located at a top layer, the PCB 2 is located at a bottom layer, the PCB 1 is located between the support frame and the PCB 2, an opening is disposed on the PCB 1, and the support frame passes through the opening and is fixedly connected to the PCB 1 and the PCB 2. For example, the opening may be located at a position a2, a position b2, and a position c3 shown in FIG. 9, to improve accuracy of the fixed connection by equalizing the openings. According to the deployment solution in this example, a lower side of the PCB 2 shown in the figure may be close to the housing. Therefore, a heat dissipation area of the PCB 2 can be further increased by using the housing, and a heat dissipation effect of the PCB 2 can be further improved.

It should be understood that the foregoing deployment manner of the support frame, the PCB 1, and the PCB 2 in the housing is merely an example, and the support frame, the PCB 1, and the PCB 2 may alternatively be deployed in the housing in another manner. In another example, the support frame is located at the top layer, the PCB 1 is located at the bottom layer, and the PCB 2 is located between the support frame and the PCB 1. In this way, a lower side of the PCB 2 shown in the figure may be close to the housing, so that a heat dissipation area of the PCB 1 can be increased by using the housing, and a heat dissipation effect of the PCB 1 is improved. In still another example, the PCB 1 is located at the top layer, the PCB 2 is located at the bottom layer, and the support frame is located between the PCB 1 and the PCB 2. In this way, both the upper side of the PCB 1 shown in the figure and the lower side of the PCB 2 shown in the figure may be close to the housing, so that heat dissipation areas of the PCB 1 and the PCB 2 can be increased by using the housing, and heat dissipation effects of the PCB 1 and the PCB 2 can be improved. There are many possible deployment manners, which are not listed herein.

For example, as shown in FIG. 9, the integrated apparatus may further include an inter-board connector, a component in each ECU may include a microcontroller, and a microcontroller in the ECU 1 is connected to a microcontroller in the ECU 2 through the inter-board connector, to implement communication between the two ECUs on the two PCBs.

For example, as shown in FIG. 9, a component in the ECU 1 may be disposed on a surface that is of the PCB 1 and that faces the support frame, and a component in the ECU 2 may be disposed on a surface that is of the PCB 2 and that faces the PCB 1. In this way, the component in the ECU 1 and the component in the ECU 2 are deployed on surfaces of the PCB 1 and the PCB 2 in the same direction. This can further help dispose a cable between the component in the ECU 1 and the component in the ECU 2, for example, a cable between the microcontroller in the ECU 1 and the microcontroller in the ECU 2, in the inter-board connector, and reduce integration complexity.

For example, as shown in FIG. 9, the integrated apparatus may further include a valve body. The valve body is also referred to as an HCU, and is configured to accommodate a controlled component. The controlled component may include one or more of a motor, a solenoid valve, and a sensor as shown in FIG. 9, and certainly may further include another peripheral component. This is not specifically limited. In this case, a component in each ECU may include a driver of a controlled component and the microcontroller, the microcontroller in the ECU 1 may be connected to a driver of a controlled component in the ECU 1 through a cable on the PCB 1, the microcontroller in the ECU 2 may be connected to a driver of a controlled component in the ECU 2 through a cable on the PCB 2, and the microcontroller in the ECU 1 and the microcontroller in the ECU 2 may be further connected through the inter-board connector, to implement joint redundant control of the same controlled component by the ECU 1 and the ECU 2.

For example, as shown in FIG. 9, when the controlled component includes the motor, the solenoid valve, and the sensor, the component in each ECU may include a driver of the motor, a driver of the solenoid valve, the microcontroller, and an interface of the sensor. In this case, the microcontroller in the ECU 1 on the PCB 1 may be connected to the driver of the motor, the driver of the solenoid valve, and the interface of the sensor in the ECU 1 on the PCB 1 through the cable on the PCB 1, and the microcontroller in the ECU 2 on the PCB 2 may be connected to the driver of the motor, the driver of the solenoid valve, and the interface of the sensor in the ECU 2 on the PCB 2 through the cable on the PCB 2. In addition, the microcontroller in the ECU 1 on the PCB 1 is further connected to the microcontroller in the ECU 2 on the PCB 2 through the inter-board connector. The sensor may include a motor position sensor, a pressure sensor, and a pedal travel sensor shown in FIG. 9, and certainly may further include another sensor. This is not specifically limited. In this example, the motor, the solenoid valve, and the sensor in the valve body may be connected to the driver of the motor, the driver of the solenoid valve, and the interface of the sensor in the ECU 1 on the PCB 1 through pin plugging or through an interface, and connected to the driver of the motor, the driver of the solenoid valve, and the interface of the sensor in the ECU 2 on the PCB 2 through a cable in the inter-board connector after being connected to the inter-board connector through pin plugging or through an interface. In addition, the support frame may be disposed on a lower side of a point connection interface or a plug connection interface of the motor, the solenoid valve, and the sensor, to simultaneously support the controlled component while supporting the PCB 1 and the PCB 2, and maintain stability of point connection or plug connection between the controlled component and the component on the PCB.

Further, for example, when the joint redundant control of the ECU 1 and the ECU 2 is implemented, collected information of the sensor may be transmitted to the interface of the sensor in the ECU 1 on the PCB 1 through a pin of the sensor, and may be transmitted to the interface of the sensor in the ECU 2 on the PCB 2 through the inter-board connector. It is assumed that the ECU 2 is the ECU currently used for control. In this case, the ECU 2 may obtain collected information received by the interface of the sensor, and then transmit the collected information to the microcontroller in the ECU 2 on the PCB 2 through the cable on the PCB 2, and the microcontroller determines a next control manner based on the collected information. When the next control manner is driving the motor to rotate, the microcontroller in the ECU 2 on the PCB 2 may send a corresponding control message to the driver of the motor in the ECU 2 on the PCB 2 through the cable on the PCB 2. Then, the driver of the motor transmits the corresponding control message to a pin corresponding to the motor, to drive the motor to rotate. Similarly, when the next control manner is driving the solenoid valve to work, the microcontroller in the ECU 2 on the PCB 2 may send a corresponding control message to the driver of the solenoid valve in the ECU 2 on the PCB 2 through the cable on the PCB 2. Then, the driver of the solenoid valve transmits the corresponding control message to a pin corresponding to the solenoid valve, to drive the solenoid valve to be connected or disconnected. In addition, because the ECU 1 is not currently used for control, even if the collected information of the sensor can reach the interface of the sensor in the ECU 1 on the PCB 1, the ECU 1 does not receive the collected information, and further does not perform a control operation by using the sensor information.

For example, it is considered that the microcontroller in the ECU 1 and the microcontroller in the ECU 2 further need to communicate with components other than the integrated apparatus. Therefore, a first connector may be disposed on the PCB 1, and the microcontroller in the ECU 1 is connected to another communication unit other than the integrated apparatus through the first connector, to implement communication interaction between the ECU 1 and the another communication unit. Correspondingly, a second connector may be further disposed on the PCB 2, and the microcontroller in the ECU 2 is connected to another communication unit other than the integrated apparatus through the second connector, to implement communication interaction between the ECU 2 and the another communication unit. External presentation of the first connector and the second connector may be an interface, and the interface is not limited to a USB interface, a Type-C interface, or the like.

In the integrated apparatus shown in FIG. 9, components in the two ECUs are separately integrated on different PCBs. This not only reduces a quantity of components carried on each PCB, further helping reduce a width area of each PCB, and reducing a load bearing capacity of each PCB, but also implements physical structure decoupling of the two ECUs, facilitating development and design of the integrated apparatus. In addition, the two PCBs are deployed in layers, so that a heat dissipation effect of the PCB close to the housing can be further improved.

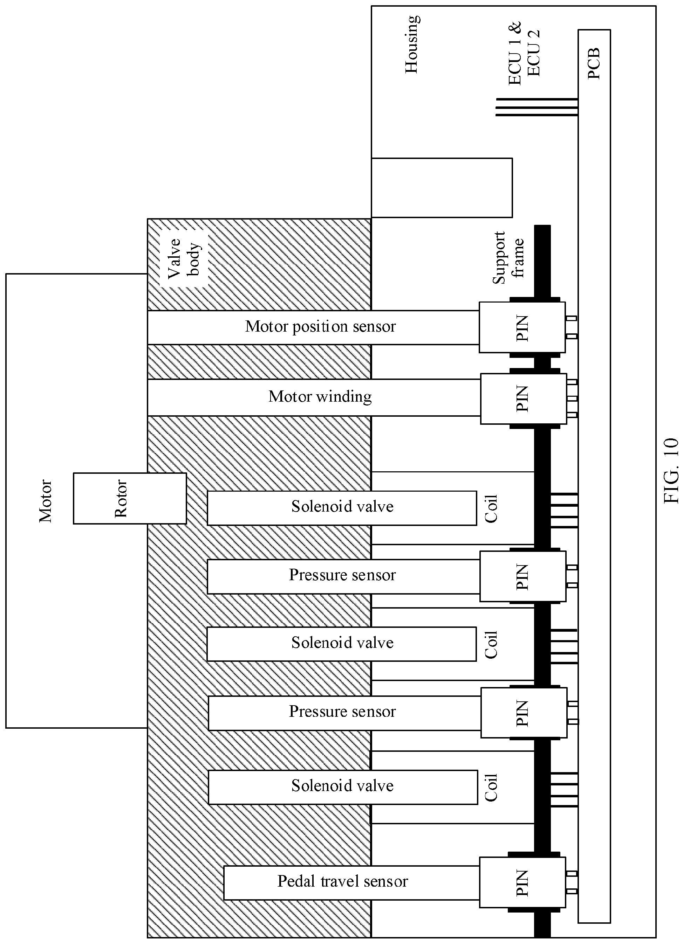

FIG. 10 is an example of a schematic diagram of a structure of still another integrated apparatus according to an embodiment of this application. As shown in FIG. 10, in this example, the integrated apparatus includes an ECU 1 (namely, a first ECU), an ECU 2 (namely, a second ECU), and a PCB. A component in the ECU 1 and a component in the ECU 2 are integrated on the PCB. In this way, components in the two ECUs are integrated on the same PCB, so that a height of the integrated apparatus can be effectively reduced compared with that in a solution in which components are integrated on two PCBs. In addition, in this manner, interfaces of all related components can be disposed on one PCB board. Therefore, the components and the interfaces of components on the PCB can be all connected in a one-time crimping manner, to further help simplify an integration process.

For example, as shown in FIG. 10, the integrated apparatus may further include a support frame and a housing. The support frame and the PCB are placed in the housing, and at least one end of the support frame is fastened to the housing. In this way, the housing can hold the support frame, to improve stability of the fixed PCB based on a stable characteristic of the housing.

For example, as shown in FIG. 10, the support frame is located at a top layer, and the PCB is located at a bottom layer and is close to the bottom of the housing. In this way, a lower side of the PCB shown in the figure may be close to the housing. Therefore, a heat dissipation area of the PCB can be further increased by using the housing, and a heat dissipation effect of the PCB can be further improved.

It should be understood that the foregoing deployment manner of the support frame and the PCB in the housing is merely an example, and the support frame and the PCB may alternatively be deployed in the housing in another manner. In another example, the support frame is located at the bottom layer, and the PCB is located at the top layer. In this way, an upper side of the PCB shown in the figure may be close to the housing, so that a heat dissipation area of the PCB can be increased by using the housing, and a heat dissipation effect of the PCB is improved.

For example, a component in each ECU may include a microcontroller, and a microcontroller in the ECU 1 is connected to a microcontroller in the ECU 2 through a cable on the PCB, to implement communication between the two ECUs on the PCB.

For example, as shown in FIG. 10, the component in the ECU 1 and the component in the ECU 2 may be disposed on a surface that is of the PCB and that faces the support frame. In this way, components in the ECU 1 and the ECU 2 can be further connected through cables disposed on a same surface of the PCB, to simplify a cable deployment manner on the PCB, and reduce integration complexity.

For example, as shown in FIG. 10, the integrated apparatus may further include a valve body. The valve body is also referred to as an HCU, and is configured to accommodate a controlled component. The controlled component may include one or more of a motor, a solenoid valve, and a sensor as shown in FIG. 10, and certainly may further include another peripheral component. This is not specifically limited. In this case, a component in each ECU may include a driver of a controlled component and the microcontroller, the microcontroller in the ECU 1 may be connected to a driver of a controlled component in the ECU 1 through the cable on the PCB, the microcontroller in the ECU 2 may be connected to a driver of a controlled component in the ECU 2 through the cable on the PCB, and the microcontroller in the ECU 1 and the microcontroller in the ECU 2 may be further connected through the cable on the PCB, to implement joint redundant control of the same controlled component by the ECU 1 and the ECU 2.

For example, as shown in FIG. 10, when the controlled component includes the motor, the solenoid valve, and the sensor, the component in each ECU may include a driver of the motor, a driver of the solenoid valve, the microcontroller, and an interface of the sensor. In this case, the microcontroller in the ECU 1 on the PCB may be connected to the driver of the motor, the driver of the solenoid valve, and the interface of the sensor in the ECU 1 on the PCB through the cable on the PCB, and the microcontroller in the ECU 2 on the PCB may be connected to the driver of the motor, the driver of the solenoid valve, and the interface of the sensor in the ECU 2 on the PCB through the cable on the PCB. In addition, the microcontroller in the ECU 1 on the PCB is further connected to the microcontroller in the ECU 2 on the PCB through the cable on the PCB. The sensor may include a motor position sensor, a pressure sensor, and a pedal travel sensor shown in FIG. 10, and certainly may further include another sensor. This is not specifically limited. In this example, the motor, the solenoid valve, and the sensor in the valve body may be connected to the driver of the motor, the driver of the solenoid valve, and the interface of the sensor in the ECU 1 on the PCB and the driver of the motor, the driver of the solenoid valve, and the interface of the sensor in the ECU 2 on the PCB through pin plugging or through an interface. In addition, the support frame may be disposed on a lower side of a point connection interface or a plug connection interface of the motor, the solenoid valve, and the sensor, to simultaneously support the controlled component while supporting the PCB, and maintain stability of point connection or plug connection between the controlled component and the component on the PCB.

Further, for example, when the joint redundant control of the ECU 1 and the ECU 2 is implemented, collected information of the sensor may be separately transmitted to the interface of the sensor in the ECU 1 and the interface of the sensor in the ECU 2 on the PCB through two pins of the sensor. It is assumed that the ECU 1 is the ECU currently used for control. In this case, the ECU 1 may obtain collected information received by the interface of the sensor, and transmit the collected information to the microcontroller in the ECU 1 on the PCB, and the microcontroller determines a next control manner based on the collected information. When the next control manner is driving the motor to rotate, the microcontroller in the ECU 1 on the PCB may send a corresponding control message to the driver of the motor in the ECU 1 on the PCB through the cable on the PCB. Then, the driver of the motor transmits the corresponding control message to a pin corresponding to the motor, to drive the motor to rotate. Similarly, when the next control manner is driving the solenoid valve to work, the microcontroller in the ECU 1 on the PCB may send a corresponding control message to the driver of the solenoid valve in the ECU 1 on the PCB through the cable on the PCB. Then, the driver of the solenoid valve transmits the corresponding control message to a pin corresponding to the solenoid valve, to drive the solenoid valve to be connected or disconnected. In addition, because the ECU 2 is not currently used for control, even if the collected information of the sensor can reach the interface of the sensor in the ECU 2 on the PCB, the ECU 2 does not receive the collected information, and further does not perform a control operation by using the sensor information.

For example, it is considered that the microcontroller in the ECU 1 and the microcontroller in the ECU 2 further need to communicate with components other than the integrated apparatus. Therefore, a first connector and a second connector may be disposed on the PCB. The microcontroller in the ECU 1 is connected to another communication unit other than the integrated apparatus through the first connector, and the microcontroller in the ECU 2 is connected to another communication unit other than the integrated apparatus through the second connector, to implement communication interaction with the another communication unit. External presentation of the first connector and the second connector may be an interface, and the interface is not limited to a USB interface, a Type-C interface, or the like.

In the integrated apparatus shown in FIG. 10, components in the two ECUs are integrated on the same PCB, so that a height of the integrated apparatus depends on a height of a PCB board, and the height of the integrated apparatus can be effectively reduced compared with that in a solution in which components are integrated on two PCBs. In addition, interconnection interfaces of all related components are disposed on one PCB board. Therefore, interfaces of components in the valve body and interfaces on the PCB can be all connected in a one-time crimping manner, to further help simplify an integration process. In addition, because all components in the two ECUs are integrated on one PCB, and a surface of the PCB is directly close to the housing, heat generated by the components on the PCB may be directly transmitted through the housing. This integration manner can have a good heat dissipation effect.

It should be understood that the ECU 1 and the ECU 2 in FIG. 8 to FIG. 10 are merely used to represent a set of electronic components related to a control function, and do not mean that each ECU is an independent physical apparatus. In addition, all components in the integrated apparatus may be located in one physical apparatus, or may form separate physical apparatuses, or some components may be combined to form a physical apparatus. This is not specifically limited in this embodiment of this application. In addition, in addition to the components described in the foregoing content, each PCB may further include another component. This is not specifically limited in this embodiment of this application.

It should be noted that, the integrated apparatus shown in FIG. 8 to FIG. 10 is described only by using an example in which a pin or a port of a controlled component is directly plugged or point-connected to a component in a corresponding ECU on a PCB. In an actual operation, if the pin of the controlled component is not long enough, or the pin of the controlled component does not match the port type of the component in the corresponding ECU on the PCB, a transfer pin may be additionally disposed in the integrated apparatus. One end of the transfer pin is connected to the component in the corresponding ECU on the PCB, and the other end is connected to the pin or port of the controlled component, to implement smooth communication between the controlled component and the component in the corresponding ECU.

In addition, FIG. 8 to FIG. 10 are merely examples of three possible integration solutions. In another example, the two ECUs may be integrated by using another integration solution. For example, three PCBs may be disposed, a high-power component in the ECU 1 is integrated on a first PCB, a high-power component in the ECU 2 is integrated on a second PCB, and low-power components in the ECU 1 and the ECU 2 are integrated on a third PCB. Although the integration solution increases a thickness of the integrated apparatus, a width area and a load bearing capacity of the PCB integrated with the high-power component can be further reduced, and a heat dissipation capability of the PCB integrated with the high-power component can be further improved.

In addition, Embodiment 2 may be further applied to Embodiment 1, where the ECU 1 and the ECU 2 in Embodiment 2 may correspond to any two of the first ECU, the second ECU, and the redundant ECU in Embodiment 1. In a possible example, the ECU 1 and the ECU 2 in Embodiment 2 may correspond to the first ECU or the second ECU in Embodiment 1, and the ECU 2 in Embodiment 2 may correspond to the redundant ECU in Embodiment 1. That is, the integration solution in Embodiment 2 may be applied to the first ECU and the redundant ECU in Embodiment 1, or may be applied to the second ECU and the redundant ECU in Embodiment 1, so that when redundancy is added to the brake system, integration of the brake system can be further improved, to further reduce a volume of the brake system. In addition, when the integrated solution is applied to Embodiment 1, the valve body is also referred to as an anti-lock brake system (anti-lock brake system, ABS) actuator in the brake system. A brake actuator for implementing a braking function and a brake-related sensor are accommodated inside the anti-lock brake system actuator, including but not limited to a motor, a solenoid valve, a motor position sensor, a pressure sensor, a pedal travel sensor, and the like. An integration solution of another brake actuator may be directly implemented with reference to the foregoing content. Details are not described herein again.

An embodiment of this application further provides a connection control apparatus. The connection control apparatus can connect at least two ECUs to a same brake actuator, and can implement flexible redundant control on the brake actuator. The connection control apparatus may be applied to a terminal device having a braking function. The terminal device may be an intelligent transportation device, for example, an automobile, a ship, an uncrewed aerial vehicle, a train, a van, or a truck.

The following describes in detail a possible structure and control logic of the connection control apparatus by using Embodiment 3.

### Embodiment 3

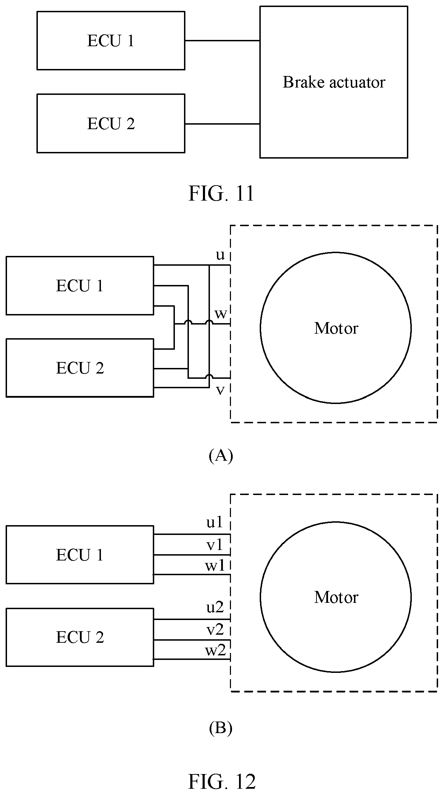

FIG. 11 is an example of a schematic diagram of a structure of a connection control apparatus according to an embodiment of this application. As shown in FIG. 11, in this example, the connection control apparatus may include an ECU 1 (namely, a first ECU), an ECU 2 (namely, a second ECU), and a brake actuator. The ECU 1 and the ECU 2 are separately connected to the brake actuator, and can implement separate or joint driving of the brake actuator. That is, the brake actuator may be separately driven by the ECU 1, or may be separately driven by the ECU 2, or may be jointly driven by the ECU 1 and the ECU 2. In this way, the two ECUs are connected to the same brake actuator, so that redundant control of the same brake actuator can be implemented, and another brake actuator does not need to be additionally disposed in the redundancy. This helps reduce a quantity of components and save costs while implementing redundant control.

Further, for example, one of the ECU 1 and the ECU 2 is an ECU that takes effect by default. It is assumed that the ECU 1 is the ECU that takes effect by default. In this case, when the ECU 1 is not faulty, the connection control apparatus drives the brake actuator by using the ECU 1 by default, or when the ECU 1 is faulty, the connection control apparatus switches to the ECU 2 to drive the brake actuator. In this way, the redundant control of the same brake actuator by two ECUs can be flexibly and orderly implemented.

Further, for example, the brake actuator may be any component that can implement a braking execution function, for example, may include but is not limited to a motor or a solenoid valve. The following describes specific connection control solutions from perspectives of the motor and the solenoid valve.

The brake actuator is a motor.

FIG. 12 is an example of a schematic diagram of a structure in which two ECUs are connected to a same motor according to an embodiment of this application. The motor includes a rotating shaft, a rotor, and a stator. The rotor includes a rotor winding and a rotor iron core wound by the rotor winding. The stator includes a stator winding and a stator iron core wound by the stator winding. The stator winding is usually a three-phase stator winding. Refer to FIG. 12.

In a possible connection manner, as shown in (A) in FIG. 12, the stator winding in the motor is a three-phase stator winding. The motor further includes three pins u, v, and w corresponding to the three-phase stator winding. The ECU 1 and the ECU 2 each include three-phase alternating current ports, and the three-phase alternating current ports of the two ECUs are connected to the three pins u, v, and w. When the motor is driven to rotate, the ECU that takes effect in the ECU 1 and the ECU 2 may input a three-phase alternating current to the three pins u, v, and w through three-phase alternating current ports of the ECU, and the ECU that does not take effect does not input a three-phase alternating current to the three pins u, v, and w. Specifically, when the ECU 1 is an ECU that takes effect by default, when the ECU 1 is not faulty, the ECU 1 provides the three-phase alternating current to the three-phase stator winding, or when the ECU 1 is faulty, the ECU 2 provides the three-phase alternating current to the three-phase stator winding. Further, because any two adjacent stator windings in the three-phase stator winding of the motor have a phase difference of 120 degrees, the phase difference enables the three-phase stator winding to generate a rotating magnetic field under the action of the three-phase alternating current input by the ECU 1 or the ECU 2, the rotating magnetic field further cuts the rotor winding, so that an induced current is generated in the rotor winding, and the induced current further forms an electromagnetic torque on the rotating shaft of the motor to drive the motor to rotate, and a rotation direction of the motor is the same as a direction of the rotating magnetic field. In this connection manner, the three-phase winding in the motor can be reused, without adding an additional winding. Therefore, this can be directly compatible with the existing motor, and also helps save costs.

According to the connection manner shown in (A) in FIG. 12, there are a plurality of manners of redundantly controlling the motor by using the ECU 1 and the ECU 2. The following uses an example in which the ECU 1 provides a three-phase alternating current for description. It should be noted that the following redundant control manners may be performed separately or jointly.

### Redundant control manner 1:

In a process of providing the three-phase alternating current to the three-phase stator winding, the ECU 1 may further detect a current on a connection line between the ECU 1 and each phase winding in the three-phase stator winding (for example, a detection resistor is disposed on each connection line, and the ECU 1 monitors a current flowing through the detection resistor on each connection line). When a current on a connection line between the ECU 1 and a phase winding in the three-phase stator winding is less than a threshold, it indicates that a fault (which may be caused by a fault between the ECU and a port of the connection line, a short circuit of the connection line, or a short circuit of the connection line) occurs when the ECU 1 transmits an electrical signal to the phase winding. In this case, the ECU 1 may send a supplementation indication to the ECU 2. After receiving the supplementation indication, the ECU 2 may provide a supplementary electrical signal to the phase winding through a connection line between the ECU 2 and the phase winding. It can be learned that, in this example, when a fault occurs when one ECU provides an electrical signal to a winding, a supplementary electrical signal can be provided to the winding through another ECU, and electrical signals on the other two windings can still be provided by the original ECU. That is, it is not necessary to switch an electrical signal providing process of all windings to another ECU, so that by using a small quantity of switching operations, accurate supply of a three-phase current can be ensured on the basis of improving switching stability.

### Redundant control manner 2:

In a process of providing the three-phase alternating current to the three-phase stator winding, the ECU 1 may further monitor an emergency degree of a current braking requirement. When the current braking requirement suddenly becomes very urgent, it means that the motor needs to be driven urgently. In this case, the ECU 1 may continue to provide the three-phase alternating current to the three-phase stator winding, and may further send an effective indication to the ECU 2. After receiving the effective indication, the ECU 2 may also provide the three-phase alternating current to the three-phase stator winding. In this way, the two ECUs provide the three-phase alternating currents to the motor together, so that a driving speed and driving strength of the motor can be accelerated under the drive of a strong current of the two three-phase alternating currents.

### Redundant control manner 3:

In a process of providing the three-phase alternating current to the three-phase stator winding, the ECU 1 may further monitor a magnitude change of the provided three-phase alternating current. When it is found that the provided three-phase alternating current is much smaller than a sent three-phase alternating current, it means that the three-phase alternating current sent by the ECU 1 has a large loss during transmission. In this case, the ECU 1 may continue to provide the three-phase alternating current to the three-phase stator winding, and may further send an effective indication to the ECU 2. After receiving the effective indication, the ECU 2 may also provide the three-phase alternating current to the three-phase stator winding. In this way, when the three-phase alternating current provided by one ECU is insufficient, two ECUs provide the three-phase alternating currents to the motor together, so that a driving requirement of the motor can be met by using the two three-phase alternating currents.

### Redundant control manner 4:

In a process of providing the three-phase alternating current to the three-phase stator winding, the ECU 1 may further detect a current on a connection line between the ECU 1 and each phase winding in the three-phase stator winding. When a current on a connection line between the ECU 1 and any phase winding in the three-phase stator winding is less than a threshold, it means that a fault occurs in a driving process of the ECU 1. In this case, the ECU 1 may stop providing the three-phase alternating current to the three-phase stator winding and send an effective indication to the ECU 2. After receiving the effective indication, the ECU 2 may provide the three-phase alternating current to the three-phase stator winding through connection lines between the ECU 2 and the three-phase stator winding. In this way, when a fault occurs in a driving process of one ECU, another ECU is switched to in time for driving. This can avoid continuous driving with a faulty ECU, and maintain accuracy of motor driving.

It should be understood that the foregoing content is merely examples of four possible redundant control manners. In this embodiment of this application, any one of the foregoing manners may be further modified to obtain another redundant control manner. For example, in still another possible redundant control manner, when the ECU 1 finds that a current braking requirement suddenly becomes very urgent, or that the three-phase alternating current provided by the ECU 1 is much smaller than a three-phase alternating current sent by the ECU 1, the ECU 1 may also stop providing the three-phase alternating current to the three-phase stator winding and send an effective indication to the ECU 2, so that the ECU 2 is switched to in time to drive the motor. There are many possible redundant driving manners, which are not listed herein.

For example, theoretically, although the ECU 1 and the ECU 2 separately or jointly provide electrical signals to the three-phase stator winding according to the foregoing redundant control manner, due to software and hardware abnormalities, an ECU in an actual circuit that does not need to provide an electrical signal also provides an electrical signal to one winding or some stator windings. In this case, the additionally provided electrical signal clearly affects accuracy of motor control. Based on this, in an optional implementation, a switching circuit may be further disposed on lines on which the ECU 1 is connected to the three pins u, v, and w and on lines on which the ECU 2 is connected to the three pins u, v, and w. The switching circuit may include, for example, a single-pole single-throw switch, a single-pole multi-throw switch, or a multi-pole multi-throw switch. The switching circuit may be configured to: when the ECU 1 provides the three-phase alternating current to the three-phase stator winding, connect the connection lines between the ECU 1 and the three pins u, v, and w, and disconnect the connection lines between the ECU 2 and the three pins u, v, and w, and when the ECU 2 provides the three-phase alternating current to the three-phase stator winding, connect the connection lines between the ECU 2 and the three pins u, v, and w, and disconnect the connection lines between the ECU 1 and the three pins u, v, and w. In this way, even if an ECU that does not need to provide a three-phase alternating current outputs the three-phase alternating current to the motor, a driving link of the ECU to the motor can be cut off by using the switching circuit, to ensure that the motor works only under the drive of another ECU. This effectively improves accuracy of redundant control.

Further, for example, when the motor is driven in the foregoing redundant driving manner 1, when determining that the current on the connection line between the ECU 1 and the phase winding in the three-phase stator winding is less than the threshold, the ECU 1 may send the supplementation indication to the ECU 2, and further send a first switching indication to the switching circuit. After receiving the first switching indication, the switching circuit may connect a connection line between the ECU 2 and the phase winding, so that the supplementary electrical signal provided by the ECU 2 can be successfully transmitted to the phase winding of the motor.

Further, for example, when the motor is driven in the foregoing redundant driving manner 2, and the ECU 1 finds that the current braking requirement suddenly becomes very urgent, or when the motor is driven in the redundant driving manner 3, and the ECU 1 finds that the provided three-phase alternating current is much smaller than the sent three-phase alternating current, the ECU 1 may send the effective indication to the ECU 2, and may further send a third switching indication to the switching circuit. After receiving the third switching indication, the switching circuit may connect the connection lines between the ECU 2 and the three-phase stator winding, so that the three-phase alternating current provided by the ECU 2 can be successfully transmitted to the three-phase stator winding of the motor.

Further, for example, when the motor is driven in the foregoing redundant driving manner 4, and when the ECU 1 detects that the current on the connection line between the ECU 1 and the any phase winding in the three-phase stator winding is less than the threshold, the ECU 1 may send the effective indication to the ECU 2, and may further send a second switching indication to the switching circuit. After receiving the second switching indication, the switching circuit may disconnect the connection lines between the ECU 1 and the three-phase stator winding, and connect the connection lines between the ECU 2 and the three-phase stator winding, so that the three-phase alternating current provided by the ECU 2 can be successfully transmitted to the three-phase stator winding of the motor, and the three-phase alternating current that is still provided to the three-phase stator winding due to the fault of the ECU 1 is cut off, to ensure the accuracy of motor driving.

In another possible connection manner, as shown in (B) in FIG. 12, the stator winding in the motor may include two three-phase stator windings. The motor further includes three pins u1, v1, and w1 corresponding to a first three-phase stator winding and three pins u2, v2, and w2 corresponding to a second three-phase stator winding. The ECU 1 and the ECU 2 each include three-phase alternating current ports. The three-phase alternating current ports of the ECU 1 are connected to the three pins u1, v1, and w1 corresponding to the first three-phase stator winding, and the three-phase alternating current ports of the ECU 2 are connected to the three pins u2, v2, and w2 corresponding to the second three-phase stator winding. When the motor is driven to rotate, an ECU that takes effect in the ECU 1 and the ECU may input a three-phase alternating current to the three connected pins through the three-phase alternating current ports of the ECU. Specifically, when the ECU 1 is not faulty, the ECU 1 may input the three-phase alternating current to the three pins u1, v1, and w1 through the three-phase alternating current ports of the ECU 1, where the three-phase alternating current drives the first three-phase stator winding to generate a rotating magnetic field to drive rotation of the rotating shaft of the motor; or when the ECU 1 is faulty, the ECU 2 may input the three-phase alternating current to the three pins u2, v2, and w2 through the three-phase alternating current ports of the ECU 2, where the three-phase alternating current drives the second three-phase stator winding to generate a rotating magnetic field to drive rotation of the rotating shaft of the motor. In this connection manner, an additional three-phase winding is added to the motor, so that the motor can be accurately driven by using an electrical signal of each ECU for a corresponding three-phase winding, to avoid interference caused by an electrical signal of one ECU to an electrical signal of another ECU.

It should be noted that, when the motor includes two three-phase stator windings, the two three-phase stator windings may be wound around an entire region of the stator iron core, but are wound around the stator iron core in different directions, so that regardless of which three-phase stator winding is energized, a rotating magnetic field can be generated over the entire region of the stator iron core. Alternatively, the two three-phase stator windings may be wound around different regions of the stator iron core. For example, the first three-phase stator winding and the second three-phase stator winding may be respectively wound around two half-side regions of the iron core, and a size relationship between the two half-side regions is not limited, for example, the two half-side regions may be equal, or one region may be larger than the other region. Alternatively, some windings of the two three-phase stator windings are wound around the same region of the stator iron core, and the other windings are wound around different regions of the stator iron core. There are many possible implementations, which are not listed herein.

According to the connection manner shown in (B) in FIG. 12, an example in which the ECU 1 provides the three-phase alternating current is used for description. When providing the three-phase alternating current to the first three-phase stator winding, the ECU 1 may further detect a current on a connection line between the ECU 1 and each phase winding in the first three-phase stator winding. When a current on a connection line between the ECU 1 and a phase winding in the first three-phase stator winding is less than a threshold, it means that a fault occurs when the ECU 1 transmits an electrical signal to the first three-phase stator winding. In this case, the ECU 1 may send an effective indication to the ECU 2. After receiving the effective indication, the ECU 2 may provide the three-phase alternating current to the second three-phase stator winding through connection lines between the ECU 2 and the second three-phase stator winding. It can be learned that, in this example, when the motor cannot be driven due to a fault that occurs in a process in which one ECU provides an electrical signal to a three-phase stator winding, the motor can still be driven by using a three-phase alternating current provided by another ECU to another three-phase stator winding, to improve timeliness of switching while implementing redundant control of the motor.

For example, a switching circuit may be further disposed on lines on which the ECU 1 is connected to the three pins u1, v1, and w1 and on lines on which the ECU 2 is connected to the three pins u2, v2, and w2. The switching circuit may include, for example, a single-pole single-throw switch, a single-pole multi-throw switch, or a multi-pole multi-throw switch. The switching circuit may be configured to: when the ECU 1 provides the three-phase alternating current to the first three-phase stator winding, connect the connection lines between the ECU 1 and the three pins u1, v1, and w1, and disconnect the connection lines between the ECU 2 and the three pins u2, v2, and w2, and when the ECU 2 provides the three-phase alternating current to the second three-phase stator winding, connect the connection lines between the ECU 2 and the three pins u2, v2, and w2, and disconnect the connection lines between the ECU 1 and the three pins u1, v1, and w1. In this way, even if an ECU that does not need to provide a three-phase alternating current outputs the three-phase alternating current to the motor, a driving link of the ECU to the motor can be cut off by using the switching circuit, to ensure that the motor works only under the drive of another ECU. This effectively improves accuracy of redundant control.

Further, for example, when the ECU 1 detects that a current on a connection line between the ECU 1 and any phase winding in the first three-phase stator winding is less than a threshold, the ECU 1 may send an effective indication to the ECU 2, and may further send a switching indication to the switching circuit. After receiving the switching indication, the switching circuit may disconnect the connection lines between the ECU 1 and the three pins u1, v1, and w1, and connect the connection lines between the ECU 2 and the three pins u2, v2, and w2, so that the three-phase alternating current provided by the ECU 2 can be successfully transmitted to the second three-phase stator winding of the motor, and the three-phase alternating current that is still provided to the first three-phase stator winding due to the fault of the ECU 1 is cut off, to ensure accuracy of motor driving.

It should be noted that the foregoing describes only two possible solutions in which two ECUs are connected to the same motor as examples. In an actual operation, the two ECUs can be connected to the same motor in another manner. For example, in two three-phase stator windings, one or more windings in a first three-phase stator winding may be the same as one or more windings in a second three-phase stator winding, and the same one or more windings may correspond to the same one or more pins. The one or more pins are simultaneously connected to one or more ports of the two ECUs, and other ports of the two ECUs are respectively connected to pins corresponding to individual windings in a corresponding three-phase stator winding. In this way, two ECUs can control the same motor separately, and a quantity of pins and windings can be reduced. This helps implement redundant connection on the basis of saving costs. For a specific implementation of this part, refer to related content of the solenoid valve in the following. Details are not described herein.

The brake actuator is a solenoid valve.

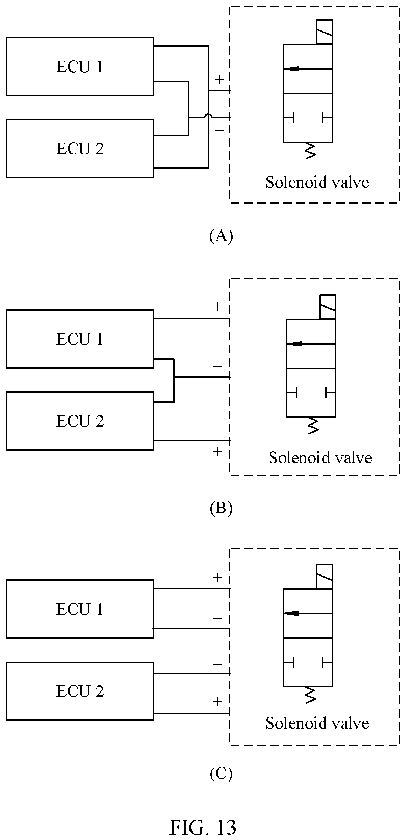

FIG. 13 is an example of a schematic diagram of a structure in which two ECUs are connected to a same solenoid valve according to an embodiment of this application.

In a possible connection manner, as shown in (A) in FIG. 13, the solenoid valve includes a dual coil and an iron core wound by the dual coil. The dual coil includes two coils, and the solenoid valve further includes a positive pin (namely, a pin corresponding to a symbol "+" shown in the figure) and a negative pin (namely, a pin corresponding to a symbol "-" shown in the figure) that are corresponding to the dual coil. The positive pin is connected to one coil in the dual coil, and the negative pin is connected to the other coil in the dual coil. The ECU 1 and the ECU 2 each include a positive port and a negative port. Positive ports of the ECU 1 and the ECU 2 are separately connected to the positive pin of the dual coil, and negative ports of the ECU 1 and the ECU 2 are separately connected to the negative pin of the dual coil. When the solenoid valve is driven, the ECU that takes effect in the ECU 1 and the ECU 2 may input a direct current to the positive pin and the negative pin of the dual coil through the positive port and the negative port of the ECU, and the ECU that does not take effect does not input a direct current to the positive pin and the negative pin of the dual coil. Specifically, when the ECU 1 is not faulty, the ECU 1 can input the direct current to the positive pin and the negative pin of the connected dual coil, or when the ECU 1 is faulty, the ECU 2 can input the direct current to the positive pin and the negative pin of the connected dual coil. In this way, the dual coil can generate a magnetic field under the action of the received direct current output by the ECU, and the magnetic field drives the iron core wound by the dual coil to move. In this case, if the solenoid valve is a normally open valve (where the normally open valve refers to a solenoid valve that is connected by default when being not energized and disconnected when being energized), the solenoid valve is disconnected under the action of the direct current input by the ECU that takes effect, or if the solenoid valve is a normally closed valve (where the normally closed valve refers to a solenoid valve that is disconnected by default when being not energized and connected when being energized), the solenoid valve is connected under the action of the direct current input by the ECU that takes effect. In this connection manner, the dual coil in the solenoid valve can be reused to implement redundant driving of the same solenoid valve by the two ECUs, without adding an additional coil. This can not only be directly compatible with the existing solenoid valve, but also help save costs.

According to the connection manner shown in (A) in FIG. 13, there are a plurality of manners of redundantly controlling the solenoid valve by using the ECU 1 and the ECU 2. The following uses an example in which the ECU 1 provides a direct current for description. It should be noted that the following redundant control manners may be performed separately or jointly.

### Redundant control manner 1:

In a process of providing the direct current to the dual coil, the ECU 1 may further detect a current on a connection line between the ECU 1 and each coil in the dual coil. When a current on a connection line between the ECU 1 and a coil in the dual coil is less than a threshold, it means that a fault occurs when the ECU 1 transmits an electrical signal to the coil. In this case, the ECU 1 may send a supplementation indication to the ECU 2. After receiving the supplementation indication, the ECU 2 may provide a supplementary electrical to the coil through a connection line between the ECU 2 and the coil. It can be learned that, in this example, when a fault occurs when one ECU provides an electrical signal to a coil, another ECU can provide a supplementary electrical signal to the coil, and an electrical signal on the other coil can still be provided by the original ECU. That is, it is not necessary to switch an electrical signal providing process of all coils to another ECU, so that by using a small quantity of switching operations, an accurate direct current can be jointly supplied to the solenoid valve by the two ECUs on the basis of improving switching stability.

### Redundant control manner 2:

In a process of providing the direct current to the dual coil, the ECU 1 may further monitor an emergency degree of a current braking requirement. When the current braking requirement suddenly becomes very urgent, it means that the solenoid valve needs to be driven urgently. In this case, the ECU 1 may continue to provide the direct current to the dual coil, and may further send an effective indication to the ECU 2. After receiving the effective indication, the ECU 2 may also provide the direct current to the dual coil. In this way, the two ECUs provide the direct currents to the solenoid valve together, so that a driving speed of the solenoid valve can be accelerated under the drive of a strong current of the two direct currents.

### Redundant control manner 3:

In a process of providing the direct current to the dual coil, the ECU 1 may further monitor a magnitude change of the provided direct current. When it is found that the provided direct current is much smaller than a sent direct current, it means that the direct current sent by the ECU 1 has a large loss during transmission. In this case, the ECU 1 may continue to provide the direct current to the dual coil, and may further send an effective indication to the ECU 2. After receiving the effective indication, the ECU 2 may also provide the direct current to the dual coil. In this way, when the direct current provided by one ECU is insufficient, two ECUs provide the direct currents to the solenoid valve together, so that a driving requirement of the solenoid valve can be met by using the two direct currents.

### Redundant control manner 4:

In a process of providing the direct current to the dual coil, the ECU 1 may further detect a current on a connection line between the ECU 1 and each coil in the dual coil. When a current on a connection line between the ECU 1 and either coil in the dual coil is less than a threshold, it means that a fault occurs in a driving process of the ECU 1. In this case, the ECU 1 may stop providing the direct current to the dual coil and send an effective indication to the ECU 2. After receiving the effective indication, the ECU 2 may provide the direct current to the dual coil through connection lines between the ECU 2 and the dual coil. In this way, when a fault occurs in a driving process of one ECU, another ECU is switched to in time for driving. This can avoid continuous driving with a faulty ECU, and maintain accuracy of solenoid valve driving.

It should be understood that the foregoing content is merely examples of four possible redundant control manners. In this embodiment of this application, any one of the foregoing manners may be further modified to obtain another redundant control manner. For example, in still another possible redundant control manner, when the ECU 1 finds that a current braking requirement suddenly becomes very urgent, or that the direct current provided by the ECU 1 is much smaller than a direct current sent by the ECU 1, the ECU 1 may also stop providing the direct current to the dual coil and send an effective indication to the ECU 2, so that the ECU 2 is switched to in time to drive the solenoid valve. There are many possible redundant driving manners, which are not listed herein.

For example, a switching circuit may be further disposed on lines on which the ECU 1 is connected to the positive pin and the negative pin and on lines on which the ECU 2 is connected to the positive pin and the negative pin. The switching circuit may include, for example, a single-pole single-throw switch, a single-pole multi-throw switch, or a multi-pole multi-throw switch. The switching circuit may be configured to: when the ECU 1 provides the direct current to the dual coil, connect the connection lines between the ECU 1 and the positive pin and the negative pin, and disconnect the connection lines between the ECU 2 and the positive pin and the negative pin, and when the ECU 2 provides the direct current to the dual coil, connect the connection lines between the ECU 2 and the positive pin and the negative pin, and disconnect the connection lines between the ECU 1 and the positive pin and the negative pin. In this way, even if an ECU that does not need to provide a direct current outputs the direct current to the solenoid valve, a driving link of the ECU to the solenoid valve can be cut off by using the switching circuit, to ensure that the solenoid valve works only under the drive of another ECU. This effectively improves accuracy of redundant control.

Further, for example, when the solenoid valve is driven in the foregoing redundant driving manner 1, when determining that the current on the connection line between the ECU 1 and the coil in the dual coil is less than the threshold, the ECU 1 may send the supplementation indication to the ECU 2, and further send a first switching indication to the switching circuit. After receiving the first switching indication, the switching circuit may connect a connection line between the ECU 2 and the coil, so that the supplementary electrical signal provided by the ECU 2 can be successfully transmitted to the coil of the solenoid valve.

Further, for example, when the solenoid valve is driven in the foregoing redundant driving manner 2, and the ECU 1 finds that the current braking requirement suddenly becomes very urgent, or when the solenoid valve is driven in the redundant driving manner 3, and the ECU 1 finds that the provided direct current is much smaller than the sent direct current, the ECU 1 may send the effective indication to the ECU 2, and may further send a third switching indication to the switching circuit. After receiving the third switching indication, the switching circuit may connect the connection lines between the ECU 2 and the dual coil, so that the direct current provided by the ECU 2 can be successfully transmitted to the dual coil of the solenoid valve.

Further, for example, when the solenoid valve is driven in the foregoing redundant driving manner 4, and when the ECU 1 detects that the current on the connection line between the ECU 1 and the either coil in the dual coil is less than the threshold, the ECU 1 may send the effective indication to the ECU 2, and may further send a second switching indication to the switching circuit. After receiving the second switching indication, the switching circuit may disconnect the connection lines between the ECU 1 and the dual coil, and connect the connection lines between the ECU 2 and the dual coil, so that the direct current provided by the ECU 2 can be successfully transmitted to the dual coil of the solenoid valve, and the direct current that is still provided to the dual coil due to the fault of the ECU 1 is cut off, to ensure the accuracy of solenoid valve driving.

In another possible connection manner, as shown in (B) in FIG. 13, the solenoid valve may include two dual coils and an iron core wound by the two dual coils. A first dual coil includes a first positive coil and a first negative coil, and a second dual coil includes a second positive coil and a second negative coil. The solenoid valve may further include a first positive pin (a "+" pin at the top of the figure), a second positive pin (a "+" pin at the bottom of the figure), and a negative pin. The first positive pin is connected to the first positive coil in the first dual coil, the second positive pin is connected to the second positive coil in the second dual coil, and the negative pin is connected to both the first negative coil in the first dual coil and the second negative coil in the second dual coil. The ECU 1 and the ECU 2 each include a positive port and a negative port. The positive port of the ECU 1 and the positive port of the ECU 2 are separately connected to the negative pin of the solenoid valve, the positive port of the ECU 1 is connected to the first positive pin of the solenoid valve, and the positive port of the ECU 2 is connected to the second positive pin of the solenoid valve. When the solenoid valve is controlled, the ECU that takes effect in the ECU 1 and the ECU 2 may input a direct current to the negative pin of the solenoid valve and the positive pin that is of the solenoid valve and that corresponds to the ECU through the positive port and the negative port of the ECU, and the ECU that does not take effect does not input a direct current to the other positive pin and the negative pin of the solenoid valve. Specifically, when the ECU 1 is not faulty, the ECU 1 may input the direct current to the first positive pin and the negative pin. In this way, the first dual coil can generate a magnetic field under the action of the direct current output by the ECU 1, and the magnetic field drives the iron core wound by the dual coil to move. Then, the solenoid valve that is a normally open valve is disconnected when being energized, or the solenoid valve that is a normally closed valve is connected when being energized. Alternatively, when the ECU 2 is faulty, the ECU 2 may input the direct current to the second positive pin and the negative pin. In this way, the second dual coil can generate a magnetic field under the action of the direct current output by the ECU 2, and the magnetic field drives the iron core wound by the dual coil to move. Then, the solenoid valve that is a normally open valve is disconnected when being energized, or the solenoid valve that is a normally closed valve is connected when being energized. In this connection manner, the negative coil in the solenoid valve is reused, and the positive coil corresponding to each ECU is disposed, so that complexity of solenoid valve setup can be reduced, costs can be saved, and interference of an electrical signal of one ECU to the driving of another ECU can be reduced as much as possible.

It should be noted that, in the foregoing connection manner, because the negative pin in the solenoid valve is connected to both the first negative coil and the second negative coil in the two dual coils, the first negative coil and the second negative coil may also be disposed as a same coil, and are collectively referred to as the negative coil. In this way, the two ECUs can be connected to the same solenoid valve, and a quantity of coils can be reduced. This helps implement redundant control on the basis of saving costs.

According to the connection manner shown in (B) in FIG. 13, there are a plurality of manners of redundantly controlling the solenoid valve by using the ECU 1 and the ECU 2. The following uses an example in which the ECU 1 provides a direct current for description. It should be noted that the following redundant control manners may be performed separately or jointly.

### Redundant control manner 1:

In a process of providing the direct current to the first dual coil, the ECU 1 may further detect a current on a connection line between the ECU 1 and the negative coil. When the current on the connection line between the ECU 1 and the negative coil is less than the threshold, it means that a fault occurs when the ECU 1 transmits an electrical signal to the negative coil. In this case, the ECU 1 may send a supplementation indication to the ECU 2. After receiving the supplementation indication, the ECU 2 may provide a supplementary electrical signal to the negative coil through a connection line between the ECU 2 and the negative coil. It can be learned that, in this example, when a fault occurs when one ECU provides an electrical signal to the negative coil, a supplementary electrical signal can be provided to the negative coil through another ECU, and an electrical signal on the first positive coil can still be provided by the original ECU. That is, it is not necessary to switch an electrical signal providing process of another coil to another ECU, so that by using a small quantity of switching operations, accurate supply of a direct current can be ensured on the basis of improving switching stability.

### Redundant control manner 2:

In a process of providing the direct current to the first dual coil, the ECU 1 may further detect a current on each of connection lines between the ECU 1 and the first positive coil and the negative coil. When a current on a connection line between the ECU 1 and either coil is less than a threshold, it means that a fault occurs in a driving process of the ECU 1. In this case, the ECU 1 may stop providing the direct current to the first dual coil and send an effective indication to the ECU 2. After receiving the effective indication, the ECU 2 may provide the direct current to the second dual coil through connection lines between the ECU 2 and the second dual coil. In this way, when a fault occurs in a driving process of one ECU, another ECU is switched to in time for driving. This can avoid continuous driving with a faulty ECU, and maintain accuracy of solenoid valve driving.

For example, a switching circuit may be further disposed on lines on which the ECU 1 is connected to the first positive coil and the negative coil and on lines on which the ECU 2 is connected to the second positive coil and the negative coil. The switching circuit may include, for example, a single-pole single-throw switch, a single-pole multi-throw switch, or a multi-pole multi-throw switch. The switching circuit may be configured to: when the ECU 1 provides the direct current to the first dual coil, connect the connection lines between the ECU 1 and the first positive coil and the negative coil, and disconnect the connection lines between the ECU 2 and the second positive coil and the negative coil, and when the ECU 2 provides the direct current to the second dual coil, connect the connection lines between the ECU 2 and the second positive coil and the negative coil, and disconnect the connection lines between the ECU 1 and the first positive coil and the negative coil. In this way, even if an ECU that does not need to provide a direct current outputs the direct current to the solenoid valve, a driving link of the ECU to the solenoid valve can be cut off by using the switching circuit, to ensure that the solenoid valve works only under the drive of another ECU. This effectively improves accuracy of redundant control.

Further, for example, when the solenoid valve is driven in the foregoing redundant driving manner 1, when determining that the current on the connection line between the ECU 1 and the negative coil is less than the threshold, the ECU 1 may send the supplementation indication to the ECU 2, and further send a first switching indication to the switching circuit. After receiving the first switching indication, the switching circuit may connect a connection line between the ECU 2 and the positive coil, so that the supplementary electrical signal provided by the ECU 2 can be successfully transmitted to the negative coil of the solenoid valve.

Further, for example, when the solenoid valve is driven in the foregoing redundant driving manner 2, and when the ECU 1 detects that the current on the connection line between the ECU 1 and the either coil in the first dual coil is less than the threshold, the ECU 1 may send the effective indication to the ECU 2, and may further send a second switching indication to the switching circuit. After receiving the second switching indication, the switching circuit may disconnect the connection lines between the ECU 1 and the first dual coil, and connect the connection lines between the ECU 2 and the second dual coil, so that the direct current provided by the ECU 2 can be successfully transmitted to the second dual coil of the solenoid valve, and the direct current that is still provided to the first dual coil due to the fault of the ECU 1 is cut off, to ensure the accuracy of solenoid valve driving.

It should be noted that, the structure shown in (B) in FIG. 13 may be further modified, to obtain another connection solution. For example, in still another connection solution, the solenoid valve may further include a first negative coil, a second negative coil, and a positive coil. The ECU 1 is connected to the positive coil and the first negative coil, and the ECU 2 is connected to the positive coil and the second negative coil, to implement redundant control while reducing a quantity of coils by using a common positive coil. For a specific redundancy implementation process, directly refer to the foregoing redundancy implementation of the common negative coil. Details are not described herein again.

In still another possible connection manner, as shown in (C) in FIG. 13, the solenoid valve includes two dual coils and an iron core wound by the two dual coils. A first dual coil includes a first positive coil and a first negative coil, and a second dual coil includes a second positive coil and a second negative coil. The solenoid valve may further include two positive pins and two negative pins. One positive pin and one negative pin are connected to the first positive coil and the first negative coil, and the other positive pin and the other negative pin are connected to the second positive coil and the second negative coil. The ECU 1 and the ECU 2 each include a positive port and a negative port. The positive port and the negative port of the ECU 1 are connected to the positive pin and the negative pin that are corresponding to the first dual coil, and the positive port and the negative port of the ECU 2 are connected to the positive pin and the negative pin that correspond to the second dual coil. When the solenoid valve is controlled, the ECU that takes effect in the ECU 1 and the ECU 2 may input a direct current to the positive pin and the negative pin that are of the solenoid valve and corresponding to the ECU through the positive port and the negative port of the ECU, and the ECU that does not take effect does not input a direct current to the other positive pin and the other negative pin that are of the solenoid valve. Specifically, when the ECU 1 is not faulty, the ECU 1 inputs the direct current to the first positive coil and the first negative coil, so that the first dual coil can generate a magnetic field under the action of the direct current output by the ECU 1, to drive the iron core wound by the first dual coil to move. Then, the solenoid valve that is a normally open valve is disconnected when being energized, or the solenoid valve that is a normally closed valve is connected when being energized. Alternatively, when the ECU 1 is faulty, the ECU 2 inputs the direct current to the second positive coil and the second negative coil, so that the second dual coil can generate a magnetic field under the action of the direct current output by the ECU 2, to drive the iron core wound by the second dual coil to move. Then, the solenoid valve that is a normally open valve is disconnected when being energized, or the solenoid valve that is a normally closed valve is connected when being energized. In this connection manner, an additional dual coil is added to the solenoid valve, so that the solenoid valve can be accurately driven by using an electrical signal of each ECU for a corresponding dual coil, to avoid interference caused by an electrical signal of one ECU to an electrical signal of another ECU.

It should be noted that, when the solenoid valve includes two dual coils, the two dual coils may be wound around an entire region of the iron core, but are wound around the iron core in different directions, so that regardless of which dual coil is energized, a magnetic field can be generated over the entire region of the iron core. Alternatively, the two dual coils may be wound around different regions of the iron core. For example, the first dual coil and the second dual coil may be respectively wound around two half-side regions of the iron core, and a size relationship between the two half-side regions is not limited, for example, the two half-side regions may be equal, or one region may be larger than the other region. Alternatively, some coils in the two dual coils are wound around the same region of the iron core, and the other coils are wound around different regions of the iron core. There are many possible implementations, which are not listed herein.

According to the connection manner shown in (C) in FIG. 13, an example in which the ECU 1 provides the direct current is used for description. When providing the direct current to the first dual coil, the ECU 1 may further detect a current on a connection line between the ECU 1 and each coil in the first dual coil. When a current on a connection line between the ECU 1 and a coil in the first dual coil is less than a threshold, it means that a fault occurs when the ECU 1 transmits an electrical signal to the first dual coil. In this case, the ECU 1 may send an effective indication to the ECU 2. After receiving the effective indication, the ECU 2 may provide the direct current to the second dual coil through connection lines between the ECU 2 and the second dual coil. It can be learned that, in this example, when the solenoid valve cannot be driven due to a fault that occurs in a process in which one ECU provides an electrical signal to a dual coil, the solenoid valve can be driven by using a direct current provided by another ECU to another dual coil, to improve timeliness of switching while implementing redundant control of the solenoid valve.

For example, a switching circuit may be further disposed on lines on which the ECU 1 is connected to the first positive coil and the first negative coil and on lines on which the ECU 2 is connected to the second positive coil and the second negative coil. The switching circuit may include, for example, a single-pole single-throw switch, a single-pole multi-throw switch, or a multi-pole multi-throw switch. The switching circuit may be configured to: when the ECU 1 provides the direct current to the first dual coil, connect the connection lines between the ECU 1 and the first positive coil and the first negative coil, and disconnect the connection lines between the ECU 2 and the second positive coil and the second negative coil, and when the ECU 2 provides the direct current to the second dual coil, connect the connection lines between the ECU 2 and the second positive coil and the second negative coil, and disconnect the connection lines between the ECU 1 and the first positive coil and the first negative coil. In this way, even if an ECU that does not need to provide a direct current outputs the direct current to the solenoid valve, a driving link of the ECU to the solenoid valve can be cut off by using the switching circuit, to ensure that the solenoid valve works only under the drive of another ECU. This effectively improves accuracy of redundant control.

Further, for example, when the ECU 1 detects that the current on the connection line between the ECU 1 and the either coil in the first dual coil is less than the threshold, the ECU 1 may send the effective indication to the ECU 2, and may further send a switching indication to the switching circuit. After receiving the switching indication, the switching circuit may disconnect the connection lines between the ECU 1 and the first positive coil and the first negative coil, and connect the connection lines between the ECU 2 and the second positive coil and the second negative coil, so that the direct current provided by the ECU 2 can be successfully transmitted to the second dual coil of the solenoid valve, and the direct current that is still provided to the first dual coil due to the fault of the ECU 1 is cut off, to ensure the accuracy of solenoid valve driving.

In Embodiment 3, the two ECUs are connected to the same brake actuator, so that redundant control of the same brake actuator can be implemented, and another brake actuator does not need to be additionally disposed in the redundancy. This helps reduce a quantity of components and save costs while implementing redundant control. According to the solution provided in this embodiment of this application, this application further provides a control method. The control method is used by two ECUs to redundantly control a same brake actuator. For a specific implementation process, refer to the ECU 1 and the ECU 2 in Embodiment 3.

According to the solutions provided in embodiments of this application, this application further provides a computer program product. The computer program product includes computer program code. When the computer program code is run on a computer, the computer is enabled to perform the foregoing control method.

According to the solutions provided in embodiments of this application, this application further provides a computer-readable storage medium. The computer-readable medium stores program code. When the program code is run on a computer, the computer is enabled to perform the foregoing control method.

According to the solutions provided in embodiments of this application, this application further provides a terminal device, including the brake system shown in Embodiment 1, or including the integrated apparatus shown in Embodiment 2, or including the connection control apparatus shown in Embodiment 3.

For example, the terminal device may be a smart home device (including but not limited to a television, a floor-sweeping robot, a smart desk lamp, a speaker system, an intelligent light system, an electric appliance control system, home background music, a home theater system, an intercom system, video surveillance, and the like), an intelligent transportation device (including but not limited to an automobile, a ship, an uncrewed aerial vehicle, a train, a van, a truck, and the like), an intelligent manufacturing device (including but not limited to a robot, an industrial device, intelligent logistics, an intelligent factory, and the like), a computer device (including but not limited to a desktop computer, a personal computer, a server, and the like), and a portable electronic device (including but not limited to a mobile phone, a tablet computer, a palmtop computer, a headset, a speaker, a wearable device (for example, a smartwatch), a vehicle-mounted device, a virtual reality device, an augmented reality device, and the like).

Terms such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As shown in the figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the Internet interacting with other systems by using the signal).

A person of ordinary skill in the art may be aware that, in combination with illustrative logical blocks (illustrative logical blocks) described in embodiments disclosed in this specification and steps (steps) may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus and method may be implemented in other manners. For example, the described apparatus embodiment is merely an example. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A brake system, comprising:
a reservoir, a master cylinder module, a brake pedal, a push rod, a first pressure control unit, a second pressure control unit, a first electronic control unit ECU, a second ECU, and a redundant ECU, wherein
the brake pedal is connected to the master cylinder module through the push rod; the reservoir, the master cylinder module, the first pressure control unit, and the second pressure control unit are sequentially connected through a brake pipe; and the second pressure control unit is further connected to a controlled wheel through a brake pipe;
the first ECU is configured to control a brake actuator in the first pressure control unit;
the second ECU is configured to control a brake actuator in the second pressure control unit;
the redundant ECU is configured to control at least one brake actuator in the first pressure control unit and/or control at least one brake actuator in the second pressure control unit; and
the first pressure control unit and the second pressure control unit are configured to independently or jointly complete a braking operation on the controlled wheel under control of at least one of the first ECU, the second ECU, and the redundant ECU.

2. The brake system according to claim 1, wherein if the redundant ECU controls the at least one brake actuator in the first pressure control unit,
when the first ECU does not fail, the first ECU is used to control the brake actuator in the first pressure control unit, or when the first ECU fails, the redundant ECU is used to control the at least one brake actuator in the first pressure control unit.

3. The brake system according to claim 2, wherein
the first pressure control unit is configured to complete a basic braking operation or an autonomous emergency braking operation on the controlled wheel under control of the first ECU or the redundant ECU;
the second pressure control unit is configured to complete an anti-lock braking operation, a traction control operation, or an electronic stability control operation on the controlled wheel under control of the second ECU; and
the first pressure control unit and the second pressure control unit are configured to complete the basic braking operation, the autonomous emergency braking operation, the anti-lock braking operation, the traction control operation, the electronic stability control operation, an adaptive cruise control operation, or an additional braking operation on the controlled wheel under control of the first ECU and the second ECU or the redundant ECU and the second ECU.

4. The brake system according to claim 1, wherein if the redundant ECU controls the at least one brake actuator in the second pressure control unit,
when the second ECU does not fail, the second ECU is used to control the brake actuator in the second pressure control unit, or when the second ECU fails, the redundant ECU is used to control the at least one brake actuator in the second pressure control unit.

5. The brake system according to claim 4, wherein if the redundant ECU controls the at least one brake actuator in the second pressure control unit,
the first pressure control unit is configured to complete a basic braking operation or an autonomous emergency braking operation on the controlled wheel under control of the first ECU;
the second pressure control unit is configured to complete an anti-lock braking operation, a traction control operation, or an electronic stability control operation on the controlled wheel under control of the second ECU or the redundant ECU; and
the first pressure control unit and the second pressure control unit are configured to complete the basic braking operation, the autonomous emergency braking operation, the anti-lock braking operation, the traction control operation, the electronic stability control operation, an adaptive cruise control operation, or an additional braking operation on the wheel under control of the first ECU and the second ECU or the first ECU and the redundant ECU.

6. The brake system according to any one of claims 1 to 5, wherein the master cylinder module is integrated into the first pressure control unit, or the master cylinder module is independent of the first pressure control unit.

7. The brake system according to any one of claims 1 to 6, wherein the brake actuator comprises a motor and/or a solenoid valve.

8. An integrated apparatus, comprising:
a first ECU, a second ECU, a first printed circuit board PCB, a second PCB, and an inter-board connector, wherein
a first-type component whose power is greater than a power threshold in the first ECU and the second ECU is disposed on the first PCB, a second-type component whose power is not greater than the power threshold in the first ECU and the second ECU is disposed on the second PCB, and a first-type component in either ECU on the first PCB is connected to a second-type component in the ECU on the second PCB through the inter-board connector.

9. The apparatus according to claim 8, further comprising a support frame, wherein the first PCB and the second PCB are fixedly connected through the support frame.

10. The apparatus according to claim 9, wherein the support frame is located at a top layer, the second PCB is located at a bottom layer, the first PCB is located between the support frame and the second PCB, an opening is disposed on the first PCB, and the support frame passes through the opening and is fixedly connected to the first PCB and the second PCB.

11. The apparatus according to claim 10, wherein the first-type component is disposed on a surface that is of the first PCB and that faces the support frame, and the second-type component is disposed on a surface that is of the second PCB and that faces the first PCB.

12. The apparatus according to any one of claims 9 to 11, further comprising a housing, wherein the support frame, the first PCB, and the second PCB are placed in the housing, and at least one end of the support frame is fastened to the housing.

13. The apparatus according to any one of claims 8 to 12, wherein a width area of the second PCB is smaller than a width area of the first PCB.

14. The apparatus according to any one of claims 8 to 13, further comprising a valve body, wherein the valve body is configured to accommodate a controlled component;
the first-type component in either ECU comprises a driver of the controlled component, and the second-type component in either ECU comprises a microcontroller; and
a microcontroller in the first ECU and a microcontroller in the second ECU are connected through a cable on the second PCB.

15. The apparatus according to claim 14, wherein the controlled component comprises a motor, a solenoid valve, and a sensor; and
the first-type component in either ECU comprises a driver of the motor and a driver of the solenoid valve, and the second-type component in either ECU comprises the microcontroller and an interface of the sensor.

16. An integrated apparatus, comprising:
a first ECU, a second ECU, a first PCB, a second PCB, and a support frame, wherein the first PCB and the second PCB are fixedly connected through the support frame, wherein
a component in the first ECU is disposed on the first PCB, and a component in the second ECU is disposed on the second PCB.

17. The apparatus according to claim 16, further comprising an inter-board connector, wherein
a component in either ECU comprises a microcontroller; and
a microcontroller in the first ECU is connected to a microcontroller in the second ECU through the inter-board connector.

18. The apparatus according to claim 17, further comprising a valve body, wherein the valve body is configured to accommodate a controlled component;
the component in either ECU further comprises a driver of the controlled component;
the microcontroller in the first ECU is connected to a driver of a controlled component in the first ECU through a cable on the first PCB; and
the microcontroller in the second ECU is connected to a driver of a controlled component in the second ECU through a cable on the second PCB.

19. The apparatus according to claim 17 or 18, wherein the controlled component comprises a motor, a solenoid valve, and a sensor; and
the component in either ECU further comprises a driver of the motor, a driver of the solenoid valve, and an interface of the sensor.

20. The apparatus according to any one of claims 16 to 19, further comprising a housing, wherein the support frame, the first PCB, and the second PCB are placed in the housing, and at least one end of the support frame is fastened to the housing.

21. The apparatus according to any one of claims 16 to 20, wherein the support frame is located at a top layer, the second PCB is located at a bottom layer, the first PCB is located between the support frame and the second PCB, an opening is disposed on the first PCB, and the support frame passes through the opening and is fixedly connected to the first PCB and the second PCB.

22. The apparatus according to claim 21, wherein the component in the first ECU is disposed on a surface that is of the first PCB and that faces the support frame, and the component in the second ECU is disposed on a surface that is of the second PCB and that faces the first PCB.

23. An integrated apparatus, comprising:
a first electronic control unit ECU, a second ECU, and a printed circuit board PCB, wherein
a component in the first ECU and a component in the second ECU are integrated on the PCB.

24. The apparatus according to claim 23, wherein a component in either ECU comprises a microcontroller, and a microcontroller in the first ECU is connected to a microcontroller in the second ECU through a cable on the PCB.

25. The apparatus according to claim 24, further comprising a valve body, wherein the valve body is configured to accommodate a controlled component; and
the component in either ECU further comprises a driver of the controlled component, and the microcontroller in the ECU is connected to the driver of the controlled component in the ECU through a cable on the PCB.

26. The apparatus according to claim 24 or 25, wherein the controlled component comprises a motor, a solenoid valve, and a sensor; and
the component in either ECU further comprises a driver of the motor, a driver of the solenoid valve, and an interface of the sensor.

27. The apparatus according to any one of claims 23 to 26, further comprising a support frame and a housing, wherein the support frame and the PCB are placed in the housing, and at least one end of the support frame is fastened to the housing.

28. The apparatus according to claim 27, wherein the support frame is located at a top layer, and the PCB is located at a bottom layer and is close to the bottom of the housing.

29. The apparatus according to claim 28, wherein the component in the first ECU and the component in the second ECU are disposed on a surface that is of the PCB and that faces the support frame.

30. A connection control apparatus, comprising:
a first electronic control unit ECU, a second ECU, and a brake actuator, wherein the first ECU and the second ECU are separately connected to the brake actuator, and
the first ECU and the second ECU are configured to independently or jointly drive the brake actuator.

31. The apparatus according to claim 30, wherein the brake actuator comprises a motor, the motor comprises a three-phase winding, and the first ECU and the second ECU are separately connected to the three-phase winding through lines;
the first ECU is an ECU that takes effect by default; and
when the first ECU is not faulty, the first ECU is used to provide a three-phase alternating current to the three-phase winding; or
when the first ECU is faulty, the second ECU is used to provide a three-phase alternating current to the three-phase winding.

32. The apparatus according to claim 31, wherein
the first ECU is configured to: in a process of providing the three-phase alternating current to the three-phase winding, detect a current on a connection line between the first ECU and each phase winding in the three-phase winding, and when a current on a connection line between the first ECU and a first phase winding in the three-phase winding is less than a threshold, send a supplementation indication to the second ECU, wherein the first phase winding is any phase winding in the three-phase winding; and
the second ECU is configured to provide a supplementary electrical signal to the first phase winding based on the supplementation indication through a connection line between the second ECU and the first phase winding.

33. The apparatus according to claim 32, further comprising a switching circuit, wherein the switching circuit is disposed on connection lines between the first ECU and the three-phase winding and connection lines between the second ECU and the three-phase winding;
the first ECU is further configured to send a first switching indication to the switching circuit when the current on the connection line between the first ECU and the first phase winding is less than the threshold; and
the switching circuit is configured to: based on the first switching indication, disconnect the connection line between the first ECU and the first phase winding, and connect the connection line between the second ECU and the first phase winding.

34. The apparatus according to claim 31, wherein
the first ECU is configured to: in a process of providing the three-phase alternating current to the three-phase winding, detect a current on a connection line between the first ECU and each phase winding in the three-phase winding, and when a current on a connection line between the first ECU and any phase winding in the three-phase winding is less than a threshold, send an effective indication to the second ECU and stop providing the three-phase alternating current to the three-phase winding; and
the second ECU is configured to provide the three-phase alternating current to the three-phase winding based on the effective indication through connection lines between the second ECU and the three-phase winding.

35. The apparatus according to claim 34, further comprising a switching circuit, wherein the switching circuit is disposed on connection lines between the first ECU and the three-phase winding and the connection lines between the second ECU and the three-phase winding;
the first ECU is further configured to send a second switching indication to the second ECU when the current on the connection line between the first ECU and the any phase winding is less than the threshold; and
the switching circuit is configured to: based on the second switching indication, disconnect the connection lines between the first ECU and the three-phase winding, and connect the connection lines between the second ECU and the three-phase winding.

36. The apparatus according to claim 30, wherein the brake actuator comprises a motor, the motor comprises a first three-phase winding and a second three-phase winding, the first ECU is connected to the first three-phase winding through lines, and the second ECU is connected to the second three-phase winding through lines;
the first ECU is an ECU that takes effect by default; and
when the first ECU is not faulty, the first ECU is used to provide a three-phase alternating current to the first three-phase winding; or
when the first ECU is faulty, the second ECU is used to provide a three-phase alternating current to the second three-phase winding.

37. The apparatus according to claim 36, wherein
the first ECU is configured to: in a process of providing the three-phase alternating current to the first three-phase winding, detect a current on a connection line between the first ECU and each phase winding in the first three-phase winding, and when a current on a connection line between the first ECU and any phase winding is less than a threshold, send an effective indication to the second ECU and stop providing the three-phase alternating current to the first three-phase winding; and
the second ECU is configured to provide the three-phase alternating current to the second three-phase winding based on the effective indication through the connection lines between the second ECU and the second three-phase winding.

38. The apparatus according to claim 36 or 37, further comprising a switching circuit, wherein the switching circuit is disposed on the connection lines between the first ECU and the first three-phase winding and the connection lines between the second ECU and the second three-phase winding;
the first ECU is further configured to send a switching indication to the switching circuit when the current on the connection line between the first ECU and the any phase winding is less than the threshold; and
the switching circuit is configured to: based on the switching indication, disconnect the connection lines between the first ECU and the first three-phase winding, and connect the connection lines between the second ECU and the second three-phase winding.

39. The apparatus according to claim 30, wherein the brake actuator comprises a solenoid valve, the solenoid valve comprises a dual coil, and the first ECU and the second ECU are separately connected to the dual coil through lines;
the first ECU is an ECU that takes effect by default; and
when the first ECU is not faulty, the first ECU is used to provide a direct current to the dual coil; or
when the first ECU is faulty, the second ECU is used to provide a direct current to the dual coil.

40. The apparatus according to claim 39, wherein
the first ECU is configured to: in a process of providing the direct current to the dual coil, detect a current on a connection line between the first ECU and each coil in the dual coil, and when a current on a connection line between the first ECU and a first coil in the dual coil is less than a threshold, send a supplementation indication to the second ECU, wherein the first coil is either coil in the dual coil; and
the second ECU is configured to provide a supplementary electrical signal to the first coil based on the supplementation indication through a connection line between the second ECU and the first coil.

41. The apparatus according to claim 40, further comprising a switching circuit, wherein the switching circuit is disposed on connection lines between the first ECU and the dual coil and connection lines between the second ECU and the dual coil;
the first ECU is further configured to send a first switching indication to the switching circuit when the current on the connection line between the first ECU and the first coil is less than the threshold; and
the switching circuit is configured to: based on the first switching indication, disconnect the connection line between the first ECU and the first coil, and connect the connection line between the second ECU and the first coil.

42. The apparatus according to claim 39, wherein
the first ECU is configured to: in a process of providing the direct current to the dual coil, detect a current on a connection line between the first ECU and each coil in the dual coil, and when a current on a connection line between the first ECU and either coil is less than a threshold, send an effective indication to the second ECU and stop providing the direct current to the dual coil; and
the second ECU is configured to provide the direct current to the dual coil based on the effective indication through connection lines between the second ECU and the dual coil.

43. The apparatus according to claim 42, further comprising a switching circuit, wherein the switching circuit is disposed on connection lines between the first ECU and the dual coil and the connection lines between the second ECU and the dual coil;
the first ECU is further configured to send a second switching indication to the switching circuit when the current on the connection line between the first ECU and the either coil is less than the threshold; and
the switching circuit is configured to: based on the second switching indication, connect the connection lines between the second ECU and the dual coil, and disconnect the connection lines between the first ECU and the dual coil.

44. The apparatus according to claim 30, wherein the brake actuator comprises a solenoid valve, the solenoid valve comprises a first positive coil, a second positive coil, and a negative coil, the first ECU is connected to the first positive coil and the negative coil through lines, and the second ECU is connected to the second positive coil and the negative coil through lines;
the first ECU is an ECU that takes effect by default; and
when the first ECU is not faulty, the first ECU is used to provide a direct current to the first positive coil and the negative coil; or
when the first ECU is faulty, the second ECU is used to provide a direct current to the second positive coil and the negative coil.

45. The apparatus according to claim 44, wherein
the first ECU is configured to: in a process of providing the direct current to the first positive coil and the negative coil, detect a current on a connection line between the first ECU and the negative coil, and when the current on the connection line between the first ECU and the negative coil is less than a threshold, send a supplementation indication to the second ECU; and
the second ECU is configured to provide an electrical signal to the negative coil based on the supplementation indication through a connection line between the second ECU and the negative coil.

46. The apparatus according to claim 45, further comprising a switching circuit, wherein the switching circuit is disposed on a connection line between the first ECU and the first positive coil, the connection line between the first ECU and the negative coil, a connection line between the second ECU and the second positive coil, and the connection line between the second ECU and the negative coil;
the first ECU is further configured to send a first switching indication to the switching circuit when a current on the connection line between the first ECU and the first positive coil is less than a threshold; and
the switching circuit is configured to: based on the first switching indication, disconnect the connection line between the first ECU and the first positive coil, and connect the connection line between the second ECU and the second positive coil.

47. The apparatus according to claim 44, wherein
the first ECU is configured to: in a process of providing the direct current to the first positive coil and the negative coil, detect a current on a connection line between the first ECU and each of the first positive coil and the negative coil, and when a current on a connection line between the first ECU and either coil is less than a threshold, send an effective indication to the second ECU and stop providing the direct current to the first positive coil and the negative coil; and
the second ECU is configured to provide the direct current to the second positive coil and the negative coil based on the effective indication through connection lines between the second ECU and the second positive coil and the negative coil.

48. The apparatus according to claim 47, further comprising a switching circuit, wherein the switching circuit is disposed on a connection line between the first ECU and the first positive coil, a connection line between the first ECU and the negative coil, a connection line between the second ECU and the second positive coil, and a connection line between the second ECU and the negative coil;
the first ECU is further configured to send a second switching indication to the switching circuit when the current on the connection line between the first ECU and the either coil is less than the threshold; and
the switching circuit is configured to: based on the second switching indication, connect the connection line between the second ECU and the second positive coil and the connection line between the second ECU and the negative coil, and disconnect the connection line between the first ECU and the first positive coil and the connection line between the first ECU and the negative coil.

49. The apparatus according to claim 30, wherein the brake actuator comprises a solenoid valve, the solenoid valve comprises a first dual coil and a second dual coil, the first ECU is connected to the first dual coil through lines, and the second ECU is connected to the second dual coil through lines;
the first ECU is an ECU that takes effect by default; and
when the first ECU is not faulty, the first ECU is used to provide a direct current to the first dual coil; or
when the first ECU is faulty, the second ECU is used to provide a direct current to the second dual coil.

50. The apparatus according to claim 49, wherein
the first ECU is configured to: in a process of providing the direct current to the first dual coil, detect a current on a connection line between the first ECU and each coil in the first dual coil, and when a current on a connection line between the first ECU and either coil is less than a threshold, send an effective indication to the second ECU and stop providing the direct current to the first dual coil; and
the second ECU is configured to provide the direct current to the second dual coil based on the effective indication through the connection lines between the second ECU and the second dual coil.

51. The apparatus according to claim 50, further comprising a switching circuit, wherein the switching circuit is disposed on the connection lines between the first ECU and the first dual coil and the connection lines between the second ECU and the second dual coil;
the first ECU is further configured to send a switching indication to the switching circuit when the current on the connection line between the first ECU and the either coil is less than the threshold; and
the switching circuit is configured to: based on the switching indication, connect the connection lines between the second ECU and the second dual coil, and disconnect the connection lines between the first ECU and the first dual coil.

52. A terminal device, comprising the brake system according to any one of claims 1 to 7, or comprising the integrated apparatus according to any one of claims 8 to 15, any one of claims 16 to 22, or any one of claims 23 to 29, or comprising the connection control apparatus according to any one of claims 30 to 51.
